# EUROPEAN PATENT APPLICATION

(11) **EP 4 631 993 A1**
(43) Date of publication of application: **15.10.2025**
(21) Application number: 23900566.3
(22) Date of filing: 01.12.2023
(51) Int. Cl.: C08G 65/336, C09K 3/18

(54) **FLUOROPOLYETHER GROUP-CONTAINING POLYMER, SURFACE TREATMENT AGENT, AND ARTICLE**

(30) Priority: 09.12.2022 JP 2022196724
(71) Applicant: SHIN-ETSU CHEMICAL CO., LTD., Tokyo 1000005 (JP)
(72) Inventor: SHIMADA, Takanori, Annaka-shi, Gunma 379-0224 (JP); MORI, Seiya, Annaka-shi, Gunma 379-0224 (JP); SAKOH, Ryusuke, Annaka-shi, Gunma 379-0224 (JP); UCHIDA, Takashi, Annaka-shi, Gunma 379-0224 (JP); YOSHII, Noriyuki, Tokyo 100-0005 (JP)
(74) Representative: Mewburn Ellis LLP
(86) International application number: PCT/JP2023/043068
(87) International publication number: WO 2024/122451

(57) **Abstract**

A fluoropolyether group-containing polymer represented by general formula (1) can form a cured film that has excellent solubility in at least one non-fluorine organic solvent and has excellent water and oil repellency and wear resistance.

Rf[Q-CH(V)₂]_{α}, (1)

(In the formula, Rf is a polymer residue containing a monovalent or divalent fluoropolyether group, Q is a single bond or a divalent organic group, V is a monovalent group independently having a polyvalent polysiloxane structure and a hydroxyl group and/or a hydrolyzable silyl group bonded to a silicon atom at the end, and α is 1 or 2.)

## Description

### TECHNICAL FIELD

This invention relates to a fluoropolyether-containing polymer (a compound having a monovalent or divalent fluoropolyether-containing polymer residue in the molecule), and more particularly, to a fluoropolyether-containing polymer capable of forming a cured film having improved water/oil repellency and abrasion resistance, a surface treating agent comprising the polymer and/or its partial (hydrolytic) condensate, and an article having a surface treated with the surface treating agent.

### BACKGROUND ART

Generally, fluoropolyether-containing compounds exhibit, by virtue of their extremely low surface free energy, water/oil repellency, chemical resistance, lubricity, parting, anti-fouling and other properties. Taking advantage of these properties, they find use in a variety of industrial fields as water/oil repellent antifouling agents for paper and textiles, lubricants for magnetic recording media, oil-repellent agents for precision instruments, parting agents, cosmetic ingredients, protective films and the like. Inversely, the same properties indicate non-tackiness or non-adhesion to other substrates. Even if they can be coated to the substrate surface, it is difficult for the coating to tightly adhere thereto.

On the other hand, silane coupling agents are well known for their ability to bond surfaces of glass or fabric substrates to organic compounds. They are widely used as surface coating agents for numerous substrates. The silane coupling agent contains an organic functional group and a reactive silyl group (typically alkoxysilyl group) in one molecule. In the presence of airborne moisture or the like, the alkoxysilyl groups undergo self-condensation reaction to form a coating. The alkoxysilyl groups form chemical and physical bonds with the surface of glass or metal, whereby the coating becomes a tough coating having durability.

Patent Document 1 (JP-A 2003-238577) describes a fluoropolyether-containing polymer modified silane having a linear fluoropolyether group as a compound having a fluoropolyether group and an alkoxysilyl group. It is possible to impart excellent slipperiness, parting, and abrasion resistance to a glass surface by treating the glass surface with a cured product of a surface treating agent containing the fluoropolyether-containing polymer modified silane.

On the other hand, since the fluoropolyether-containing compound described in Patent Document 1 has low solubility in a non-fluorine organic solvent when used as a surface treating agent, the fluoropolyether-containing compound is diluted using a fluorine-containing organic solvent. However, in recent years, fluorine-containing organic solvents tend to be avoided from being used because environmental concerns and health concerns for workers require a dedicated exclusion facility different from a general organic solvent in order to handle safely, and development of a water/oil repellent treatment agent (surface treating agent) capable of imparting excellent characteristics to the surface of a cured product without using a fluorine-containing organic solvent is required.

### PRIOR ART DOCUMENT

### PATENT DOCUMENT

Patent Document 1: JP-A 2003-238577

### SUMMARY OF INVENTION

### TECHNICAL PROBLEM

An object of the invention, which has been made under the above-mentioned circumstances, is to provide a fluoropolyether-containing polymer that has improved solubility in at least one non-fluorine organic solvent and is capable of forming a cured film having improved water/oil repellency and abrasion resistance, a surface treating agent comprising the polymer and/or its partial (hydrolytic) condensate, and an article having a surface treated with the surface treating agent.

### SOLUTION TO PROBLEM

Making extensive investigations to attain the above object, the inventors have found that among the foregoing fluoropolyether-containing polymers, a fluoropolyether-containing polymer having a polyvalent polysiloxane structure (a tri or higher-valent polysiloxane structure) and a hydroxyl group and/or a hydrolyzable silyl group bonded to a silicon atom, having the general formula (1), shown below, especially a fluoropolyether-containing polymer having a polyvalent polysiloxane structure (a tri or higher-valent polysiloxane structure) and a hydroxyl group and/or a hydrolyzable silyl group bonded to a silicon atom, having the general formula (2), shown below, has improved solubility in at least one non-fluorine organic solvent, and a surface treating agent comprising the polymer and/or its partial (hydrolytic) condensate can form a cured film having improved water/oil repellency and abrasion resistance. The invention is predicated on this finding.

Therefore, the present invention provides the following fluoropolyether-containing polymer.
[1] A fluoropolyether-containing polymer having the following general formula (1):

   Rf[Q-CH(V)₂]_{α} (1)

   wherein Rf is a monovalent or divalent fluoropolyether-containing polymer residue, Q is a single bond or a divalent organic group, V is independently a monovalent group having a polyvalent polysiloxane structure and a hydroxyl group and/or a hydrolyzable silyl group bonded to a silicon atom at an end, and α is 1 or 2.
[2] The fluoropolyether-containing polymer of [1] having the following general formula (2): 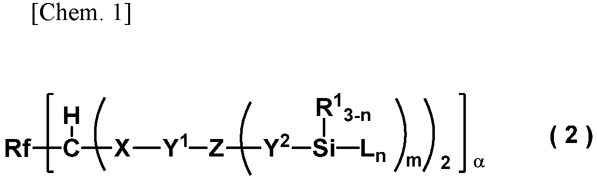 wherein Rf is a monovalent or divalent fluoropolyether-containing polymer residue, X is independently a single bond or a divalent heteroatom, Y¹ is independently a C₁-C₂₀ divalent hydrocarbon group which may contain one or more selected from an oxygen atom, a nitrogen atom, a silicon atom, and a sulfur atom, Z is independently a (m+1)-valent linking group having a polyvalent polysiloxane structure, Y² is independently a C₁-C₂₀ divalent hydrocarbon group which may contain one or more selected from an oxygen atom, a nitrogen atom, a silicon atom, and a sulfur atom, R¹ is independently a C₁-C₄ alkyl group or a phenyl group, L is independently a hydroxyl group or a hydrolyzable group, n is independently an integer of 1 to 3 for each silicon atom bonded, m is independently an integer of 2 to 9, and α is 1 or 2.
[3] The fluoropolyether-containing polymer of [1] or [2] wherein α in the formula (1) or (2) is 1, and Rf is a monovalent fluoropolyether group having the following general formula (3): 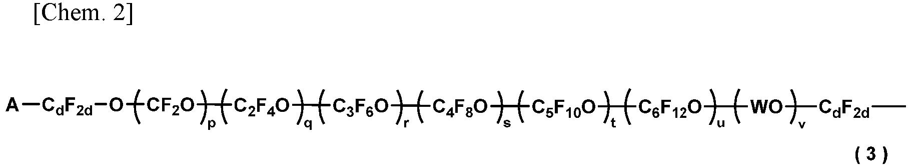 wherein A is a hydrogen atom, a fluorine atom, or an unsubstituted or fluorine-substituted C₁-C₂₀ monovalent hydrocarbon group, W is a C₁-C₆ fluoroalkylene group containing at least one hydrogen atom, d is independently an integer of 1 to 3 for each unit, p, q, r, s, t, u, and v each are an integer of 0 to 200, the sum of p, q, r, s, t, u, and v is 3 to 200, each of these units may be linear or branched, and individual repeat units shown in parentheses with p, q, r, s, t, u, and v may be randomly bonded.
[4] The fluoropolyether-containing polymer of [1] or [2] wherein α in the formula (1) or (2) is 2, and Rf is a divalent fluoropolyether group having the following general formula (4): 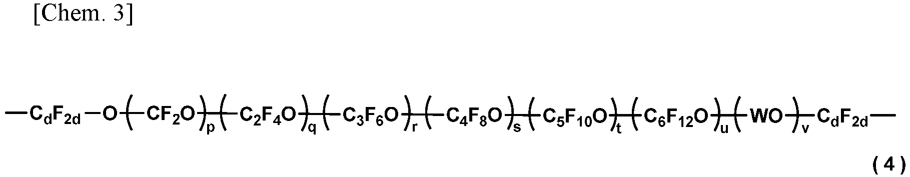 wherein W is a C₁-C₆ fluoroalkylene group containing at least one hydrogen atom, d is independently an integer of 1 to 3 for each unit, p, q, r, s, t, u, and v each are an integer of 0 to 200, the sum of p, q, r, s, t, u, and v is 3 to 200, each of these units may be linear or branched, and individual repeat units shown in parentheses with p, q, r, s, t, u, and v may be randomly bonded.
[5] The fluoropolyether-containing polymer of any one of [2] to [4] wherein in the formula (2), two X's are present at one end of the molecular chain when α = 1, and two X's are present at each of both ends of the molecular chain (four X's in the molecule) when α = 2; one X is an oxygen atom, and the other X is a single bond at each end.
[6] The fluoropolyether-containing polymer of any one of [2] to [5] wherein in the formula (2), Y¹ is independently a C₂-C₁₀ alkylene group, or a C₂-C₁₀ alkylene group containing a C₆-C₈ arylene group.
[7] The fluoropolyether-containing polymer of any one of [2] to [6] wherein in the formula (2), Z is a linear, branched or cyclic tri to deca-valent organopolysiloxane residue of 3 to 10 silicon atoms.
[8] The fluoropolyether-containing polymer of any one of [2] to [7] wherein in the formula (2), Z has any one of the following formulae: 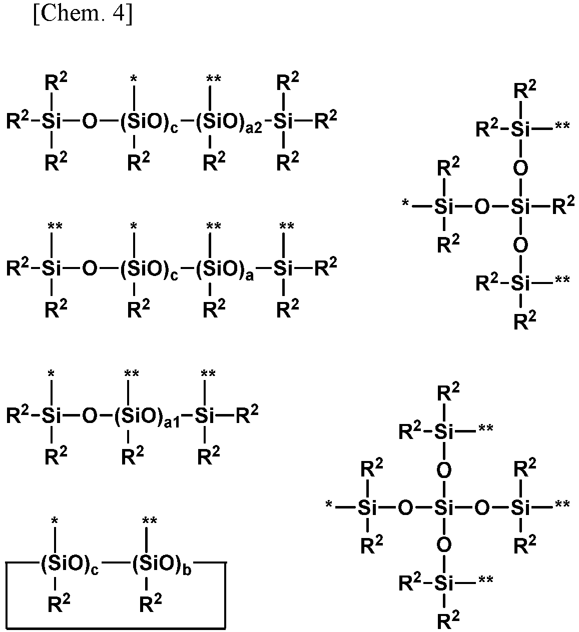 wherein * is a bond bonded to Y¹ in the general formula (2), ** is a bond bonded to Y² in the general formula (2), R² is independently a C₁-C₂₀ monovalent hydrocarbon group, a is an integer of 0 to 6, a1 is an integer of 1 to 6, a2 is an integer of 2 to 7, b is an integer of 2 to 9, c is 1, and individual repeat units shown in parentheses with a, a2, and c may be randomly bonded.
[9] The fluoropolyether-containing polymer of any one of [2] to [8] wherein in the formula (2), Y² is independently a C₂-C₁₀ alkylene group, or a C₂-C₁₀ alkylene group containing a C₆-C₈ arylene group.
[10] The fluoropolyether-containing polymer of any one of [2] to [9] wherein in formula (2), L is independently a group selected from the group consisting of a hydroxyl group, a C₁-C₁₀ alkoxy group, a C₂-C₁₀ alkoxyalkoxy group, a C₁-C₁₀ acyloxy group, a C₂-C₁₀ alkenyloxy group, and a halogen group.
[11] The fluoropolyether-containing polymer of any one of [2] to [10] wherein the polymer having formula (2) is a polymer having the following general formula (5) or (6): 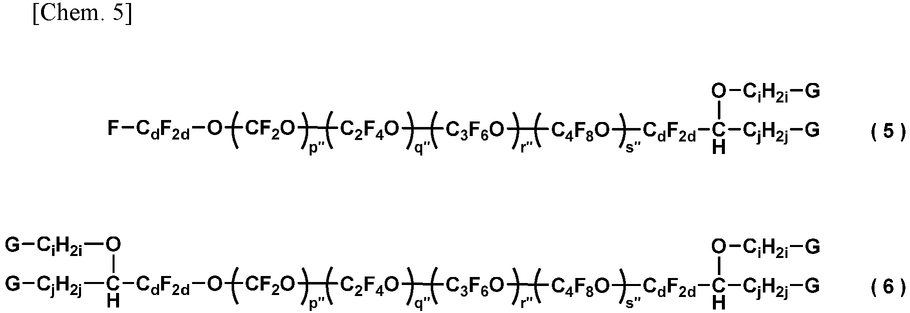 wherein d is independently an integer of 1 to 3 for each unit, p", q", r", and s" are each an integer of 0 to 200, the sum of p", q", r", and s" in each formula is 3 to 200, individual repeat units shown in parentheses with p", q", r", and s" may be randomly bonded, i and j are each independently an integer of 2 to 10 for each unit, each of these units may be linear or branched, and G independently has any one of the following formulae: 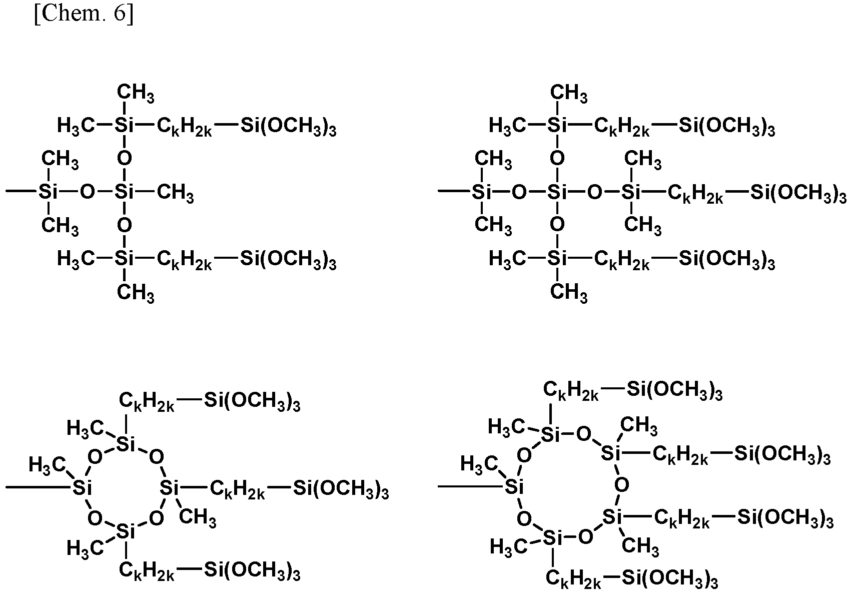 wherein k is independently an integer of 2 to 8 for each unit.
[12] A surface treating agent comprising the fluoropolyether-containing polymer of any one of [1] to [11] and/or its partial (hydrolytic) condensate.
[13] The surface treating agent of [12], comprising a fluorine-free organic solvent.
[14] The surface treating agent of [12] or [13] wherein the content of the fluoropolyether-containing polymer and/or its partial (hydrolytic) condensate is 0.005 to 80 wt%.
[15] The surface treating agent of any one of [12] to [14] wherein the content of the fluoropolyether-containing polymer and/or its partial (hydrolytic) condensate is 0.005 to 80 wt%, and the balance is a fluorine-free organic solvent.
[16] An article having a surface treated with the surface treating agent of any one of [12] to [15].

### ADVANTAGEOUS EFFECTS OF INVENTION

The novel fluoropolyether-containing polymer of the present invention has improved solubility in at least one non-fluorine organic solvent, and can impart excellent water/oil repellency and abrasion resistance to various articles by being treated with a surface treating agent comprising the polymer and/or its partial (hydrolytic) condensate.

### DESCRIPTION OF EMBODIMENTS

As used herein, the term "about (a value)" is a numerical value (approximate value) obtained by counting fractions over 1/2 as one and disregarding the rest, and when the lowest digit of the numerical value described is not "0", includes a numerical value range in which the numerical value described is reached by counting fractions of the digit below the lowest digit over 1/2 as one and disregarding the rest. For example, "about 3 equivalents" implies a range from 2.5 equivalents to 3.4 equivalents, and "about 0.02 equivalent" implies a range from 0.015 equivalent to 0.024 equivalent. When the lowest digit of the numerical value described is "0", the term "about (a value)" includes a numerical value range in which the numerical value described is reached by counting fractions of the lowest digit over 1/2 as one and disregarding the rest. For example, "about 80°C" implies a range from 75°C to 84°C.

### [Fluoropolyether-containing polymer]

The fluoropolyether-containing polymer of the present invention has a fluoropolyether group and a reactive functional group in the molecule, represented by the following general formula (1). The fluoropolyether-containing polymer of the present invention may be used alone or in admixture of two or more.

Rf[Q-CH(V)₂]_{α} (1)

wherein Rf is a monovalent or divalent fluoropolyether-containing polymer residue, Q is a single bond or a divalent organic group, V is independently a monovalent group having a polyvalent polysiloxane structure and a hydroxyl group and/or a hydrolyzable silyl group bonded to a silicon atom at an end, and α is 1 or 2.

In the above formula (1), Rf is a monovalent or divalent fluoropolyether-containing polymer residue, which is preferably a monovalent fluoropolyether group represented by the following general formula (3) when α is 1 (i.e., Rf is a monovalent fluoropolyether-containing polymer residue), or a divalent fluoropolyether group represented by the following general formula (4) when α is 2 (i.e., Rf is a divalent fluoropolyether-containing polymer residue). 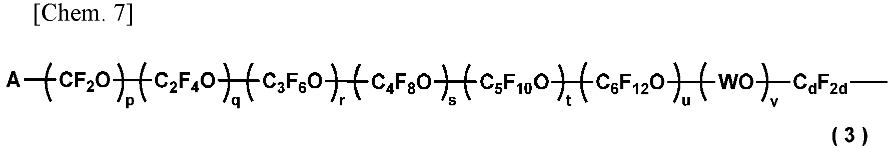 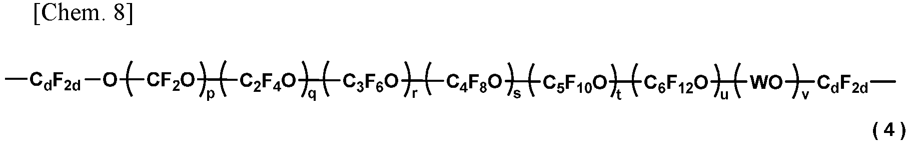 wherein A is a hydrogen atom, a fluorine atom, or an unsubstituted or fluorine-substituted C₁-C₂₀ monovalent hydrocarbon group, W is independently a C₁-C₆ fluoroalkylene group containing at least one hydrogen atom, d is independently an integer of 1 to 3 for each unit, p, q, r, s, t, u, and v each are an integer of 0 to 200, the sum of p, q, r, s, t, u, and v is 3 to 200, each of these units may be linear or branched, and individual repeat units shown in parentheses with p, q, r, s, t, u, and v may be randomly bonded.

In the above formula (3), A is a hydrogen atom, a fluorine atom, or an unsubstituted or fluorine-substituted C₁-C₂₀ monovalent hydrocarbon group, and is preferably a hydrogen atom, a fluorine atom, or a C₁-C₆ fluoroalkylene group, and still more preferably a fluorine atom or a C₁-C₆ perfluoroalkyl group.

In the above formula (3), when A is a fluorine atom or a C₁-C₆ perfluoroalkyl group, the fluoropolyether group has high molecular mobility even after the cured film is formed, so that a cured film particularly excellent in liquid repellency, anti-fouling property, and abrasion resistance can be obtained.

In the above formulae (3) and (4), W is a C₁-C₆ fluoroalkylene group containing at least one hydrogen atom, examples of which include perfluoroalkylene groups such as CF₂, C₂F₄, C₃F₆, C₄F₈, C₅F₁₀ and C₆F₁₂ units in which one or two fluorine atoms are substituted by hydrogen atoms.

In the above formulae (3) and (4), d is independently for each unit an integer of 1 to 3, preferably 1 or 2.

Also, p, q, r, s, t, u, and v are each an integer of 0 to 200, preferably p is an integer of 0 to 100, q is an integer of 0 to 100, r is an integer of 0 to 100, s is an integer of 0 to 100, t is an integer of 0 to 100, u is an integer of 0 to 100, v is an integer of 0 to 100, and the sum of p, q, r, s, t, u, and v is 3 to 200, preferably 10 to 100. When the sum of p, q, r, s, t, u, and v is not more than the upper limit, adhesion and curability of a resulting cured film are satisfactory, and when the same is not less than the lower limit, the characteristics of fluoropolyether group can be fully developed, which is preferable.

When r, s, t, u, and v are all 0, it is preferable that p and q are each an integer of 5 to 100, and the sum of p and q is 10 to 105, and particularly 15 to 60.

In the above formulae (3) and (4), each unit may be linear or branched. Also, individual repeat units shown in parentheses with p, q, r, s, t, u, and v may be randomly bonded.

Specific examples of Rf include those shown below. 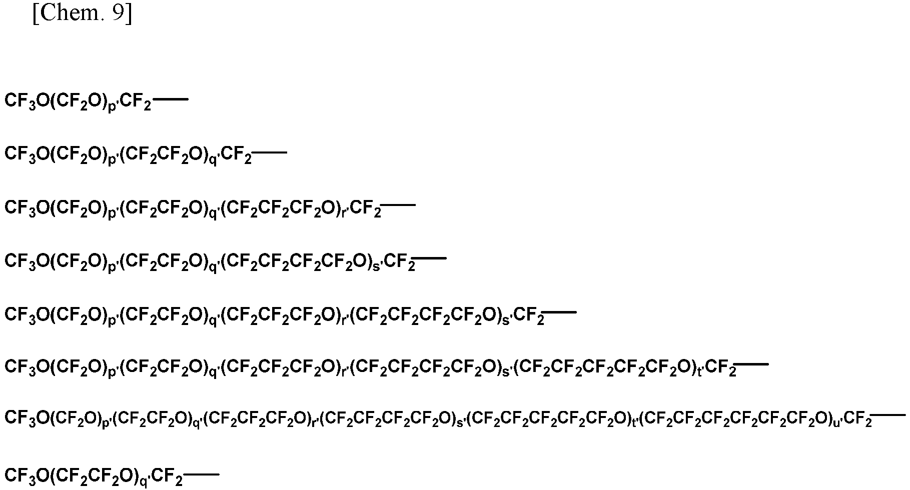 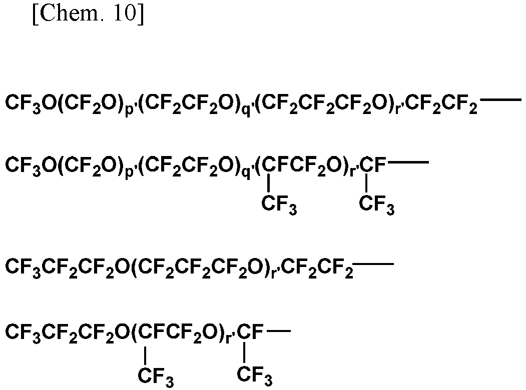 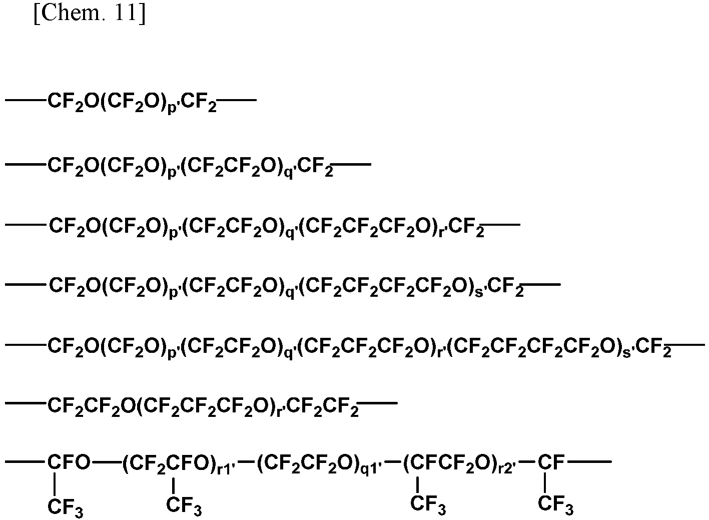 wherein p', q', r', s', t', u', q1', r1', and r2' are each an integer of 1 or more, and the sum of p', q', r', s', t', u', q1', r1', and r2' in each formula is 3 to 200, and individual repeat units shown in parentheses with p', q', r', s', t', and u' may be randomly bonded.

Rf is preferably one described below. 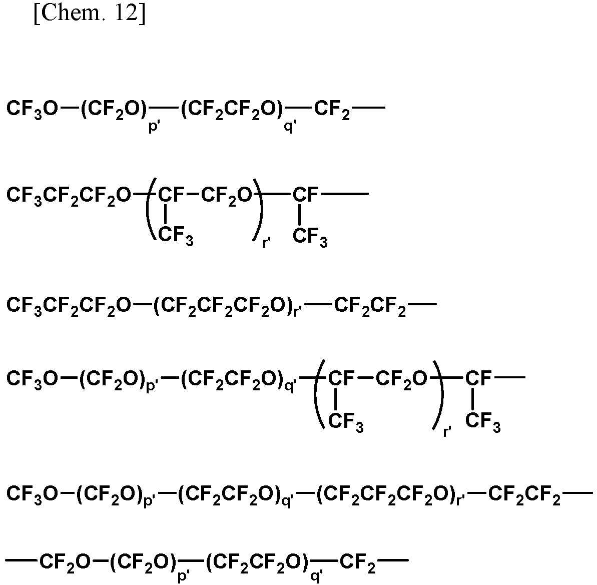 wherein p', q', r' and the sum thereof in each formula are the same as described above, and individual repeat units shown in parentheses with p', q', and r' may be randomly bonded.

A molecular weight of Rf is not particularly limited as long as a numerical average molecular weight of a corresponding structural part is contained in the range of 400 to 40,000, preferably 2,000 to 25,000, and a molecular weight distribution (or distribution of degree of polymerization) thereof is not particularly limited. In the present invention, the molecular weight (or the degree of polymerization or the number of repeat units) can be determined as a numerical average molecular weight (or number average degree of polymerization) in terms of polystyrene by gel permeation chromatography (GPC) analysis using a fluorochemical solvent as a developing solvent, and is preferably a numerical average molecular weight (or number average degree of polymerization) calculated from a characteristic peak intensity ratio between a terminal structure and a main chain structure of a fluoropolyether-containing polymer based on ¹H-NMR analysis and ¹⁹F-NMR analysis (the same applies hereinafter).

In the above formula (1), Q is a single bond or a divalent organic group, preferably a single bond or a C₁-C₂₀ divalent hydrocarbon group which may contain one or more selected from an oxygen atom, a nitrogen atom, and a silicon atom, and still more preferably a single bond. Examples of the C₁-C₂₀ divalent hydrocarbon group which may contain one or more selected from an oxygen atom, a nitrogen atom, and a silicon atom include those shown below. 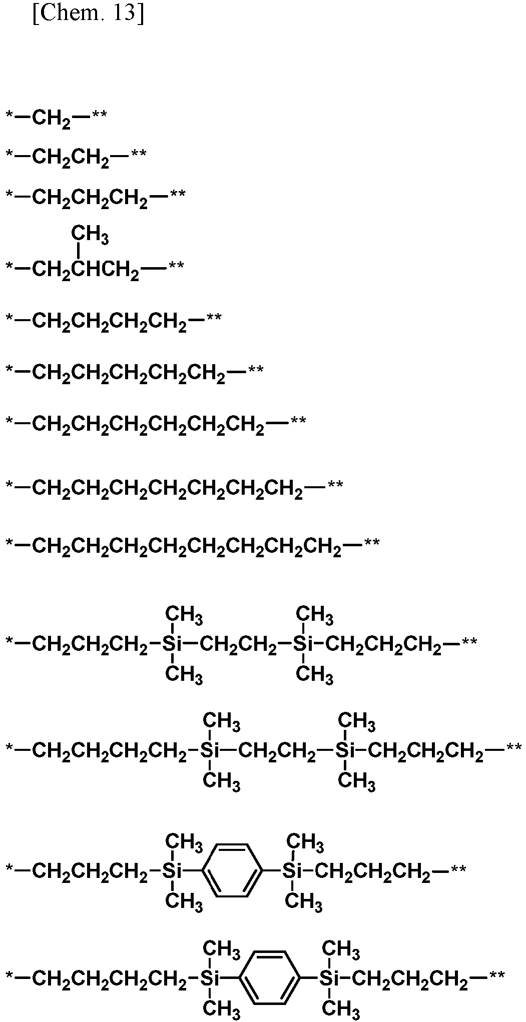 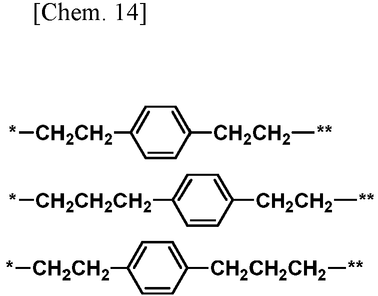 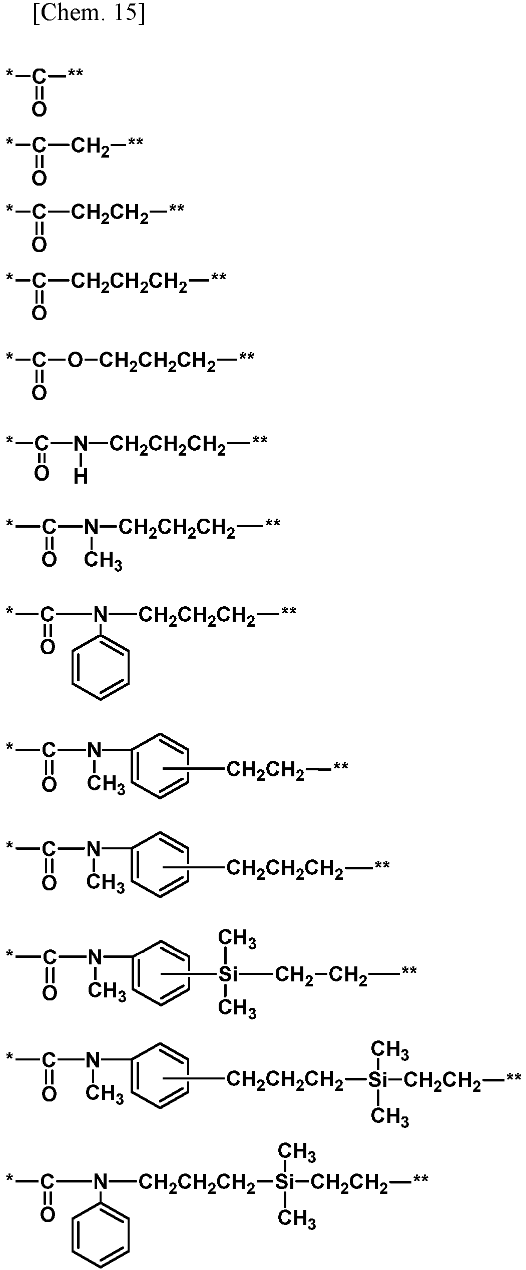 wherein * is a bond bonded to Rf in the above formula (1), and ** is a bond bonded to a carbon atom in the above formula (1).

**In** the above formula (1), V is independently a monovalent group having a polyvalent polysiloxane structure and a hydroxyl group bonded to a silicon atom at an end (that is, a hydroxysilyl group, a silanol group, or a hydroxyl-containing silyl group) and/or a hydrolyzable silyl group bonded to a silicon atom at an end, preferably a monovalent group including a linking group having a hydroxyl group and/or a hydrolyzable silyl group bonded to a silicon atom at an end and having a polyvalent polysiloxane structure linking these end groups and a CH group (that is, a tri or higher-valent, preferably tri to deca-valent polysiloxane structure), and more preferably a monovalent organic group in which a plurality of (specifically, 2 to 9, particularly 2 to 7) hydroxyl groups and/or hydrolyzable silyl groups bonded to a silicon atom at an end are introduced, and examples of such V include groups represented by the following general formulae (7a) to (7f): 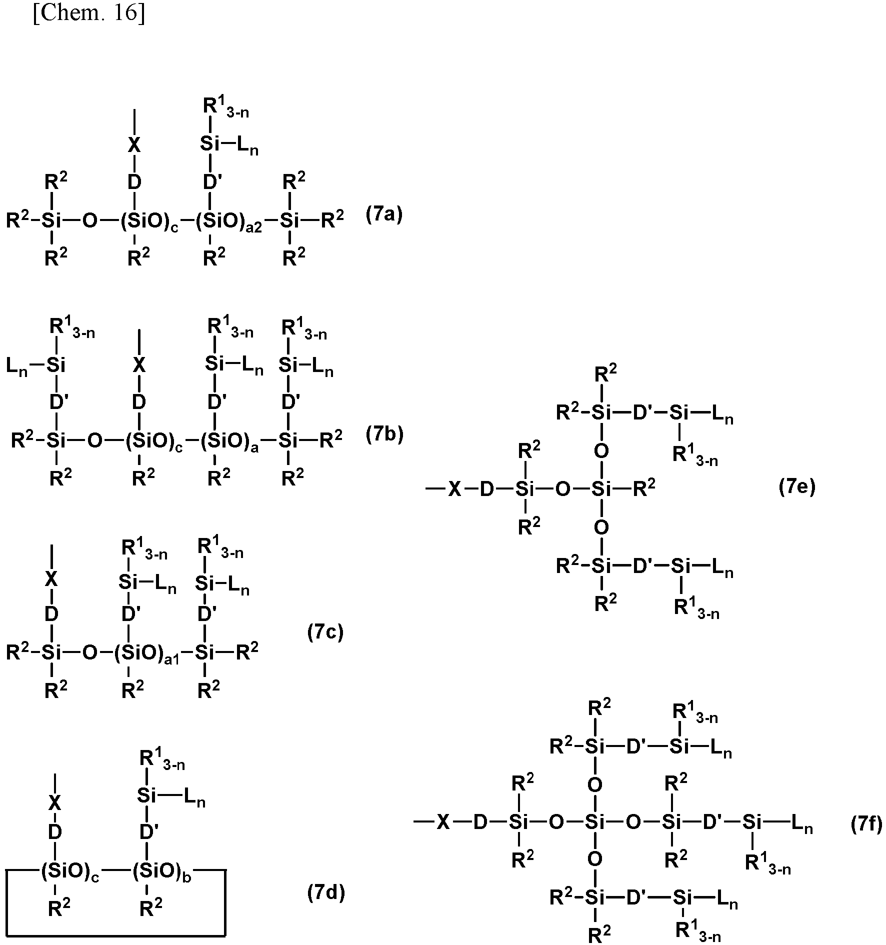 wherein X is independently a single bond or a divalent heteroatom, D and D' are each independently a C₁-C₂₀ divalent hydrocarbon group which may contain one or more selected from an oxygen atom, a nitrogen atom, a silicon atom, and a sulfur atom, R¹ is independently a C₁-C₄ alkyl group or a phenyl group, R² is independently a C₁-C₂₀ monovalent hydrocarbon group, a is an integer of 0 to 6, a1 is an integer of 1 to 6, a2 is an integer of 2 to 7, b is an integer of 2 to 9, and c is 1, individual repeat units shown in parentheses with a, a2, and c may be randomly bonded, L is independently a hydroxyl group or a hydrolyzable group, and n is independently an integer of 1 to 3 for each silicon atom bonded.

In the above formulae (7a) to (7f), X is a single bond or a divalent heteroatom, and examples of the divalent heteroatom include an oxygen atom, a nitrogen atom, and a sulfur atom. Preferably, in the above formula (1), among two V's present at each end of the molecular chain (i.e., one end of the molecular chain when α = 1, and both ends of the molecular chain when α = 2), X in one V is a single bond, and X in the other V is a divalent heteroatom, particularly an oxygen atom.

In the above formulae (7a) to (7f), D and D' each independently a C₁-C₂₀, more preferably C₂-C₁₀ divalent hydrocarbon group which may contain one or more selected from an oxygen atom, a nitrogen atom, a silicon atom, and a sulfur atom. Examples of the divalent hydrocarbon group include alkylene groups such as methylene, ethylene, propylene (trimethylene, methylethylene), butylene (tetramethylene, methylpropylene), hexamethylene, and octamethylene, arylene groups such as phenylene, or combinations of at least two of the foregoing (e.g., alkylene arylene groups). D and D' are preferably ethylene, propylene, butylene, hexamethylene, octamethylene, or phenylene.

In the above formulae (7a) to (7f), R¹ is a C₁-C₄ alkyl group such as methyl, ethyl, propyl or butyl, or phenyl. Inter alia, methyl is preferred.

L is a hydroxyl group or hydrolyzable group which may be different from each other. Examples of such L include a hydroxyl group, C₁-C₁₀ alkoxy groups such as methoxy, ethoxy, propoxy, isopropoxy, and butoxy, C₂-C₁₀ alkoxyalkoxy groups such as methoxymethoxy and methoxyethoxy, C₁-C₁₀ acyloxy groups such as acetoxy, C₂-C₁₀ alkenyloxy groups such as isopropenoxy, and halogen groups such as chloro, bromo or iodo. Inter alia, methoxy, ethoxy, isopropenoxy and chloro are preferred.

In the above formulae (7a) to (7f), R² is a C₁-C₂₀ monovalent hydrocarbon group, and is specifically a C₁-C₂₀ alkyl group such as methyl, ethyl, propyl or butyl, or a C₆-C₁₀ aryl group such as phenyl, and R² may be the same or different. Inter alia, methyl is preferred.

In the above formulae (7a) to (7f), n is independently an integer of 1 to 3, preferably 2 or 3 for each silicon atom bonded, and n is most preferably 3 from the standpoints of reactivity and substrate adhesion. The subscript "a" is an integer of 0 to 6, preferably 2 to 6, a1 is an integer of 1 to 6, preferably 2 to 6, a2 is an integer of 2 to 7, preferably 3 to 7, and b is independently an integer of 2 to 9, preferably 3 to 5.

Specific examples of such V include those shown below.

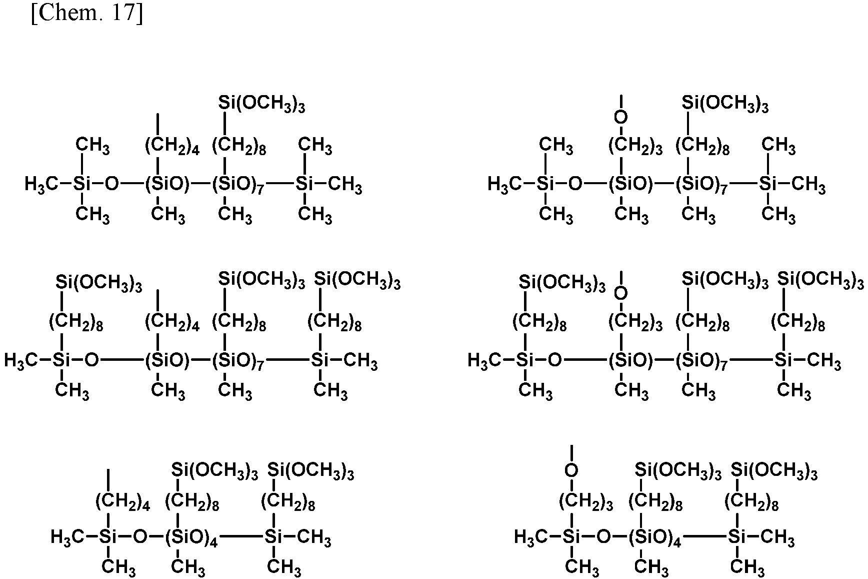

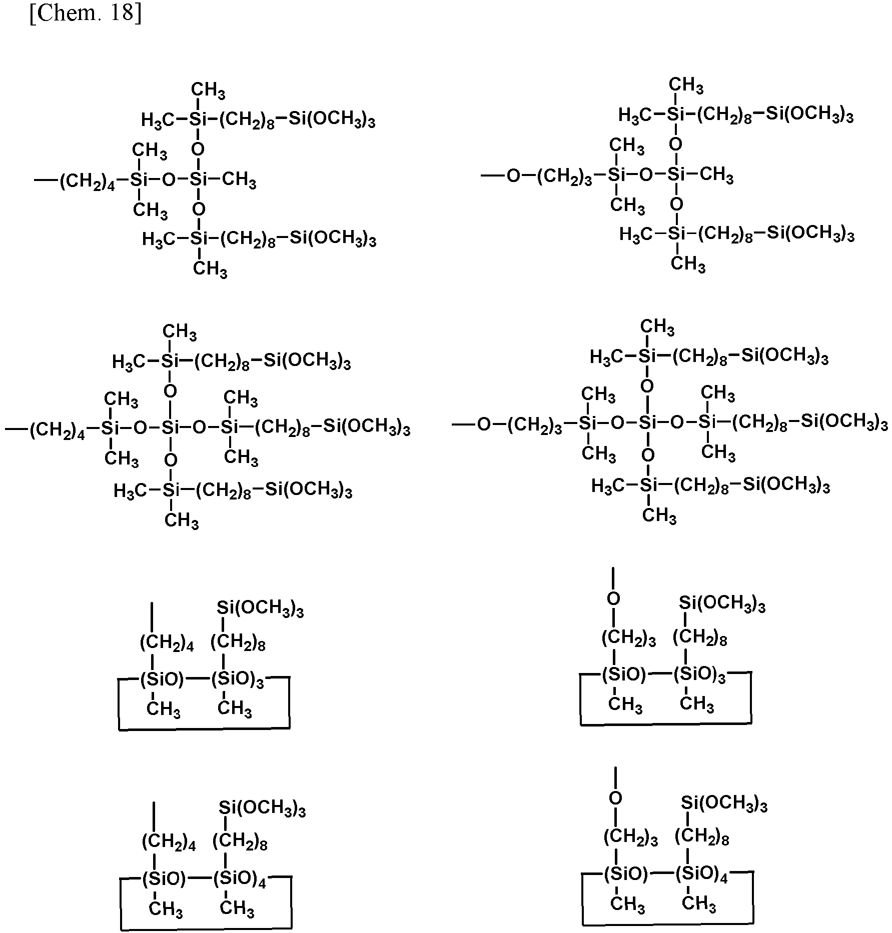

In the above formula (1), α is 1 or 2, preferably 1.

The fluoropolyether-containing polymer of the present invention is still more preferably a polymer represented by the following general formula (2): 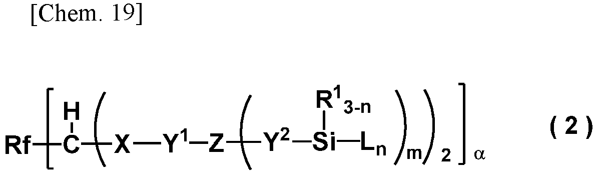 wherein Rf, X, R¹, L, n, and α are the same as described above, Y¹ is independently a C₁-C₂₀ divalent hydrocarbon group which may contain one or more selected from an oxygen atom, a nitrogen atom, a silicon atom, and a sulfur atom, Z is independently a (m+1)-valent linking group having a polyvalent polysiloxane structure, Y² is independently a C₁-C₂₀ divalent hydrocarbon group which may contain one or more selected from an oxygen atom, a nitrogen atom, a silicon atom, and a sulfur atom, and m is independently an integer of 2 to 9.

In the above formula (2), Rf and α are the same as Rf and α in the above formula (1), and examples thereof may include the same as described above. In addition, R¹, L, and n are the same as R¹, L, and n in the above formulae (7a) to (7f), and examples thereof may include the same as described above.

In the above formula (2), X is the same as X in the above formulae (7a) to (7f), and preferably, two X's are present at each end of the molecular chain (i.e., one end of the molecular chain when α = 1, and both ends of the molecular chain when α = 2), one X is an oxygen atom, and the other X is a single bond.

In the above formula (2), Y¹ is independently a C₁-C₂₀ divalent hydrocarbon group which may contain one or more selected from an oxygen atom, a nitrogen atom, a silicon atom, and a sulfur atom. Specific examples of Y¹ include C₁-C₂₀, preferably C₁-C₁₀ alkylene groups such as methylene, ethylene, propylene (trimethylene, methylethylene), butylene (tetramethylene, methylpropylene), hexamethylene, and octamethylene, C₆-C₂₀ arylene groups such as phenylene, combinations of at least two of the foregoing (e.g., C₂-C₁₀ alkylene groups containing a C₆-C₈ arylene group (C₈-C₁₈ alkylene arylene groups), etc.), and groups in which one or more bonds selected from an amide bond (e.g., an unsubstituted amide bond, an N-methyl-substituted amide bond, or an N-phenyl-substituted amide bond), a urethane bond, an ether bond, a carbonyl bond, an ester bond, a diorganosilylene group (e.g., a dialkylsilylene group such as dimethylsilylene), a silarylene bond (e.g., a silphenylene bond), and a silalkylene bond (e.g., a silethylene bond) are linked or intervened, and Y¹ is preferably a C₂-C₁₀ alkylene group, a C₂-C₁₀ alkylene group containing a C₆-C₈ arylene group, and more preferably a C₃-C₆ linear alkylene group.

Specific examples of Y¹ include the following groups: 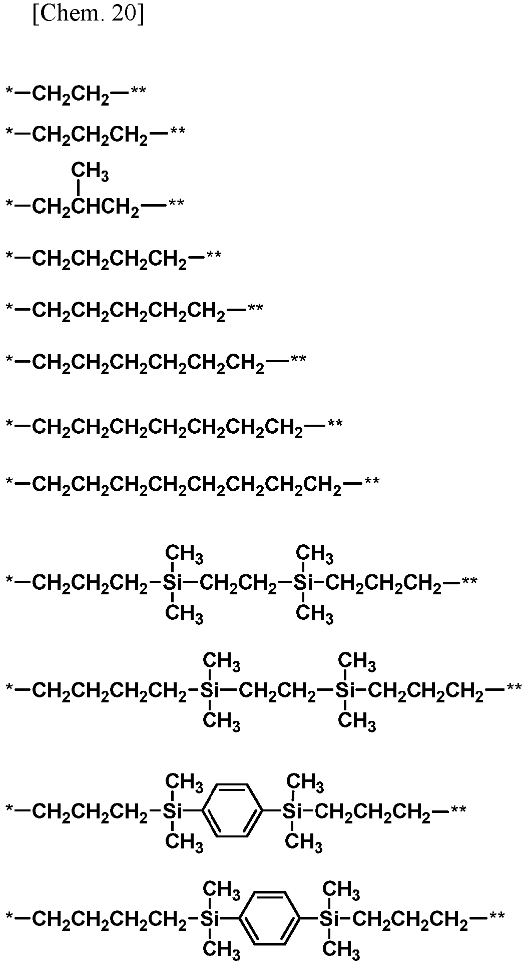 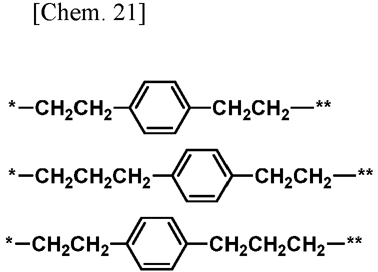 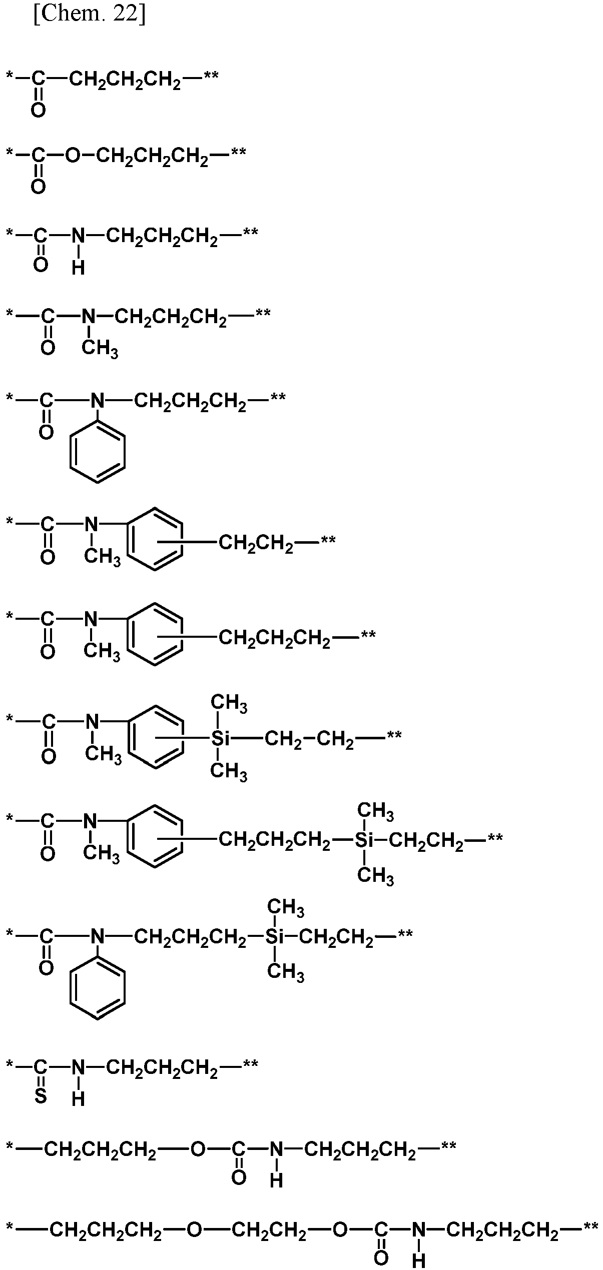 wherein * is a bond bonded to X in the above formula (2), and ** is a bond bonded to Z in the above formula (2).

Y¹ is more preferably one described below. 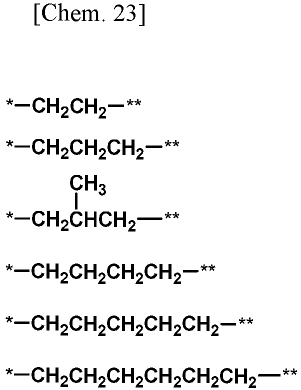 wherein * is a bond bonded to X in the formula (2), and ** is a bond bonded to Z in the formula (2).

In the formula (2), Z is independently a (m+1)-valent having a polyvalent polysiloxane structure (i.e., tri or higher-valent, preferably tri to deca-valent polysiloxane structure), i.e., tri to deca-valent linking group, and is preferably a linear, branched or cyclic tri to deca-valent organopolysiloxane residue of 3 to 10 silicon atoms.

Specific examples of Z include the following groups: 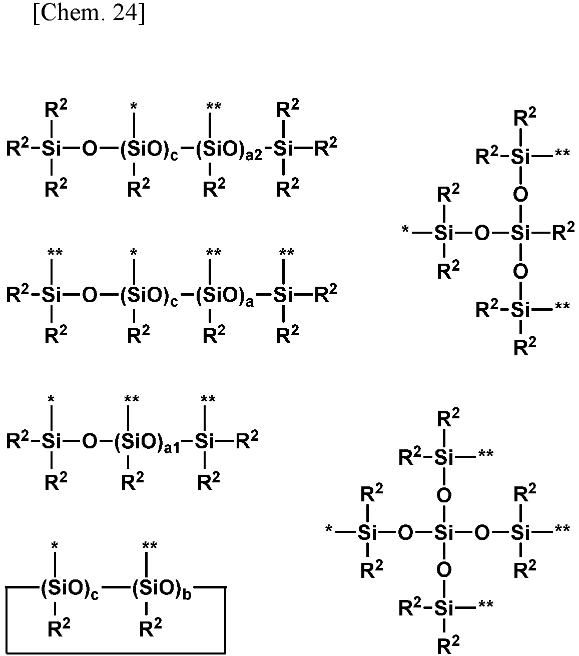 wherein R², a, a1, a2, b, and c are the same as described above, and individual repeat units shown in parentheses with a, a2, and c may be randomly bonded, and * is a bond bonded to Y¹ in the formula (2), and ** is a bond bonded to Y² in the formula (2).

Z is preferably one described below. 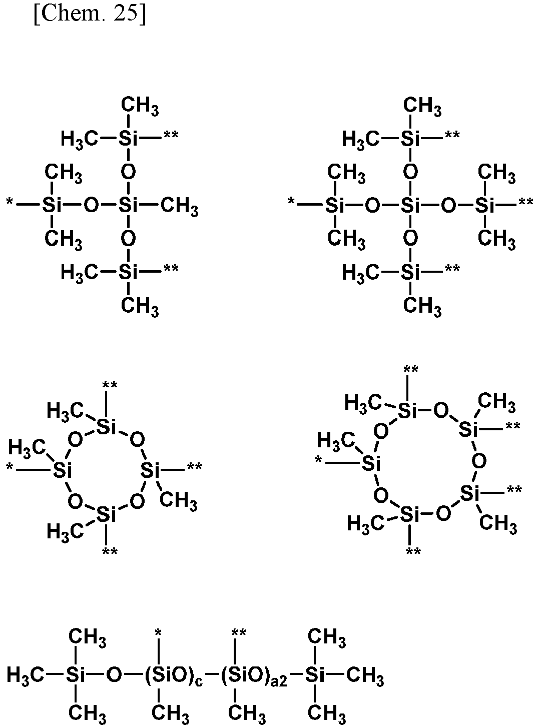 wherein a2 and c are the same as described above, and individual repeat units shown in parentheses with a2 and c may be randomly bonded, and * is a bond bonded to Y¹ in the formula (2), and ** is a bond bonded to Y² in the formula (2).

In the above formula (2), Y² is independently a C₁-C₂₀ divalent hydrocarbon group which may contain one or more selected from an oxygen atom, a nitrogen atom, a silicon atom, and a sulfur atom. Specific examples of Y² include C₁-C₂₀, preferably C₁-C₁₀ alkylene groups such as methylene, ethylene, propylene (trimethylene, methylethylene), butylene (tetramethylene, methylpropylene), hexamethylene, and octamethylene, C₆-C₂₀ arylene groups such as phenylene, combinations of at least two of the foregoing (e.g., C₂-C₁₀ alkylene groups containing a C₆-C₈ arylene group (C₈-C₁₈ alkylene arylene groups), etc.), and groups in which one or more bonds selected from an amide bond (e.g., an unsubstituted amide bond, an N-methyl-substituted amide bond, or an N-phenyl-substituted amide bond), an ether bond, a carbonyl bond, an ester bond, a diorganosilylene group (e.g., a dialkylsilylene group such as dimethylsilylene), a silarylene bond (e.g., a silphenylene bond), and a silalkylene bond (e.g., a silethylene bond) are linked or intervened, and Y² is preferably a C₂-C₁₀ alkylene group, a C₂-C₁₀ alkylene group containing a C₆-C₈ arylene group, and more preferably a C₃-C₈ linear alkylene group.

Specific examples of Y² include the following groups: 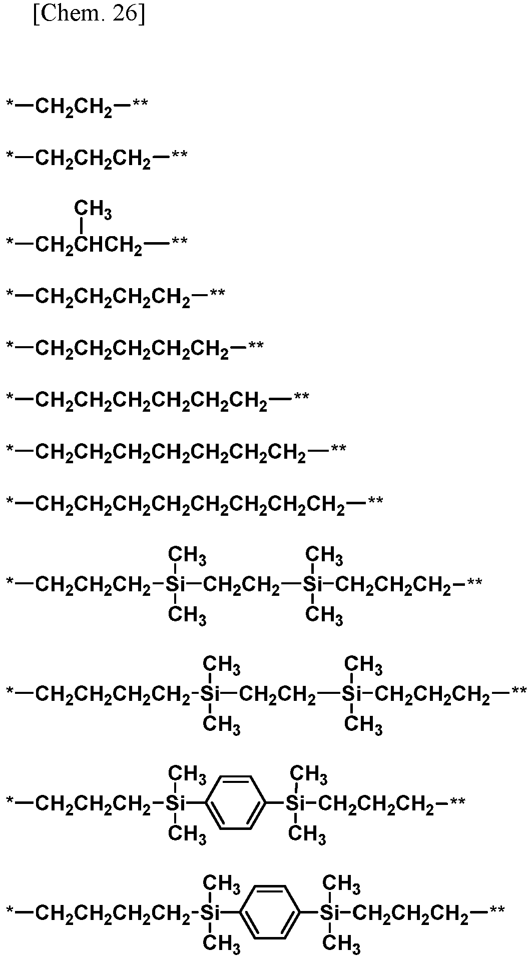 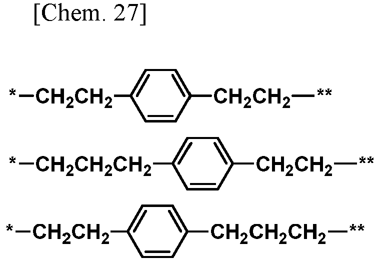 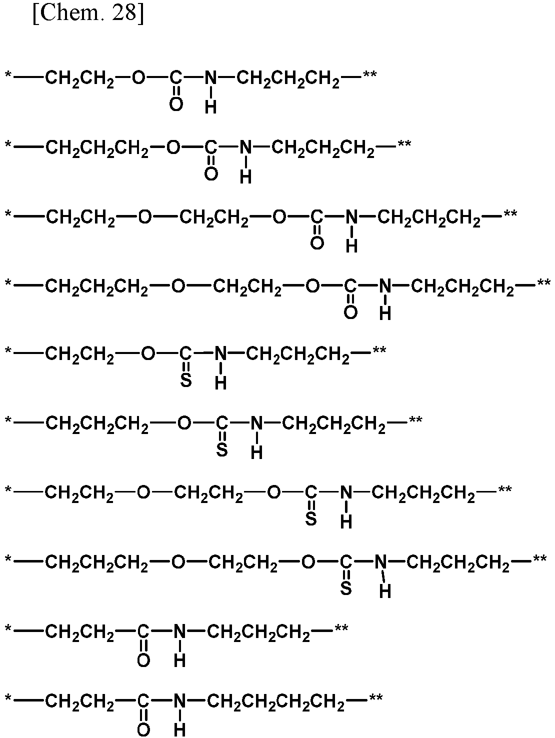 wherein * is a bond bonded to Z in the general formula (2), and ** is a bond bonded to a silicon atom in the general formula (2).

In the above formula (2), m is independently an integer of 2 to 9, preferably an integer of 2 to 7, and more preferably an integer of 2 to 5. When m is 10 or more, the number of hydroxyl groups and/or hydrolyzable silyl groups bonded to a terminal silicon atom is too large, which adversely affects water repellency and anti-fouling property.

As the fluoropolyether-containing polymer represented by the formula (2), polymers represented by the following general formulae (5) and (6) are preferred. 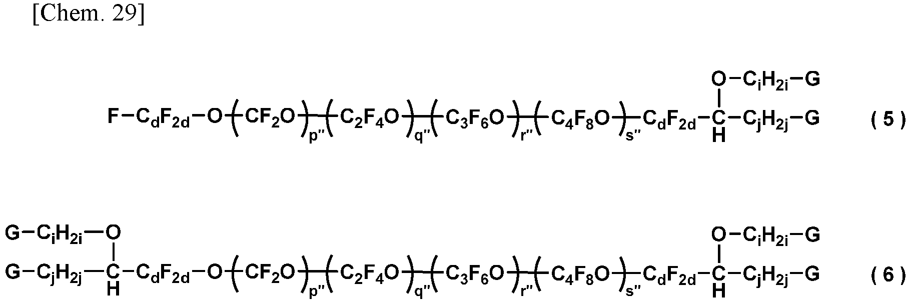 wherein d is independently an integer of 1 to 3 for each unit, p", q", r", and s" are each an integer of 0 to 200, preferably 0 to 100, the sum of p", q", r", and s" in each formula is 3 to 200, preferably 10 to 100, individual repeat units shown in parentheses with p", q", r", and s" may be randomly bonded, i and j are each independently an integer of 2 to 10 for each unit, each of these units may be linear or branched, and G independently has any one of the following formulae: 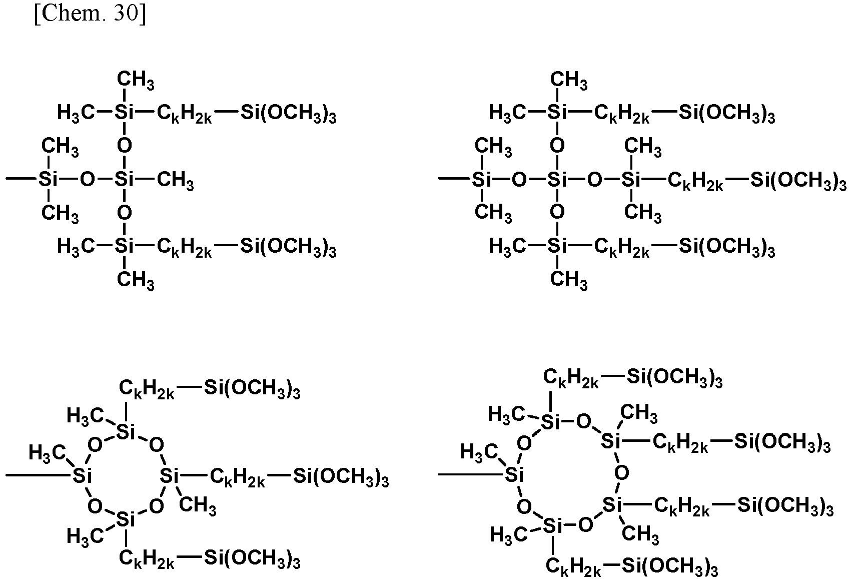 wherein k is independently an integer of 2 to 8 for each unit.

Specific examples of the fluoropolyether-containing polymer represented by the formula (2) include those represented by the following formulae: 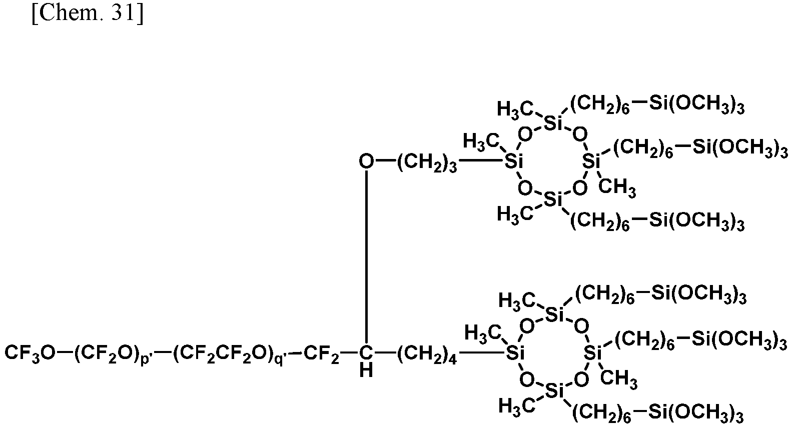 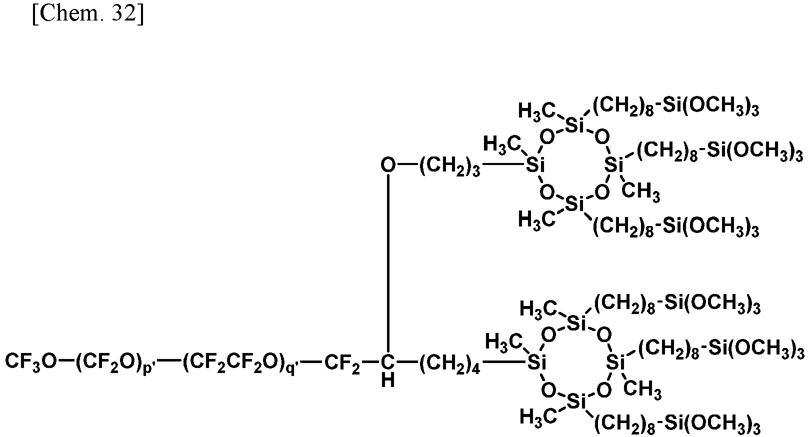 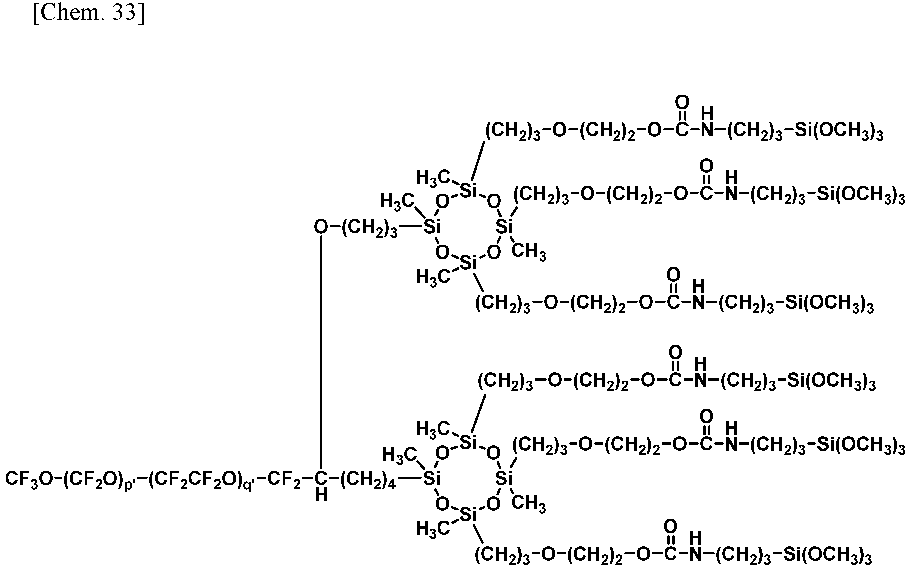 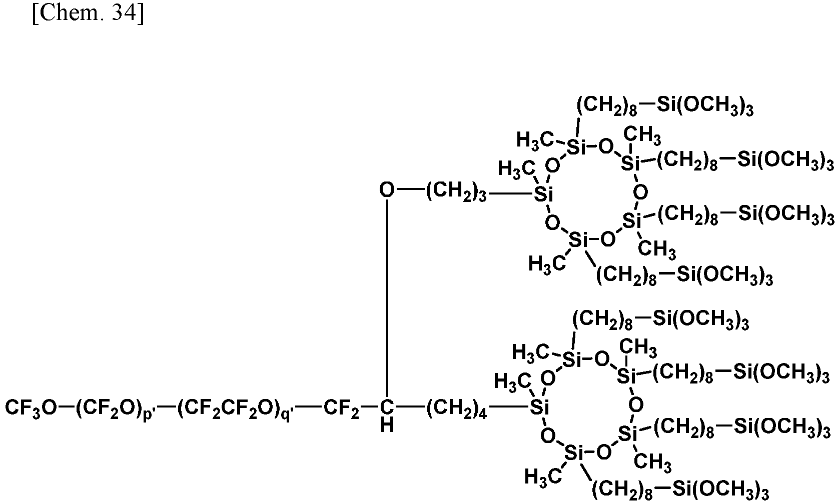 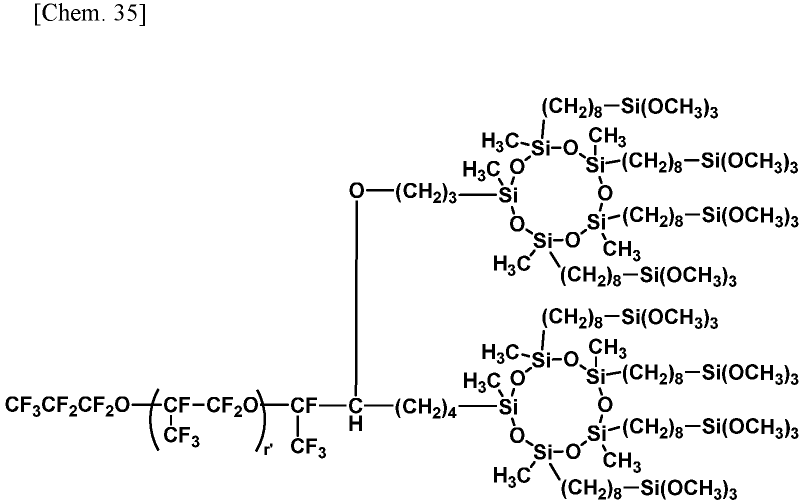 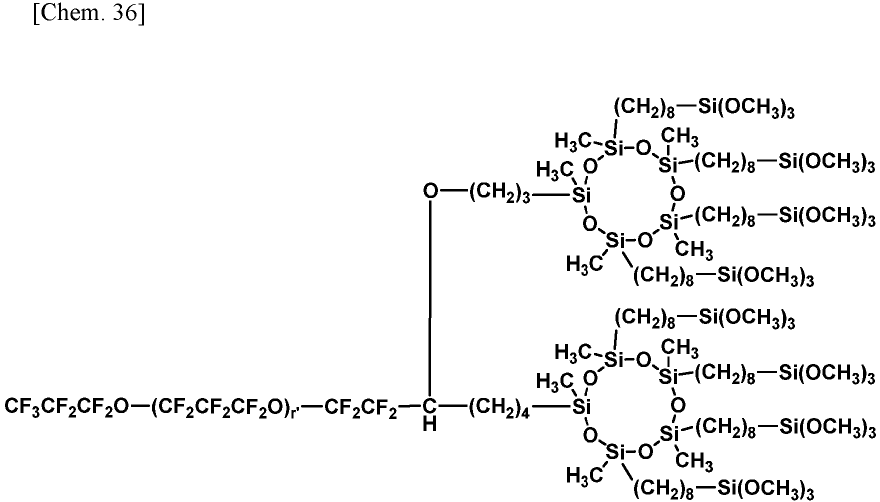 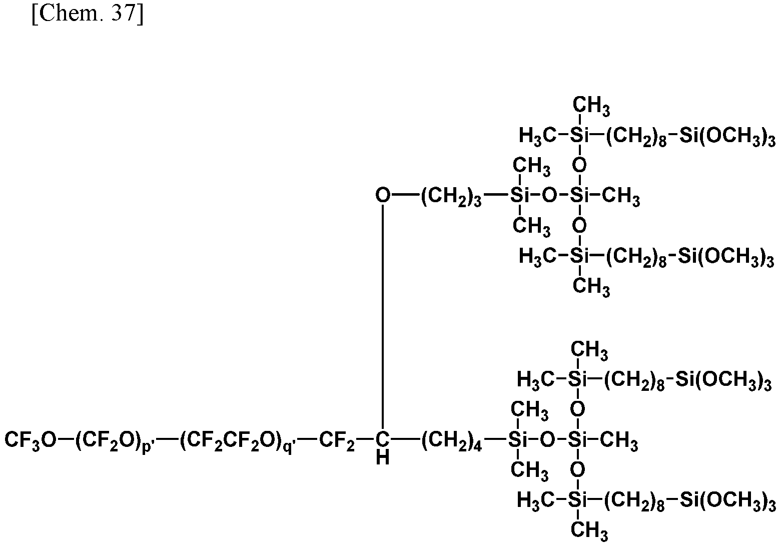 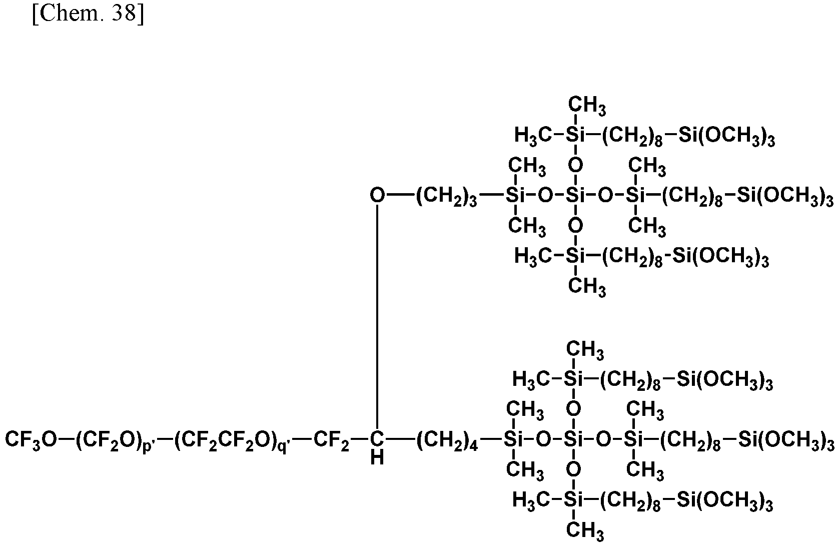 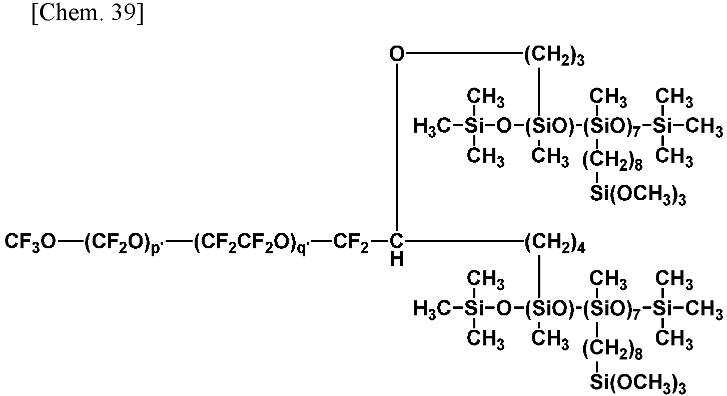 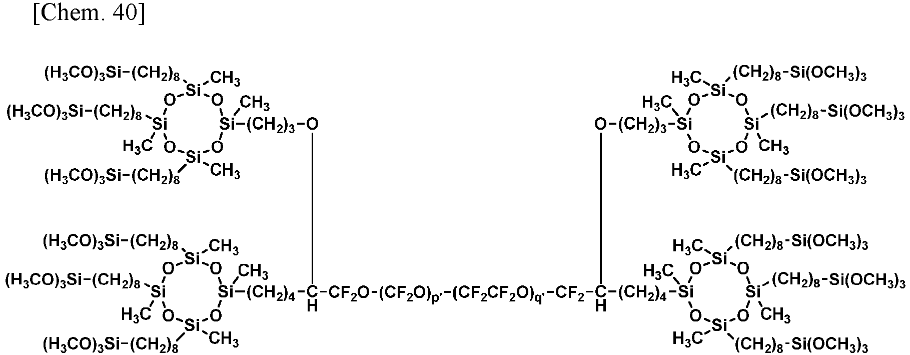 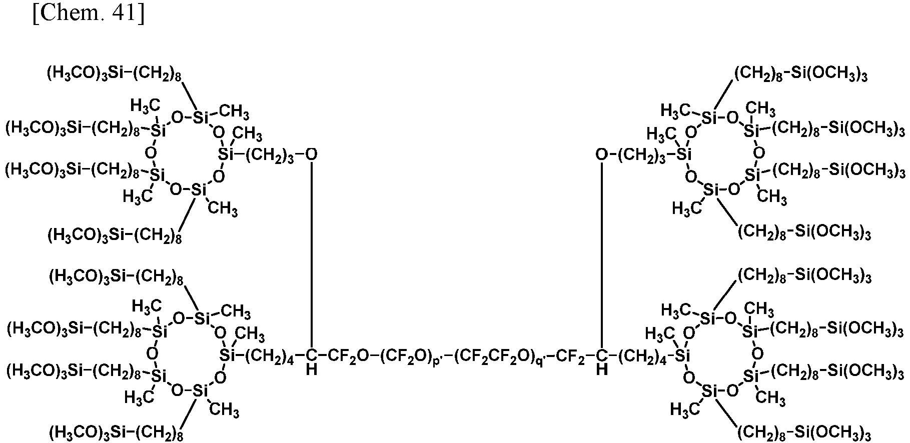 wherein p', q', r' and the sum thereof in each formula are the same as described above, and individual repeat units shown in parentheses with p', q', and r' may be randomly bonded.

A method for preparing the fluoropolyether-containing polymer represented by the formula (2) is, for example, the method shown below.

First, a fluoropolyether-containing polymer having a carbonyl group at an end, represented by the following general formula (8): 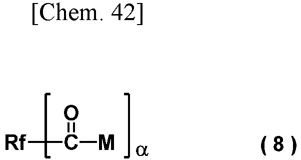 wherein Rf and α are as defined above, and M is an eliminatable monovalent group is reacted with an organic metal reagent having an aliphatic unsaturated double bond (olefin site) at an end and a β-hydrogen atom (i.e., hydrogen atom bonded to the carbon atom at β position relative to metal atom), preferably in the presence of a solvent.

In the above formula (8), M is an eliminatable monovalent group, for example, a hydrogen atom, a halogen atom, hydroxy, alkoxy, amino, alkylamino, thiol, alkylthio or acyl group.

Examples of such M include the following groups.

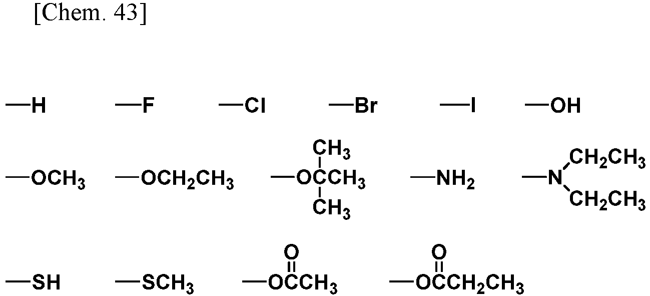

Specific examples of the fluoropolyether-containing polymer having a carbonyl group at an end, represented by the formula (8), are shown below. 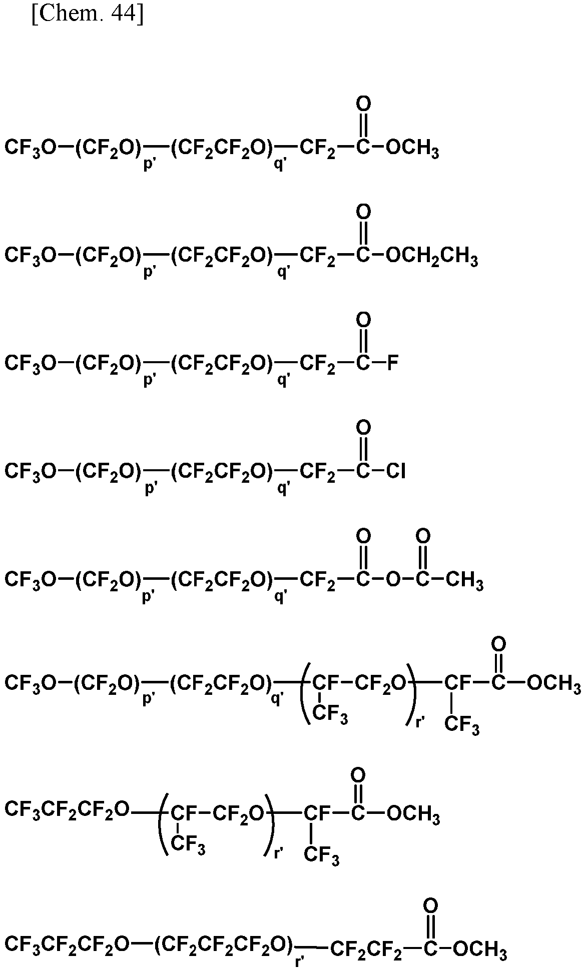 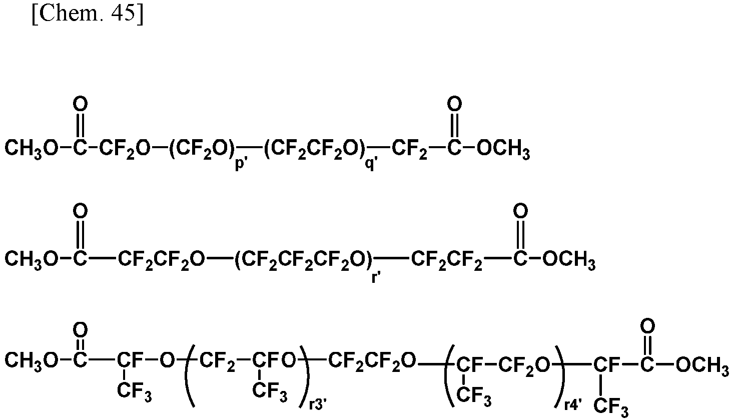 wherein p', q', r' and the sum thereof in each formula are the same as described above, and individual repeat units shown in parentheses with p', q', and r' may be randomly bonded, r3' and r4' each are an integer of 1 or more, and the sum of r3' and r4' is 2 to 199.

Illustrative of the organic metal reagent having an aliphatic unsaturated double bond at an end and a β-hydrogen atom are organolithium reagents, Grignard reagents, organozinc reagents, organoboron reagents, and organotin reagents. Inter alia, Grignard reagents and organozinc reagents are preferred for ease of handling. The following compounds are preferably used as the organic metal reagent.

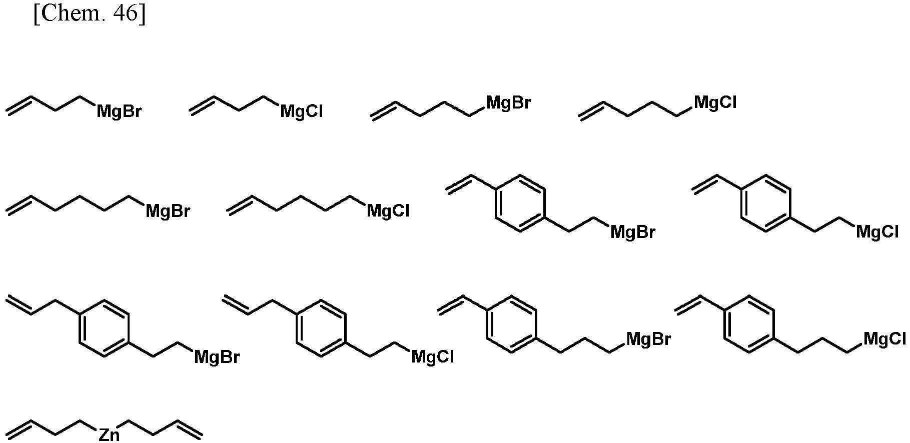

The amount of the organic metal reagent having an aliphatic unsaturated double bond at an end and a β-hydrogen atom is preferably 2 to 5 equivalents, more preferably 2.5 to 3.5 equivalents, still more preferably about 3 equivalents per equivalent of reactive end group (eliminatable monovalent group) in the fluoropolyether-containing polymer having a carbonyl group at an end, represented by the formula (8).

A solvent may be used in the reaction of the fluoropolyether-containing polymer having a carbonyl group at an end, represented by the formula (8), with the organic metal reagent having an aliphatic unsaturated double bond at an end and a β-hydrogen atom. Although the solvent used herein is not particularly limited, a fluorochemical solvent is preferably used because the reactant is a fluoro compound. Suitable fluorochemical solvents include 1,3-bistrifluoromethylbenzene, trifluoromethylbenzene, perfluoro solvents (Asahiklin AC2000, Asahiklin AC6000) marketed from AGC Inc., hydrofluoroether (HFE) solvents (NOVEC 7100: C₄F₉OCH₃, NOVEC 7200: C₄F₉OC₂H₅, NOVEC 7300: C₂F₅-CF(OCH₃)-CF(CF₃)₂) marketed from 3M, and perfluoro solvents (PF5080, PF5070, PF5060) marketed from 3M. The fluorochemical solvents may be used alone or in admixture.

Besides the fluorochemical solvent, an organic solvent may also be used as the solvent. Ether solvents such as tetrahydrofuran (THF), monoethylene glycol dimethyl ether, diethylene glycol dimethyl ether, triethylene glycol dimethyl ether, tetraethylene glycol dimethyl ether, and dioxane may be used as the organic solvent. The organic solvent may be used alone or in admixture with the fluorochemical solvent.

The amount of the solvent used is 10 to 600 parts by weight, preferably 50 to 400 parts by weight, and still more preferably about 200 to 350 parts by weight per 100 parts by weight of the fluoropolyether-containing polymer having a carbonyl group at an end, represented by the formula (8).

Conditions for the reaction of the fluoropolyether-containing polymer having a carbonyl group at an end, represented by the formula (8), with the organic metal reagent having an aliphatic unsaturated double bond at an end and a β-hydrogen atom include 0 to 80°C, preferably 45 to 70°C, more preferably about 50°C and 1 to 12 hours, preferably 5 to 7 hours.

After the reaction is performed under the above conditions, the reaction is stopped, and the solution is separated into a water layer and a fluorochemical solvent layer by separatory operation. The fluorochemical solvent layer is washed with an organic solvent, after which the solvent is distilled off, obtaining a fluoropolyether-containing polymer having a hydroxyl group and an olefin site at an end of the molecular chain, represented by the following general formula (9): 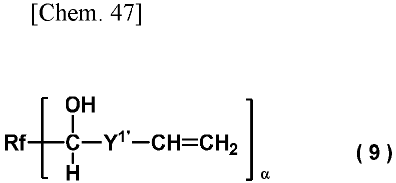 wherein Rf and α are the same as described above, and Y^{1'} is independently a single bond or a C₁-C₁₈ divalent hydrocarbon group which may contain one or more selected from an oxygen atom, a nitrogen atom, a silicon atom, and a sulfur atom.

In the above formula (9), Y^{1'} is independently a single bond or a C₁-C₁₈, particularly C₂-C₁₂ divalent hydrocarbon group which may contain one or more selected from an oxygen atom, a nitrogen atom, a silicon atom, and a sulfur atom. Specific examples thereof include a single bond, C₁-C₁₈ alkylene groups such as methylene, ethylene, propylene (trimethylene, methylethylene), butylene (tetramethylene, methylpropylene), hexamethylene, and octamethylene, and alkylene groups containing a C₆-C₈ arylene group such as phenylene (e.g., C₇-C₁₈ alkylene arylene groups). Y^{1'} is preferably a C₁-C₄ straight alkylene group.

Examples of such Y^{1'} include the following groups: 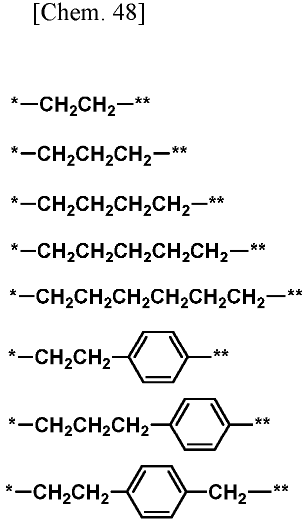 wherein * is a bond bonded to a carbon atom bonded to Rf in the formula (9), and ** is a bond bonded to a vinyl group in the formula (9).

Specific examples of the fluoropolyether-containing polymer having a hydroxyl group and an olefin site at an end of the molecular chain, represented by the formula (9), are shown below. 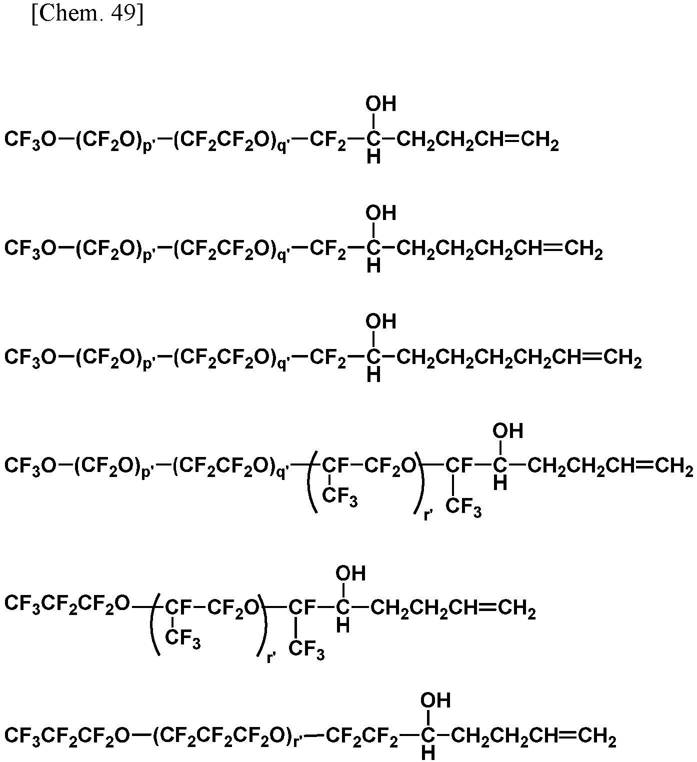 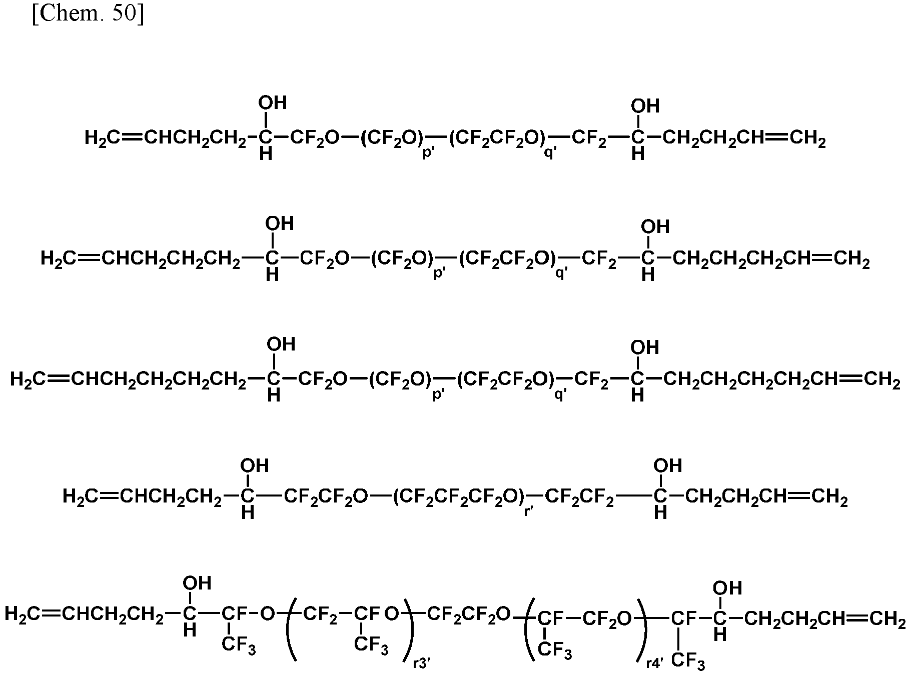 wherein p', q', r', r3', and r4' and the sum thereof in each formula are the same as described above, and individual repeat units shown in parentheses with p', q', and r' may be randomly bonded.

Next, the fluoropolyether-containing polymer having a hydroxyl group and an olefin site at an end of the molecular chain, represented by the formula (9), obtained above, and an olefin-introducing agent are aged in the presence of a base at a temperature of 0 to 90°C, preferably 40 to 60°C, more preferably about 50°C for 1 to 48 hours, preferably 10 to 40 hours, more preferably about 24 hours, optionally along with an additive for enhancing reactivity and a solvent.

Here, as the olefin-introducing agent to be reacted with the fluoropolyether-containing polymer having a hydroxyl group and an olefin site at an end of the molecular chain, represented by the formula (9), for example, a halide or the like can be used, and specific examples thereof include allyl bromide, allyl chloride, and 3-butenyl bromide.

The amount of the olefin-introducing agent used is 1 to 15 equivalents, more preferably 3 to 6 equivalents, still more preferably about 4 equivalents per equivalent of the reactive end group (hydroxyl group) in the fluoropolyether-containing polymer having a hydroxyl group and an olefin site at an end of the molecular chain, represented by the formula (9).

Examples of the base used in the reaction of the fluoropolyether-containing polymer having a hydroxyl group and an olefin site at an end of the molecular chain, represented by the formula (9), with the olefin-introducing agent include amines and alkali metal bases. Exemplary amines include triethylamine, diisopropylethylamine, pyridine, DBU, and imidazole. Exemplary alkali metal bases include sodium hydroxide, potassium hydroxide, sodium hydride, potassium hydride, alkyllithium, tert-butoxypotassium, lithium diisopropylamide, lithium bis(trimethylsilyl)amide, sodium bis(trimethylsilyl)amide, and potassium bis(trimethylsilyl)amide.

The amount of the base used is 1 to 20 equivalents, more preferably 4 to 8 equivalents, still more preferably about 6 equivalents per equivalent of the reactive end group (hydroxyl group) in the fluoropolyether-containing polymer having a hydroxyl group and an olefin site at an end of the molecular chain, represented by the formula (9).

For the reaction of the fluoropolyether-containing polymer having a hydroxyl group and an olefin site at an end of the molecular chain, represented by the formula (9), with the olefin-introducing agent, an additive for enhancing reactivity such as tetrabutylammonium halide or alkali metal halide may be used. Exemplary additives include tetrabutylammonium chloride, tetrabutylammonium bromide, tetrabutylammonium iodide, tetrabutylammonium hydrogen sulfate, sodium iodide, potassium iodide, cesium iodide, and crown ethers. In the reaction system, catalytic halogen exchange takes place between the additive and the olefin-introducing agent to enhance reactivity whereas a crown ether coordinates with the metal to enhance reactivity.

The amount of the additive used is 0.005 to 0.1 equivalent, more preferably 0.01 to 0.05 equivalent, still more preferably about 0.02 equivalent per equivalent of the reactive end group (hydroxyl group) in the fluoropolyether-containing polymer having a hydroxyl group and an olefin site at an end of the molecular chain, represented by the formula (9).

In the reaction of the fluoropolyether-containing polymer having a hydroxyl group and an olefin site at an end of the molecular chain, represented by the formula (9), with the olefin-introducing agent, a solvent may be used. Although the solvent is not essential, a fluorochemical solvent is typically used as the solvent. Suitable fluorochemical solvents include fluorinated aromatic hydrocarbon solvents such as 1,3-bis(trifluoromethyl)benzene and trifluoromethylbenzene, hydrofluoroether (HFE) solvents (tradename Novec series by 3M) such as 1,1,1,2,3,4,4,5,5,5-decafluoro-3-methoxy-2-(trifluoromethyl)pentane, and perfluoro solvents composed of completely fluorinated compounds (tradename Fluorinert series by 3M). Organic solvents may also be used, for example, dimethylforamide, dimethylacetamide, dimethyl sulfoxide, acetonitrile, and tetrahydrofuran (THF).

The amount of the solvent used is 10 to 300 parts by weight, preferably 30 to 150 parts by weight, and still more preferably about 50 parts by weight per 100 parts by weight of the fluoropolyether-containing polymer having a hydroxyl group and an olefin site at an end of the molecular chain, represented by the formula (9).

By the reaction of the fluoropolyether-containing polymer having a hydroxyl group and an olefin site at an end of the molecular chain, represented by the formula (9), with the olefin-introducing agent, a fluoropolyether-containing polymer having two olefin sites at an end of the molecular chain, represented by the following general formula (10), is obtained, 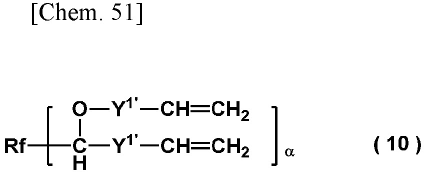 wherein Rf, Y^{1'} and α are the same as described above, and a plurality of Y^{1'} may be the same or different.

Preferable examples of the fluoropolyether-containing polymer having two olefin sites at an end of the molecular chain, represented by the formula (10), are shown below. 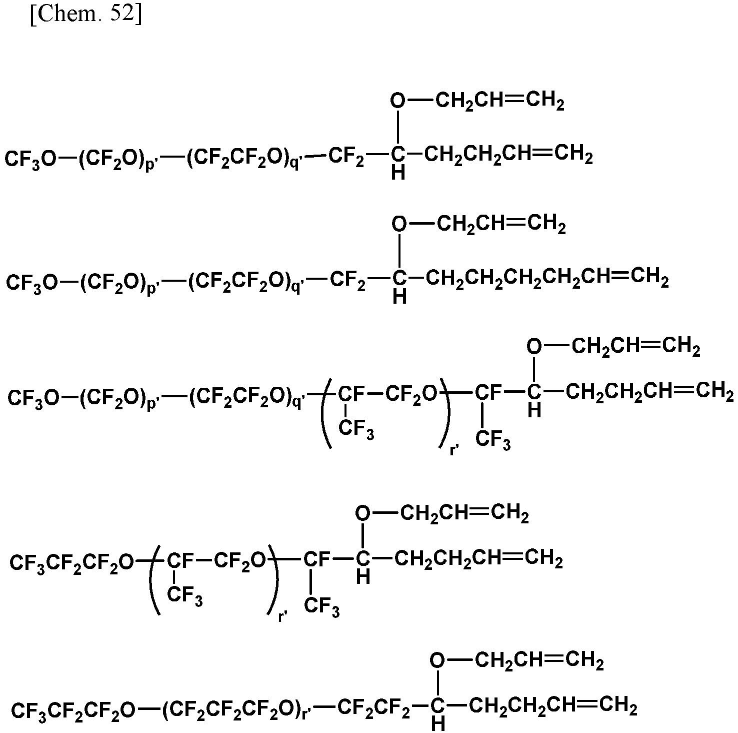 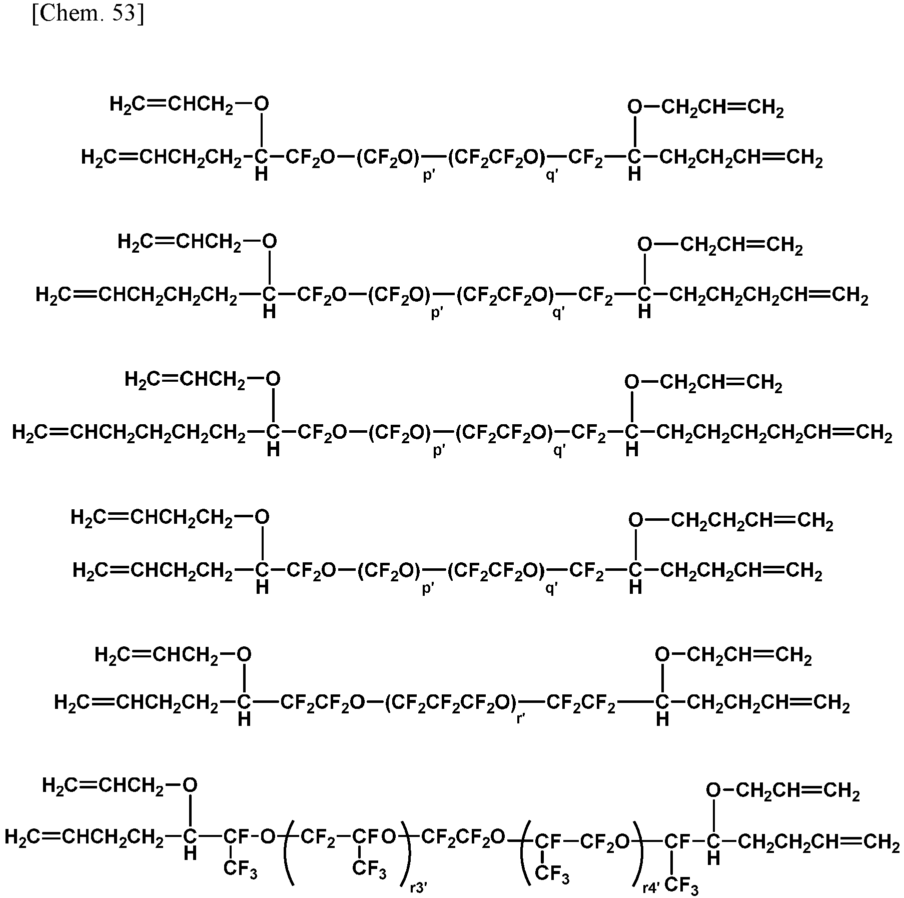 wherein p', q', r', r3', and r4' and the sum thereof in each formula are the same as described above, and individual repeat units shown in parentheses with p', q', and r' may be randomly bonded.

Next, the fluoropolyether-containing polymer having two olefin sites at an end of the molecular chain, represented by the formula (10), obtained above is dissolved in a solvent such as fluorochemical solvent, typically 1,3-bis(trifluoromethyl)benzene. An organosilicon compound having at least three SiH groups in the molecule such as 2,4,6,8-tetramethylcyclotetrasiloxane is mixed therewith. The mixture is aged in the presence of a hydrosilylation catalyst, for example, a toluene solution of chloroplatinic acid/vinyl siloxane complex, at a temperature of 40 to 120°C, preferably 60 to 100°C, more preferably about 80°C for 1 to 72 hours, preferably 20 to 36 hours, more preferably about 24 hours.

Here, as the organosilicon compound having at least three SiH groups in the molecule to be reacted with the fluoropolyether-containing polymer having two olefin sites at an end of the molecular chain, represented by the formula (10), a compound represented by the following formula is preferable. 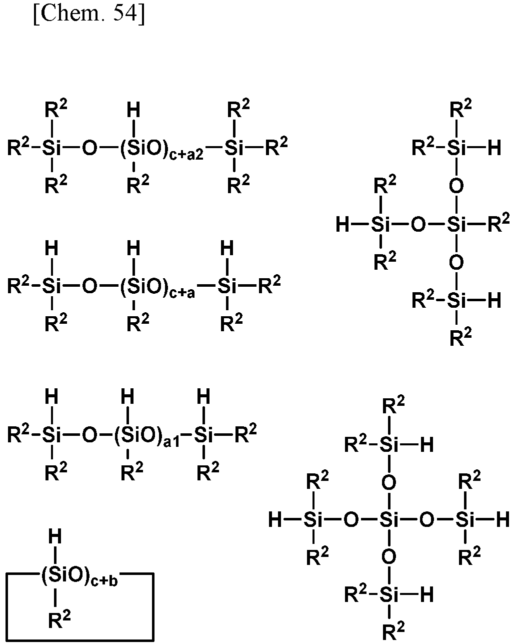 wherein R², a, a1, a2, b, and c are the same as described above.

Examples of the organosilicon compound having at least three SiH groups in the molecule include compounds such as 2,4,6,8-tetramethylcyclotetrasiloxane, 2,4,6,8,10-pentamethylcyclopentasiloxane, methyltris(dimethylsiloxy)silane, tetrakis(dimethylsilyloxy)silane, and 1,1,1,3,5,7,9,11,13,15,17,19,19,19-tetradecamethyldecasiloxane.

In the addition reaction of the fluoropolyether-containing polymer having two olefin sites at an end of the molecular chain, represented by the formula (10), with an organosilicon compound having at least three SiH groups in the molecule, the amount of organosilicon compound having at least three SiH groups in the molecule used is 2 to 10 equivalents, more preferably 3 to 6 equivalents, still more preferably about 5 equivalents per equivalent of the reactive end group (terminal olefin site) in the fluoropolyether-containing polymer having two olefin sites at an end of the molecular chain.

As the solvent used in the reaction of the fluoropolyether-containing polymer having two olefin sites at an end of the molecular chain, represented by the formula (10), with the organosilicon compound having at least three SiH groups in the molecule, fluorochemical solvents are preferred. Examples of the fluorochemical solvents include 1,3-bis(trifluoromethyl)benzene, trifluoromethylbenzene, methyl nonafluorobutyl ether, methyl nonafluoroisobutyl ether, ethyl nonafluorobutyl ether, ethyl nonafluoroisobutyl ether, hydrofluoroether (HFE) solvents (tradename Novec series by 3M) such as 1,1,1,2,3,4,4,5,5,5-decafluoro-3-methoxy-2-(trifluoromethyl)pentane, and perfluoro solvents composed of completely fluorinated compounds (tradename Fluorinert series by 3M).

The amount of the solvent used is 10 to 300 parts by weight, preferably 50 to 200 parts by weight, and still more preferably about 100 to 150 parts by weight per 100 parts by weight of the fluoropolyether-containing polymer having two olefin sites at an end of the molecular chain, represented by the formula (10).

Examples of the hydrosilylation catalyst used in the reaction of the fluoropolyether-containing polymer having two olefin sites at an end of the molecular chain, represented by the formula (10), with the organosilicon compound having at least three SiH groups in the molecule include platinum group metal based catalysts such as platinum black, chloroplatinic acid, alcohol-modified chloroplatinic acid, complexes of chloroplatinic acid with olefin, aldehyde, vinyl siloxane, and acetylene alcohol, tetrakis(triphenylphosphine)palladium, and chlorotris(triphenylphosphine)rhodium. Inter alia, platinum compounds such as vinyl siloxane coordination compounds are preferred.

The amount of the hydrosilylation catalyst is used in an amount to provide preferably 0.01 to 100 ppm, and more preferably 0.1 to 50 ppm of transition metal based on the weight of the fluoropolyether-containing polymer having two olefin sites at an end of the molecular chain, represented by the formula (10).

By the reaction of the fluoropolyether-containing polymer having two olefin sites at an end of the molecular chain, represented by the formula (10), with the organosilicon compound having at least three SiH groups in the molecule, a fluoropolyether-containing polymer having two monovalent groups having at least two SiH groups at an end of the molecular chain, represented by the following general formula (11), is obtained. 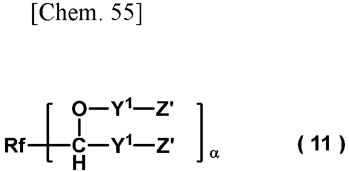 wherein Rf, Y¹, and α are the same as described above, and Z' is independently a monovalent group having at least two SiH groups.

Here, in the above formula (11), Z' is a monovalent group having at least two SiH groups, and is preferably a monovalent group having a linear, branched or cyclic organopolysiloxane residue having 3 to 10 silicon atoms, and specific examples of Z' include the following groups: 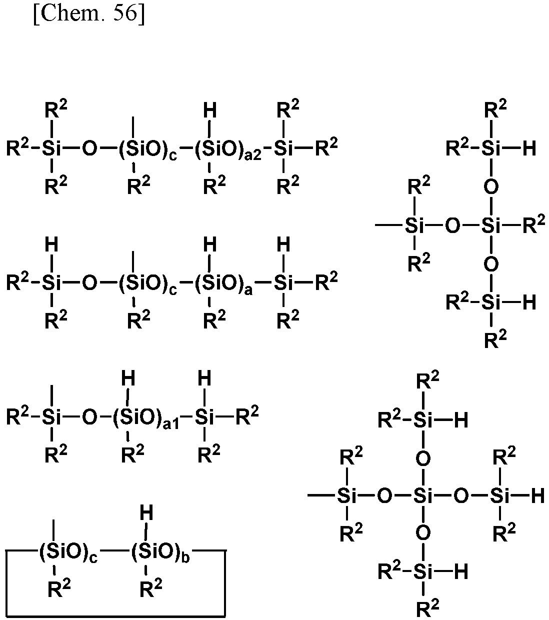 wherein R², a, a1, a2, b, and c are the same as described above, and individual repeat units shown in parentheses with a, a2, and c may be randomly bonded.

Preferable examples of the fluoropolyether-containing polymer having two monovalent groups having at least two SiH groups at an end of the molecular chain, represented by the formula (11), are shown below. 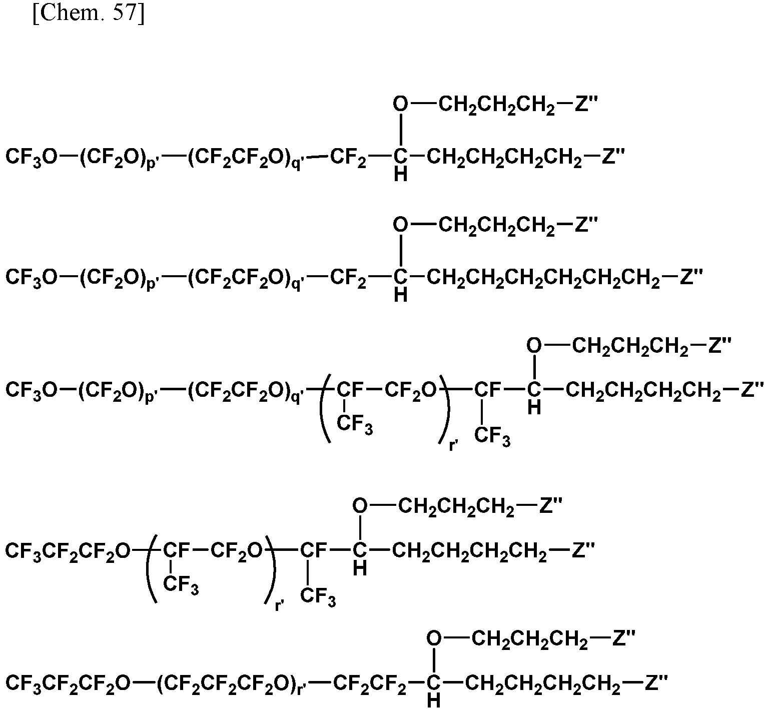 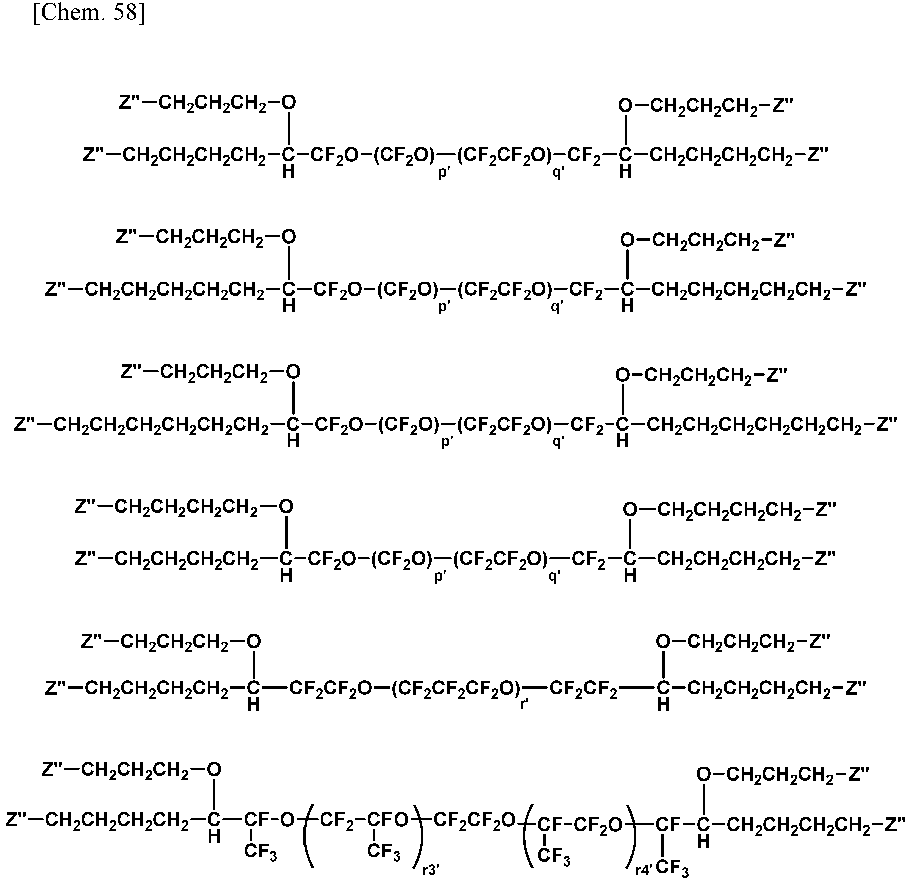 wherein p', q', r', r3', and r4' and the sum thereof in each formula are the same as described above, and individual repeat units shown in parentheses with p', q', and r' may be randomly bonded, and Z" independently has any one of the following formulae: 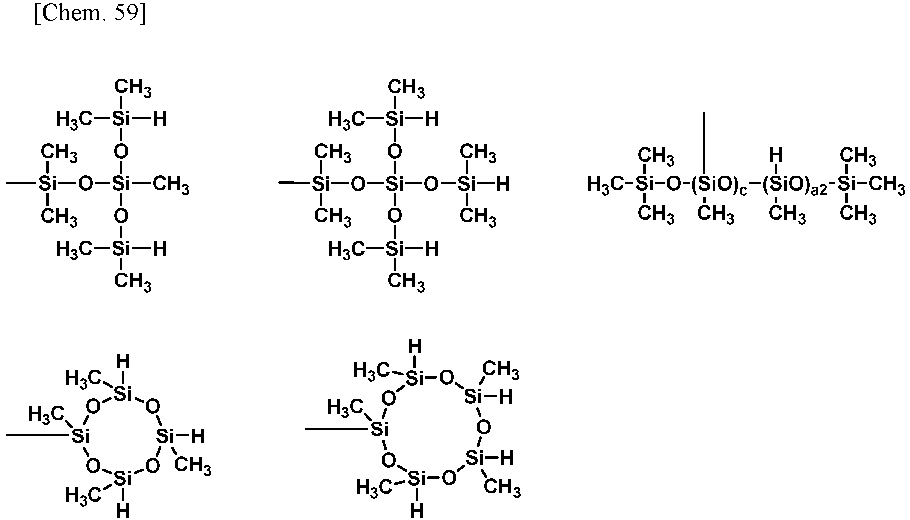 wherein a2 and c are the same as described above, and individual repeat units shown in parentheses with a2 and c may be randomly bonded.

Next, the fluoropolyether-containing polymer having two monovalent groups having at least two SiH groups at an end of the molecular chain, represented by the formula (11), obtained above is dissolved in a solvent such as fluorochemical solvent, typically 1,3-bis(trifluoromethyl)benzene. An organosilicon compound having an olefin site and a hydroxyl group and/or a hydrolyzable silyl group bonded to a silicon atom (halogenated silyl group, alkoxysilyl group, or the like) in the molecule such as 7-octenyltrimethoxysilane or 7-octenyltrichlorosilane is mixed therewith. The mixture is aged in the presence of a hydrosilylation catalyst, for example, a toluene solution of chloroplatinic acid/vinyl siloxane complex, at a temperature of 40 to 120°C, preferably 60 to 100°C, more preferably about 80°C for a time of 1 to 72 hours, preferably 20 to 36 hours, more preferably about 24 hours. There is obtained a fluoropolyether-containing polymer having the formula (2). In the organosilicon compound having an olefin site and a hydrolyzable silyl group in the molecule, when an organosilicon compound having a halogen atom as a hydrolyzable silyl group is used, the substituent (halogen atom) on the silyl group may be then converted to, for example, an alkoxy group such as a methoxy group as another hydrolyzable group.

Here, as the organosilicon compound having an olefin site and a hydroxyl group and/or a hydrolyzable silyl group bonded to a silicon atom in the molecule to be reacted with the fluoropolyether-containing polymer having two monovalent groups having at least two SiH groups at an end of the molecular chain, represented by the formula (11), a compound represented by the following general formula (12) is preferable. 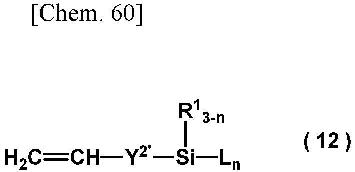 wherein R¹, L, and n are the same as described above, and Y²' is a single bond or a C₁-C₁₈ divalent hydrocarbon group which may contain one or more selected from an oxygen atom, a nitrogen atom, a silicon atom, and a sulfur atom.

In the formula (12), Y²' is a single bond or a C₁-C₁₈ divalent hydrocarbon group which may contain one or more selected from an oxygen atom, a nitrogen atom, a silicon atom, and a sulfur atom. Specific examples thereof include a single bond, C₁-C₁₈ alkylene groups such as methylene, ethylene, propylene (trimethylene, methylethylene), butylene (tetramethylene, methylpropylene), hexamethylene, and octamethylene, and alkylene groups containing a C₆-C₈ arylene group such as phenylene (e.g., C₇-C₁₈ alkylene arylene groups). Y²' is preferably a C₁-C₆ alkylene group.

Examples of Y^{2'} include the following groups: 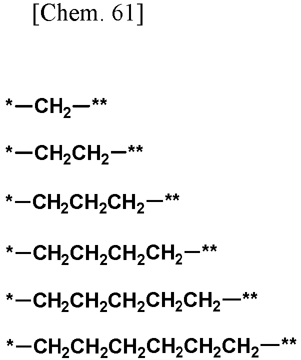 wherein * is a bond bonded to a vinyl group in the formula (12), and ** is a bond bonded to a silicon atom in the formula (12).

Examples of the organosilicon compound having an olefin site and a hydroxyl group and/or a hydrolyzable silyl group bonded to a silicon atom in the molecule include compounds as shown below.

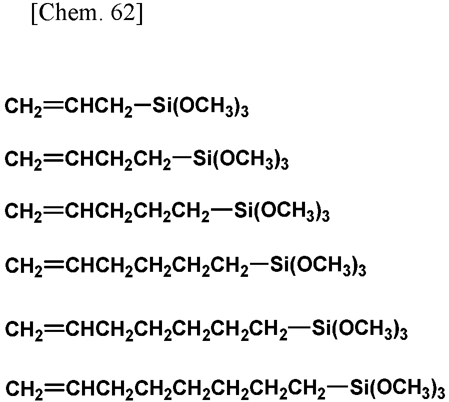

In the addition reaction of the fluoropolyether-containing polymer having two monovalent groups having at least two SiH groups at an end of the molecular chain, represented by the formula (11), with the organosilicon compound having an olefin site and a hydroxyl group and/or a hydrolyzable silyl group bonded to a silicon atom in the molecule, the amount of the organosilicon compound having an olefin site and a hydroxyl group and/or a hydrolyzable silyl group bonded to a silicon atom in the molecule used is 1 to 5 equivalents, more preferably 1 to 3 equivalents, still more preferably about 1.2 to 1.4 equivalents per equivalent of the reactive end group (Si-H site) in the fluoropolyether-containing polymer having two monovalent groups having at least two SiH groups.

As the solvent used in the reaction of the fluoropolyether-containing polymer having two monovalent groups having at least two SiH groups at an end of the molecular chain, represented by the formula (11), with the organosilicon compound having an olefin site and a hydroxyl group and/or a hydrolyzable silyl group bonded to a silicon atom in the molecule, fluorochemical solvents are preferred. Examples of the fluorochemical solvents include 1,3-bis(trifluoromethyl)benzene, trifluoromethylbenzene, methyl nonafluorobutyl ether, methyl nonafluoroisobutyl ether, ethyl nonafluorobutyl ether, ethyl nonafluoroisobutyl ether, hydrofluoroether (HFE) solvents (tradename Novec series by 3M) such as 1,1,1,2,3,4,4,5,5,5-decafluoro-3-methoxy-2-(trifluoromethyl)pentane, and perfluoro solvents composed of completely fluorinated compounds (tradename Fluorinert series by 3M).

The amount of the solvent used is 10 to 300 parts by weight, preferably 50 to 200 parts by weight, and still more preferably about 150 parts by weight per 100 parts by weight of the fluoropolyether-containing polymer having two monovalent groups having at least two SiH groups at an end of the molecular chain, represented by the formula (11).

Examples of the hydrosilylation catalyst used in the reaction of the fluoropolyether-containing polymer having two monovalent groups having at least two SiH groups at an end of the molecular chain, represented by the formula (11), with the organosilicon compound having an olefin site and a hydroxyl group and/or a hydrolyzable silyl group bonded to a silicon atom in the molecule include platinum group metal based catalysts such as platinum black, chloroplatinic acid, alcohol-modified chloroplatinic acid, complexes of chloroplatinic acid with olefin, aldehyde, vinyl siloxane, and acetylene alcohol, tetrakis(triphenylphosphine)palladium, and chlorotris(triphenylphosphine)rhodium. Inter alia, platinum compounds such as vinyl siloxane coordination compounds are preferred.

The amount of the hydrosilylation catalyst is used in an amount to provide preferably 0.01 to 100 ppm, and more preferably 0.1 to 50 ppm of transition metal based on the weight of the fluoropolyether-containing polymer having two monovalent groups having at least two SiH groups at an end of the molecular chain, represented by the formula (11).

In one example, when the fluoropolyether-containing polymer having two monovalent groups having at least two SiH groups at an end of the molecular chain, is a compound having the following formula: 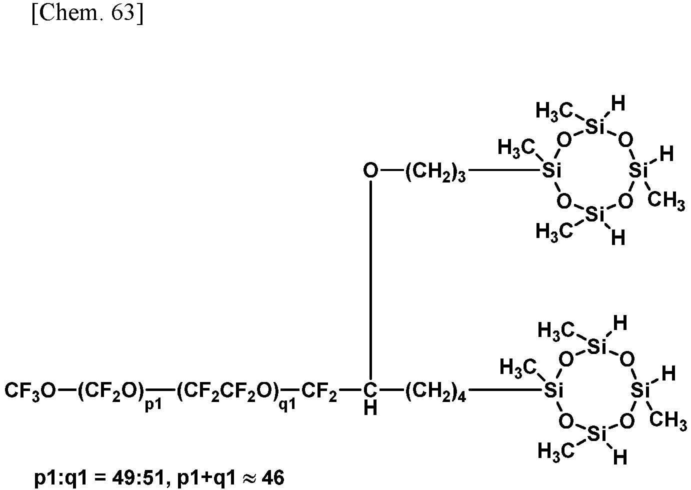 and the organosilicon compound having an olefin site and a hydroxyl group and/or a hydrolyzable silyl group bonded to a silicon atom in the molecule is 7-octenyltrimethoxysilane, a compound of the following formula is obtained.

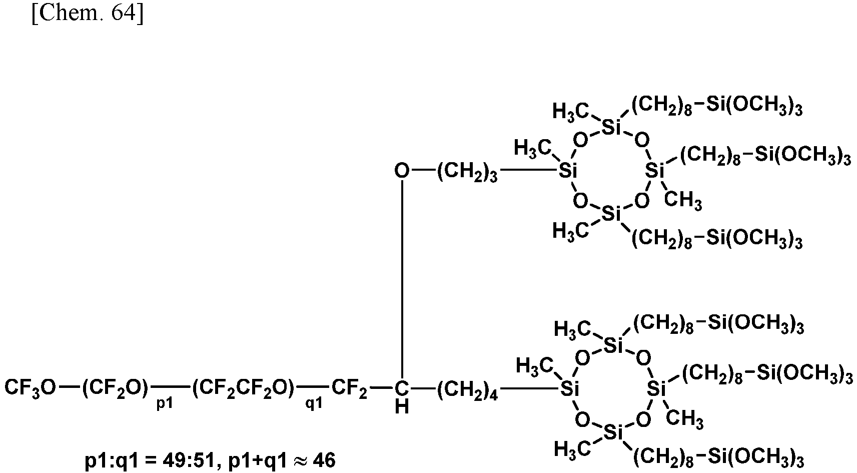

In another example, when the fluoropolyether-containing polymer having two monovalent groups having at least two SiH groups at an end of the molecular chain, is a compound having the following formula: 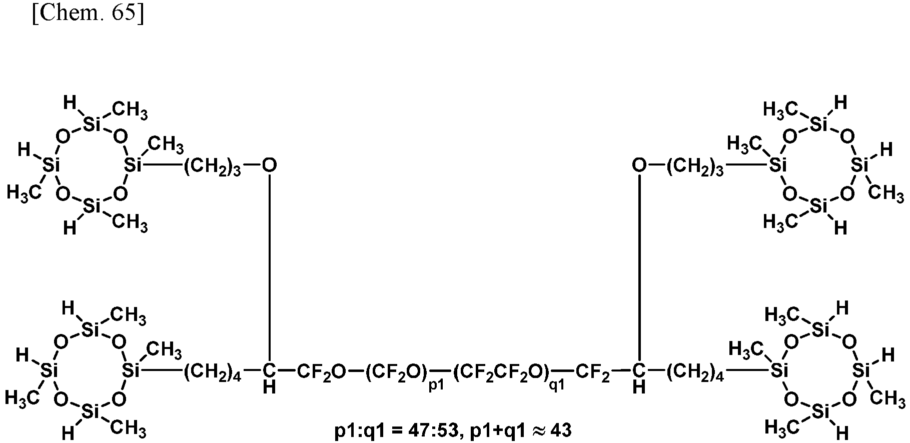 and the organosilicon compound having an olefin site and a hydroxyl group and/or a hydrolyzable silyl group bonded to a silicon atom in the molecule is 7-octenyltrimethoxysilane, a compound of the following formula is obtained.

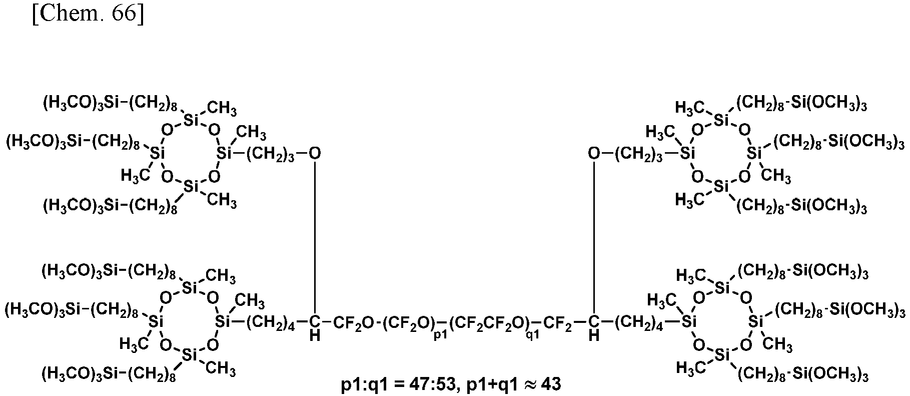

Thereafter, the solvent and unreacted reactants were distilled off in vacuum, obtaining a fluoropolyether-containing polymer represented by the formula (2) as a target compound.

An alternative method for preparing the fluoropolyether-containing polymer represented by the formula (2) is, for example, the method shown below.

In the reaction of the fluoropolyether-containing polymer having two monovalent groups having at least two SiH groups at an end of the molecular chain, represented by the formula (11), with the organosilicon compound having an olefin site and a hydroxyl group and/or a hydrolyzable silyl group bonded to a silicon atom in the molecule, an alcohol having an olefin site and a terminal hydroxyl group in the molecule is used in place of the organosilicon compound having an olefin site and a hydroxyl group and/or a hydrolyzable silyl group bonded to a silicon atom in the molecule.

The fluoropolyether-containing polymer having two monovalent groups having at least two SiH groups at an end of the molecular chain, represented by the formula (11), obtained above is dissolved in a solvent such as fluorochemical solvent, typically 1,3-bis(trifluoromethyl)benzene. An alcohol having an olefin site and a terminal hydroxyl group in the molecule is mixed therewith. The mixture is aged in the presence of a hydrosilylation catalyst, for example, a toluene solution of chloroplatinic acid/vinyl siloxane complex, at a temperature of 40 to 120°C, preferably 60 to 100°C, more preferably about 80°C for 1 to 24 hours, preferably 1 to 12 hours, more preferably 1 to 4 hours.

Here, as the alcohol having an olefin site and a terminal hydroxyl group in the molecule to be reacted with the fluoropolyether-containing polymer having two monovalent groups having at least two SiH groups at an end of the molecular chain, represented by the formula (11), a compound represented by the following general formula (13) is preferable.
[Chem. 67]

**H₂C=CH-U-OH** **(13)**

wherein U is a single bond or a C₁-C₁₀ divalent hydrocarbon group.

In the formula (13), U is a single bond or a C₁-C₁₀ divalent hydrocarbon group which may contain one or more selected from an oxygen atom, a nitrogen atom, a silicon atom, and a sulfur atom, and preferably a C₁-C₆ alkylene group which may interpose an oxygen atom.

Examples of the alcohol having an olefin site and a terminal hydroxyl group in the molecule include allyl alcohol, ethylene glycol monoallyl ether, ethylene glycol monovinyl ether, tetramethylene glycol monoallyl ether, and tetramethylene glycol monovinyl ether.

In the addition reaction of the fluoropolyether-containing polymer having two monovalent groups having at least two SiH groups at an end of the molecular chain, represented by the formula (11), with the alcohol having an olefin site and a terminal hydroxyl group in the molecule, the amount of the alcohol having an olefin site and a terminal hydroxyl group in the molecule used is 1 to 5 equivalents, more preferably 1 to 3 equivalents, still more preferably about 1.0 to 1.7 equivalents per equivalent of the reactive end group (Si-H site) in the fluoropolyether-containing polymer having two monovalent groups having at least two SiH groups.

As the solvent used in the reaction of the fluoropolyether-containing polymer having two monovalent groups having at least two SiH groups at an end of the molecular chain, represented by the formula (11), with an alcohol having an olefin site and a terminal hydroxyl group in the molecule, fluorochemical solvents are preferred. Examples of the fluorochemical solvents can include the same solvents as those exemplified above.

The amount of the solvent used is 10 to 300 parts by weight, preferably 50 to 200 parts by weight, and still more preferably about 150 parts by weight per 100 parts by weight of the fluoropolyether-containing polymer having two monovalent groups having at least two SiH groups at an end of the molecular chain, represented by the formula (11).

As the hydrosilylation catalyst in the reaction of the fluoropolyether-containing polymer having two monovalent groups having at least two SiH groups at an end of the molecular chain, represented by the formula (11), with an alcohol having an olefin site and a terminal hydroxyl group in the molecule can include the same hydrosilylation catalysts as those exemplified above. Inter alia, platinum compounds such as vinyl siloxane coordination compounds are preferred.

The amount of the hydrosilylation catalyst is used in an amount to provide preferably 0.01 to 100 ppm, and more preferably 0.1 to 50 ppm of transition metal based on the weight of the fluoropolyether-containing polymer having two monovalent groups having at least two SiH groups at an end of the molecular chain, represented by the formula (11).

By the reaction of the fluoropolyether-containing polymer having two monovalent groups having at least two SiH groups at an end of the molecular chain, represented by the formula (11), with the alcohol having an olefin site and a terminal hydroxyl group, a fluoropolyether-containing polymer having at least four OH groups at an end of the molecular chain, represented by the following general formula (14), is obtained. 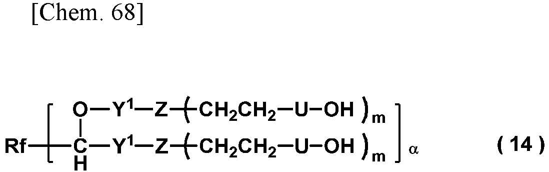 wherein Rf, Y¹, Z, U, m, and α are the same as described above.

Preferable examples of the fluoropolyether-containing polymer having at least four OH groups at an end of the molecular chain, represented by the formula (14), are shown below. 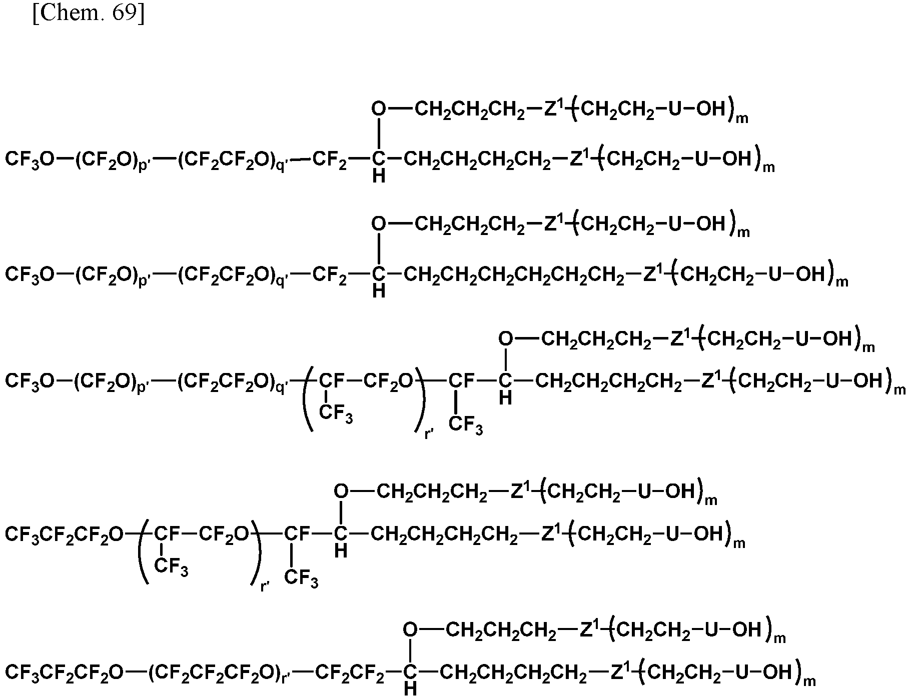 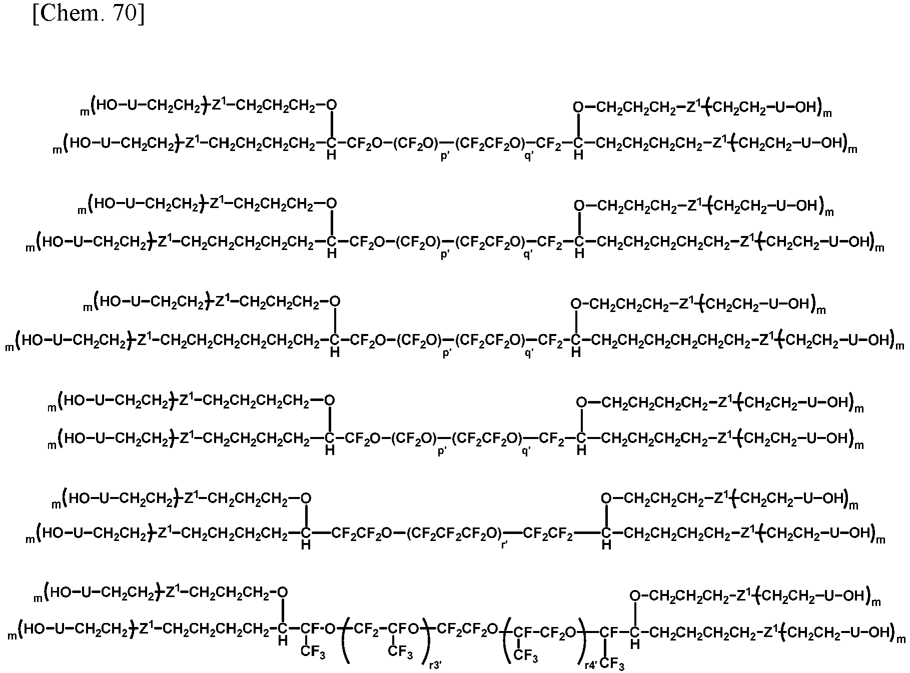 wherein U, m, p', q', r', r3', and r4' and the sum thereof in each formula are the same as described above, and individual repeat units shown in parentheses with p', q', and r' may be randomly bonded. Z¹ independently has any one of the following formulae: 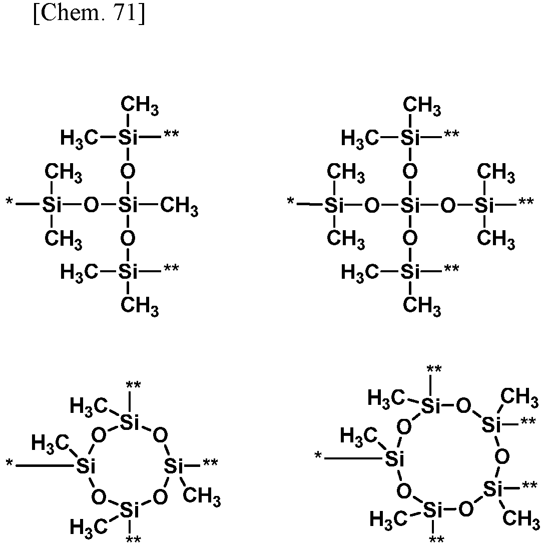 wherein ** is a bond bonded to a terminal carbon atom in a unit enclosed by m, and * is a bond bonded to a remaining carbon atom.

Next, the fluoropolyether-containing polymer having at least four OH groups at an end of the molecular chain, represented by the formula (14), obtained above, and an organosilicon compound having an isocyanate site and a hydroxyl group and/or a hydrolyzable silyl group bonded to a silicon atom in the molecule such as 3-(isocyanatopropyl)trimethoxysilane are dissolved in a solvent such as fluorochemical solvent, typically 1,3-bis(trifluoromethyl)benzene, and mixed. The mixture is aged in the presence of a Lewis acid catalyst, for example, tetrakis(2-ethylhexyloxy)titanium, at a temperature of 20 to 80°C, preferably 40 to 60°C, more preferably about 50°C for a time of 1 to 24 hours, preferably 1 to 10 hours, more preferably about 3 hours. There is obtained a fluoropolyether-containing polymer having the formula (2). In the organosilicon compound having an isocyanate site and a hydrolyzable silyl group in the molecule, when an organosilicon compound having a halogen atom as a hydrolyzable silyl group is used, the substituent (halogen atom) on the silyl group may be then converted to, for example, an alkoxy group such as a methoxy group as another hydrolyzable group.

Here, as the organosilicon compound having an isocyanate site and a hydroxyl group and/or a hydrolyzable silyl group bonded to a silicon atom in the molecule to be reacted with the fluoropolyether-containing polymer having at least four OH groups at an end of the molecular chain, represented by the formula (14), a compound represented by the following general formula (15) is preferable. 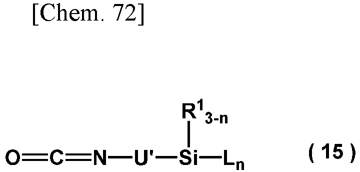 wherein R¹, L, and n are as described above, and U' is a single bond or a C₁-C₁₀ divalent hydrocarbon group.

In the formula (15), U' is a single bond or a C₁-C₁₀ divalent hydrocarbon group, and preferably a C₁-C₆ alkylene group.

Examples of the organosilicon compound having an isocyanate site and a hydroxyl group and/or a hydrolyzable silyl group bonded to a silicon atom in the molecule include 3-(isocyanatopropyl)trimethoxysilane and 3-(isocyanatopropyl)triethoxysilane.

In the addition reaction of the fluoropolyether-containing polymer having at least four OH groups at an end of the molecular chain, represented by the formula (14), with the organosilicon compound having an isocyanate site and a hydroxyl group and/or a hydrolyzable silyl group bonded to a silicon atom in the molecule, the amount of the organosilicon compound having an isocyanate site and a hydroxyl group and/or a hydrolyzable silyl group bonded to a silicon atom in the molecule used is 1 to 5 equivalents, more preferably 1 to 3 equivalents, still more preferably about 1 to 2 equivalents per equivalent of the reactive end group (OH site) in the fluoropolyether-containing polymer having at least four OH groups at an end of the molecular chain.

As the solvent used in the reaction of the fluoropolyether-containing polymer having at least four OH groups at an end of the molecular chain, represented by the formula (14), with an organosilicon compound having an isocyanate site and a hydroxyl group and/or a hydrolyzable silyl group bonded to a silicon atom in the molecule, fluorochemical solvents are preferred. Examples of the fluorochemical solvents can include the same solvents as those exemplified above.

The amount of the solvent used is 10 to 300 parts by weight, preferably 50 to 200 parts by weight, and still more preferably about 100 to 150 parts by weight per 100 parts by weight of the fluoropolyether-containing polymer having at least four OH groups at an end of the molecular chain, represented by the formula (14).

In the reaction of the fluoropolyether-containing polymer having at least four OH groups at an end of the molecular chain, represented by the formula (14), with the organosilicon compound having an isocyanate site and a hydroxyl group and/or a hydrolyzable silyl group bonded to a silicon atom in the molecule, examples of the Lewis acid catalyst include alkyltin ester compounds such as dibutyltin diacetate, dibutyltin dilaurate, dibutyltin dioctoate, dioctyltin diacetate, dioctyltin dilaurate, dioctyltin dioctoate, and stannous dioctoate, titanates or titanium chelate compounds such as tetraisopropoxytitanium, tetra n-butoxytitanium and tetrakis(2-ethylhexyloxy)titanium [also referred to as tetrakis(2-ethylhexyl)orthotitanate], dipropoxybis(acetylacetona)titanium, and titanium isopropoxyoctylene glycol, zirconium tetraacetylacetonate, zirconium tributoxymonoacetylacetonate, zirconium monobutoxyacetylacetonate bis(ethylacetoacetate), zirconium dibutoxybis(ethylacetoacetate), zirconium tetraacetylacetonate, and zirconium chelate compounds. These Lewis acid catalysts can be used singly or in combination of two or more kinds thereof.

The amount of the Lewis acid catalyst used can be 0.01 to 2 wt%, preferably 0.03 to 1 wt%, based on the total weight of the reaction components.

Thereafter, the solvent and unreacted reactants were distilled off in vacuum, obtaining a fluoropolyether-containing polymer represented by the formula (2) as a target compound.

### [Surface treating agent]

The invention provides a surface treating agent comprising a fluoropolyether-containing polymer having a hydroxyl group and/or a hydrolyzable silyl group bonded to a silicon atom, represented by the formula (1), especially a fluoropolyether-containing polymer having a hydroxyl group and/or a hydrolyzable silyl group bonded to a silicon atom, represented by the formula (2). The surface treating agent may also comprise a partial (hydrolytic) condensate which is obtained by condensing the hydroxyl group on the fluoropolyether-containing polymer, or a hydroxyl group resulting from partial hydrolysis of the hydrolyzable end group on the fluoropolyether-containing polymer in a well-known manner. Here, the "partial (hydrolytic) condensate" refers to a partial condensate or a partial hydrolytic condensate.

The surface treating agent of the present invention preferably contains 0.005 to 80 wt%, particularly 0.01 to 75 wt% of the fluoropolyether-containing polymer and/or its partial (hydrolytic) condensate.

To the surface treating agent, a hydrolytic condensation catalyst may be added as necessary. Suitable hydrolytic condensation catalysts include organotin compounds such as dibutyltin dimethoxide and dibutyltin dilaurate, organotitanium compounds such as tetra-n-butyl titanate, organic acids such as acetic acid, methanesulfonic acid, and fluorine-modified carboxylic acids, and inorganic acids such as hydrochloric acid and sulfuric acid. Of these, acetic acid, tetra-n-butyl titanate, dibutyltin dilaurate, and fluorine-modified carboxylic acids are desirable.

The hydrolytic condensation catalyst may be added in a catalytic amount, typically 0.01 to 5 parts, more preferably 0.1 to 1 part by weight per 100 parts by weight of the fluoropolyether-containing polymer and/or its partial (hydrolytic) condensate.

The surface treating agent may be used as a solvent-free composition, but may comprise an appropriate solvent. Suitable solvents include fluorine-modified aliphatic hydrocarbon solvents such as perfluoroheptane and perfluorooctane; fluorine-modified aromatic hydrocarbon solvents such as 1,3-bis(trifluoromethyl)benzene; fluorine-modified ether solvents such as methyl perfluorobutyl ether, ethyl perfluorobutyl ether, and perfluoro(2-butyltetrahydrofuran); fluorine-modified alkylamine solvents such as perfluorotributylamine and perfluorotripentylamine; hydrocarbon solvents such as pentane, hexane, heptane, isododecane, isononane, isooctane, cyclohexane, toluene, and xylene; ketone solvents such as acetone, methyl ethyl ketone, methyl isobutyl ketone, and cyclohexanone; ether-based organic solvents such as diethyl ether, diisopropyl ether, dibutyl ether, tetrahydrofuran, propylene glycol monomethyl ether, propylene glycol monomethyl ether acetate, and tetraethylene glycol dimethyl ether; ester-based organic solvents such as ethyl acetate, propyl acetate, and butyl acetate; and alcohol-based organic solvents such as methanol, ethanol, isopropanol, and butanol. Of these, fluorine-free organic solvents (non-fluorine organic solvents) are preferred for environmental concerns and health concerns of workers, and the like, and ether-based organic solvents such as diethyl ether, diisopropyl ether, dibutyl ether, tetrahydrofuran, propylene glycol monomethyl ether, propylene glycol monomethyl ether acetate, and tetraethylene glycol dimethyl ether and alcohol-based organic solvents such as methanol, ethanol, isopropanol, and butanol are more preferred for improved solubility of the fluoropolyether-containing polymer of the present invention. Among them, dibutyl ether, propylene glycol monomethyl ether, propylene glycol monomethyl ether acetate, and tetraethylene glycol dimethyl ether, which are in Category IV, Class II petroleums and Class III petroleums with a lower risk in the classification of hazardous materials in the Fire Service Act, are still more preferred from the viewpoint of safety.

The solvents may be used in admixture of two or more while it is preferred that the fluoropolyether-containing polymer and its partial (hydrolytic) condensate be uniformly dissolved in the solvent. The amount of the solvent used is not particularly limited, and may be diluted at an arbitrary ratio according to the application, but for example, it is preferable to contain 25 to 1,999,900 parts by weight per 100 parts by weight of the fluoropolyether-containing polymer of the present invention (and its partial (hydrolytic) condensate).

In the surface treating agent of the present invention, any additive can be added as long as the effect of the present invention is not impaired. Specific examples thereof include rust inhibitors, surfactants, antioxidants, antistatic agents, antibacterial agents, silane coupling agents, and primer components. Many of these additives can be uniformly dissolved in a fluorine-free organic solvent.

The surface treating agent of the present invention preferably contains 0.005 to 80 wt% of the fluoropolyether-containing polymer and/or its partial (hydrolytic) condensate, and the balance is preferably a fluorine-free organic solvent, from the viewpoint of stability and handleability of the surface treating agent.

The surface treating agent of the present invention may be applied to a substrate by any well-known techniques such as brush coating, dipping, spraying and evaporation. In the case of evaporation, the heating mode may be either resistance heating or EB heating and is not particularly limited. The curing temperature varies with a particular curing technique. For example, in the case of direct coating (brush coating, dipping or spraying), suitable curing conditions include a temperature of 25 to 200°C, especially 25 to 80°C for 30 minutes to 36 hours, especially 1 to 24 hours. In addition, in the case of application by evaporation, the temperature is desirably in the range of 20 to 200°C. Humid curing conditions are also useful. The cured film typically has a thickness of typically 0.1 to 100 nm, particularly 1 to 20 nm although the thickness depends on the type of substrate. Also, in the case of spray coating, for example, a procedure involving diluting the agent with a solvent, particularly a non-fluorine organic solvent, having water previously added thereto, for thereby effecting hydrolysis to generate Si-OH, and thereafter, spraying the dilution is recommended because the coating rapidly cures.

The film thickness can be measured by means such as a spectral reflectance method, an X-ray reflectance method, a spectroscopic ellipsometry method, or a fluorescent X-ray method.

The substrate to be treated with the surface treating agent of the present invention is not particularly limited, and may be made of any desired materials including paper, fabric, metals, metal oxides, glass, plastics, ceramics, and quartz. The surface treating agent of the present invention can impart water/oil-repellent property, abrasion resistance, chemical resistance, parting, low dynamic friction property, and anti-fouling property to these substrates. In particular, excellent anti-fouling performance can be imparted without impairing the transparency and texture of various articles, the substrate can be protected from intrusion of chemicals and the like, and the anti-fouling performance can be maintained for a long period of time. Examples of the article to be treated with the surface treating agent of the present invention include optical articles, films, glass, quartz substrates, and antireflective films. Particularly, the surface treating agent is used for touch panels, antireflection-treated articles, glass, tempered glass, sapphire glass, quartz glass, and SiO₂-treated substrates.

Articles which may be treated with the surface treating agent of the present invention include car navigation systems, mobile phones, smartphones, digital cameras, digital video cameras, PDA, portable audio players, car audio players, game consoles, eyeglass lenses, camera lenses, lens filters, sunglasses, medical instruments (e.g., gastroscopes), copiers, personal computers, LC displays, organic EL displays, plasma displays, touch panel displays, protective film, antireflective film, and other optical articles. The surface treating agent of the present invention is effective for preventing fingerprints and sebum from adhering to the articles and also for imparting scratch resistance or abrasion resistance. Therefore, it is particularly useful as a water/oil repellent layer on touch panel displays and antireflective films.

The surface treating agent of the present invention is also used for anti-staining coatings for various housing facilities such as kitchen sinks, washbowls, water faucets, mirrors, bathroom interiors, and bathtubs; anti-staining coatings on glazing or strengthened glass and head lamp covers in automobiles, trains and aircraft; water/oil repellent coatings on building exteriors; coatings for preventing oil contamination on kitchen ware; anti-staining, anti-sticking, anti-graffiti coatings in telephone booths; anti-fingerprint coatings on artistic objects; anti-fingerprint coatings on compact discs and DVD's; mold parting agents; paint additives; and resin modifiers. The agent is also effective for modifying the flow and dispersion of inorganic fillers, and for improving the lubricity of tape and film.

### EXAMPLES

Synthesis Examples, Examples and Comparative Examples are given below for illustrating the invention, but the invention is not limited by Examples. In the following Examples, each repeat units shown in parentheses in the fluoropolyether group in the formula may be randomly bonded. Further, the film thickness is a value measured by a spectroscopic ellipsometry method using a spectroscopic ellipsometer.

### [Synthesis Example 1]

A reactor was charged with 272 ml of a 0.5 M THF solution of 3-butenylmagnesium bromide (1.4×10⁻¹ mol). With stirring, a mixture of 200 g (4.5×10⁻² mol) of a compound represented by the following formula (A):

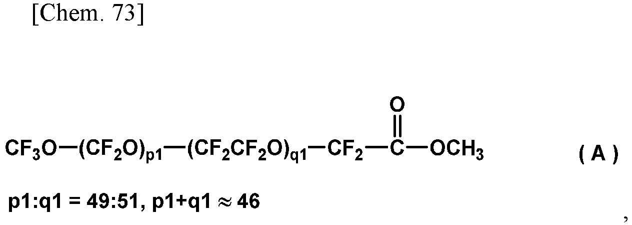

400 g of Asahiklin AC6000, and 200 g of PF5060 was added dropwise to the reactor, which was heated at 50°C for 6 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 193 g of a fluoropolyether-containing polymer represented by the following formula (B).

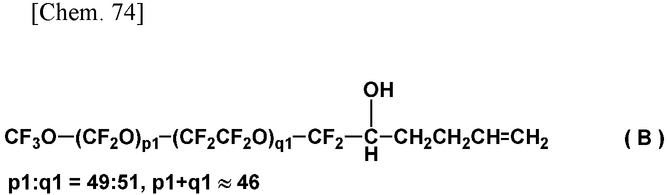

In a reactor, 100 g (2.3×10⁻² mol) of the compound represented by the formula (B) obtained above, 11 g (9.2×10⁻² mol) of allyl bromide and 0.17 g (4.6×10⁻⁴ mol) of tetrabutylammonium iodide were mixed. Subsequently, 18 g (1.4×10⁻¹ mol) of 30 wt% sodium hydroxide aqueous solution was added. The solution was then heated at 50°C for 24 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 97 g of a fluoropolyether-containing polymer represented by the following formula (C).

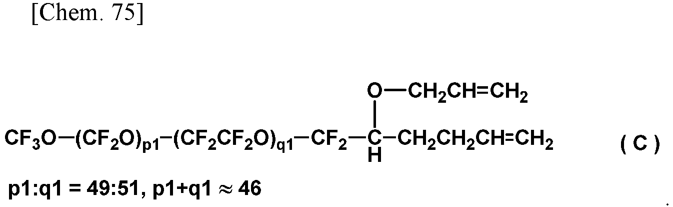

In a reactor, 80 g (1.8×10⁻² mol) of the compound represented by the formula (C) obtained above, 120 g of 1,3-bis(trifluoromethyl)benzene, 43 g (1.8×10⁻¹ mol) of 2,4,6,8-tetramethylcyclotetrasiloxane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (D).

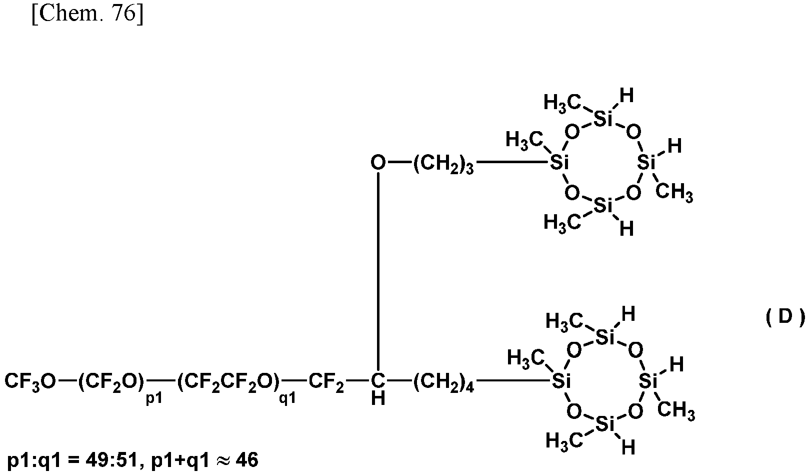

In a reactor, 80 g (1.6×10⁻² mol) of the compound represented by the formula (D) obtained above, 120 g of 1,3-bis(trifluoromethyl)benzene, 28 g (1.2×10⁻¹ mol) of 7-octenyltrimethoxysilane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (E).

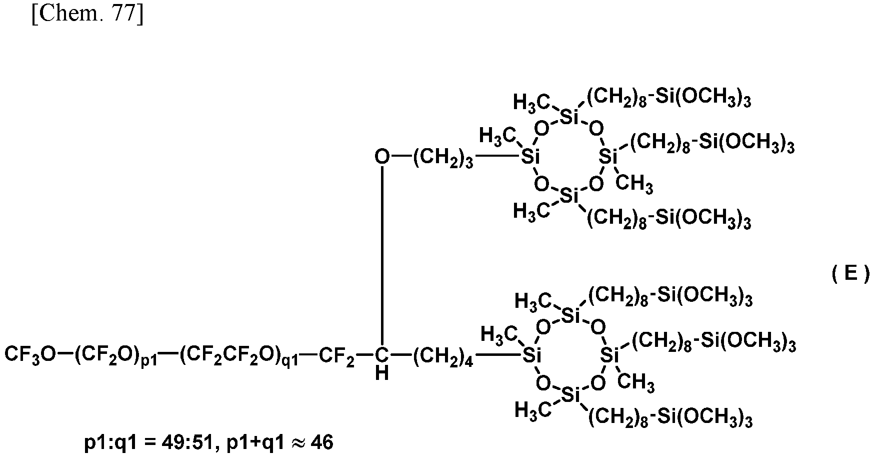

### [Synthesis Example 2]

In a reactor, 80 g (1.8×10⁻² mol) of the compound represented by the following formula (C): 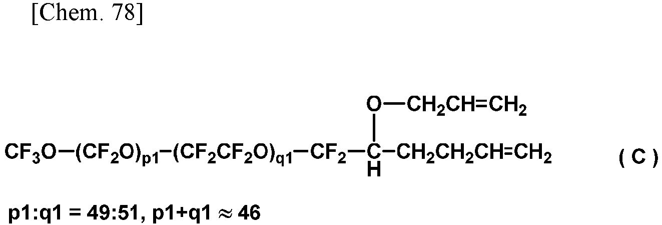 obtained in the same manner as in Synthesis Example 1, 120 g of 1,3-bis(trifluoromethyl)benzene, 54 g (1.8×10⁻¹ mol) of 2,4,6,8,10-pentamethylcyclopentasiloxane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours.

Thereafter, the solvent and unreacted reactants were distilled off in vacuum, obtaining 84 g of a fluoropolyether-containing polymer represented by the following formula (F).

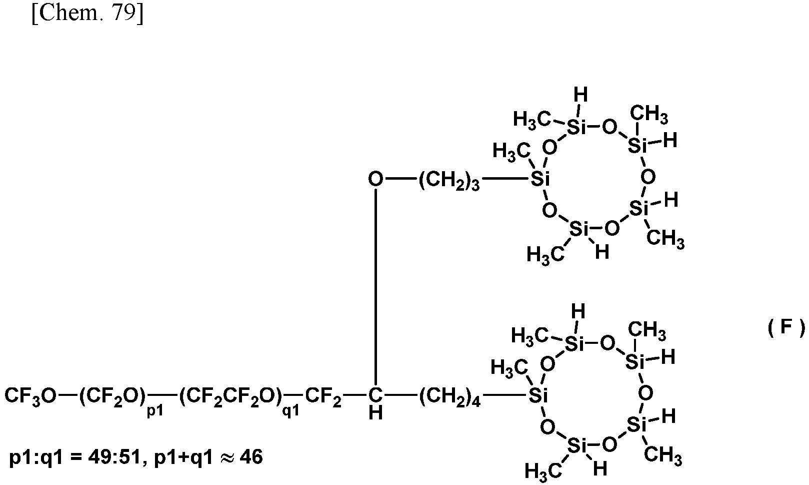

In a reactor, 80 g (1.6×10⁻² mol) of the compound represented by the formula (F) obtained above, 120 g of 1,3-bis(trifluoromethyl)benzene, 40 g (1.7×10⁻¹ mol) of 7-octenyltrimethoxysilane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (G).

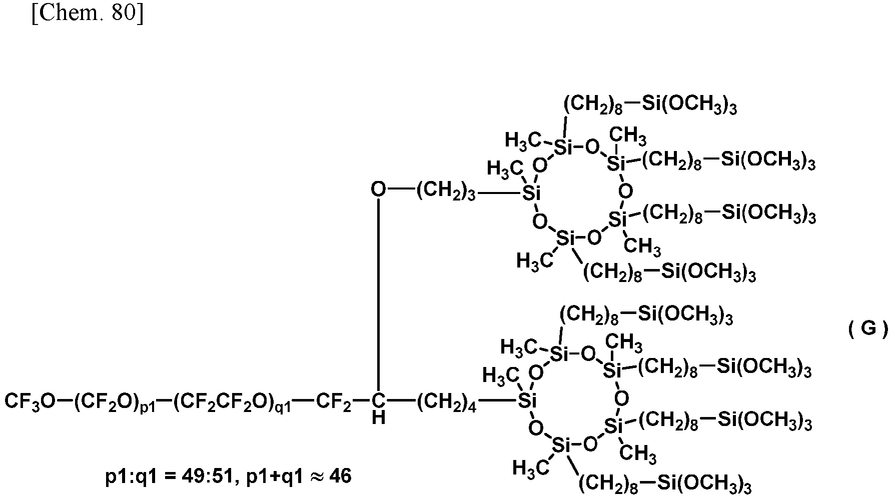

### [Synthesis Example 3]

In a reactor, 80 g (1.8×10⁻² mol) of the compound represented by the following formula (C): 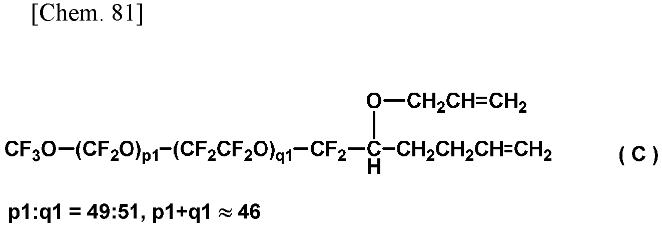 obtained in the same manner as in Synthesis Example 1, 120 g of 1,3-bis(trifluoromethyl)benzene, 48 g (1.8×10⁻¹ mol) of methyltris(dimethylsiloxy)silane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (H).

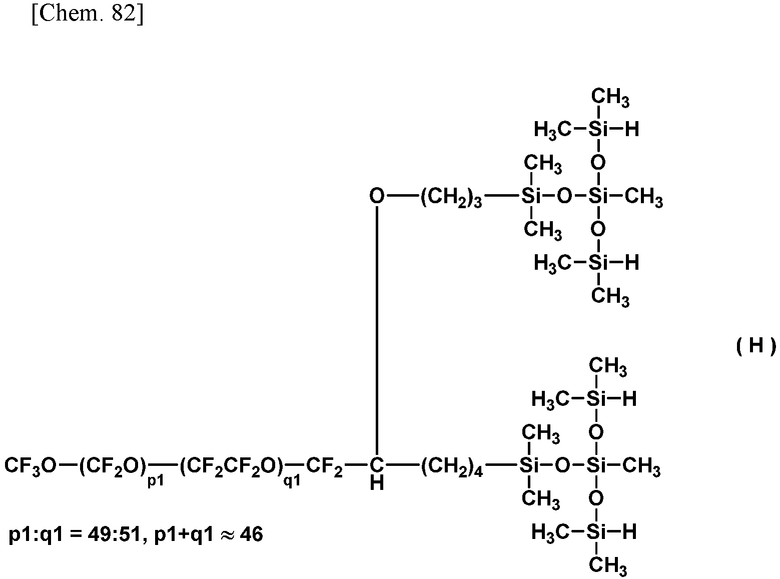

In a reactor, 80 g (1.6×10⁻² mol) of the compound represented by the formula (H) obtained above, 120 g of 1,3-bis(trifluoromethyl)benzene, 19 g (8.2×10⁻² mol) of 7-octenyltrimethoxysilane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (I).

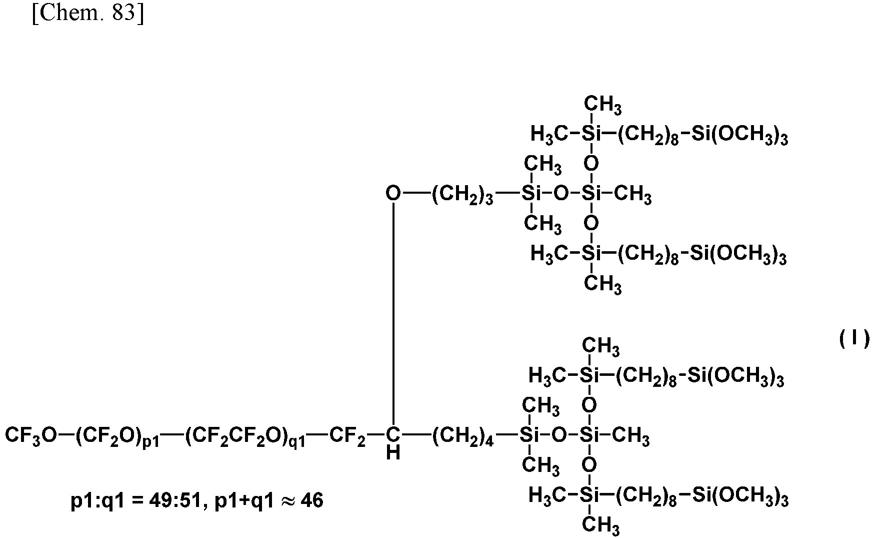

### [Synthesis Example 4]

In a reactor, 80 g (1.8×10⁻² mol) of the compound represented by the following formula (C): 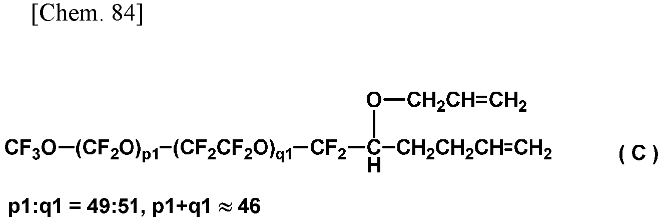 obtained in the same manner as in Synthesis Example 1, 120 g of 1,3-bis(trifluoromethyl)benzene, 59 g (1.8×10⁻¹ mol) of tetrakis(dimethylsilyloxy)silane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (J).

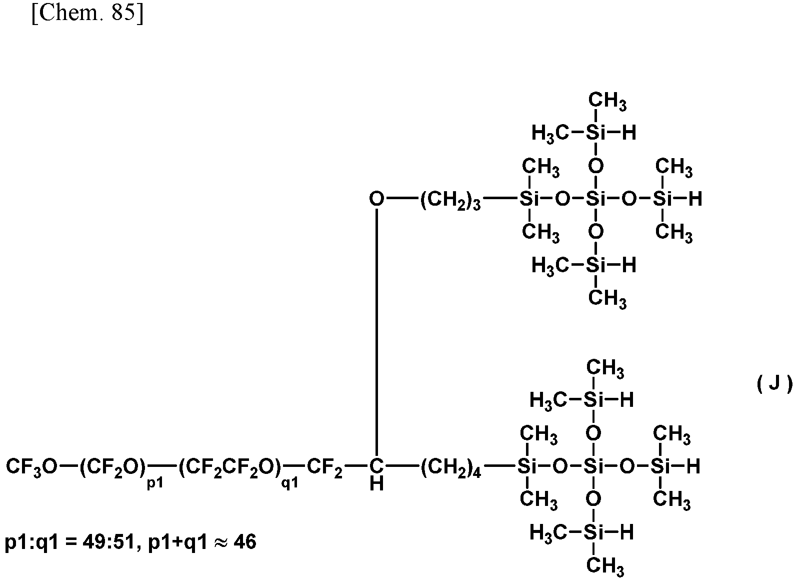

In a reactor, 80 g (1.6×10⁻² mol) of the compound represented by the formula (J) obtained above, 120 g of 1,3-bis(trifluoromethyl)benzene, 29 g (1.2×10⁻¹ mol) of 7-octenyltrimethoxysilane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (K).

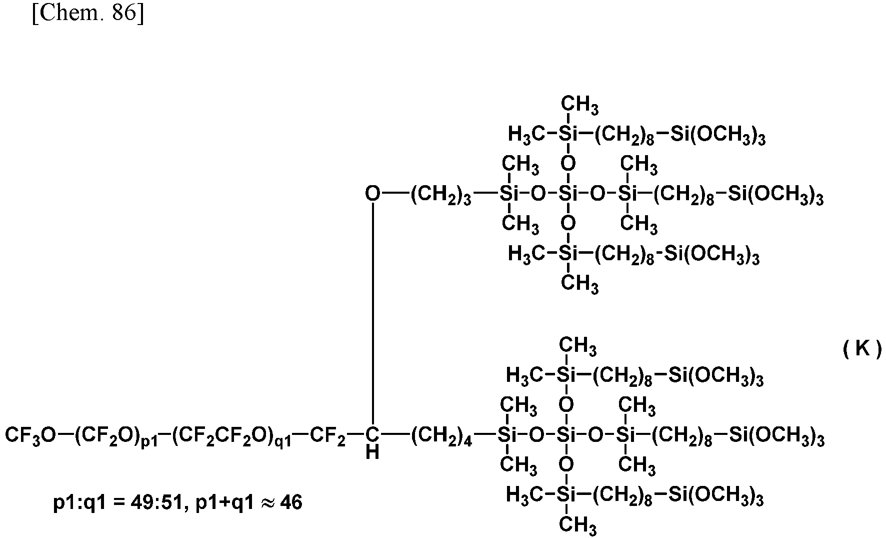

### [Synthesis Example 5]

In a reactor, 80 g (1.8×10⁻² mol) of the compound represented by the following formula (C): 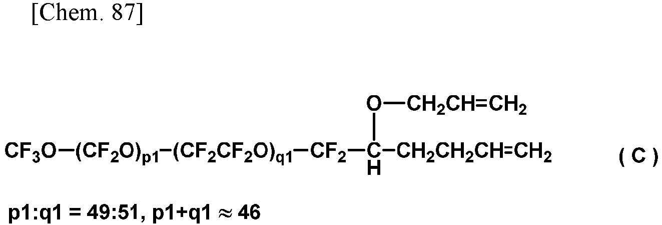 obtained in the same manner as in Synthesis Example 1, 120 g of 1,3-bis(trifluoromethyl)benzene, 116 g (1.8×10⁻¹ mol) of 1,1,1,3,5,7,9,11,13,15,17,19,19,19-tetradecamethyldecasiloxane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (L).

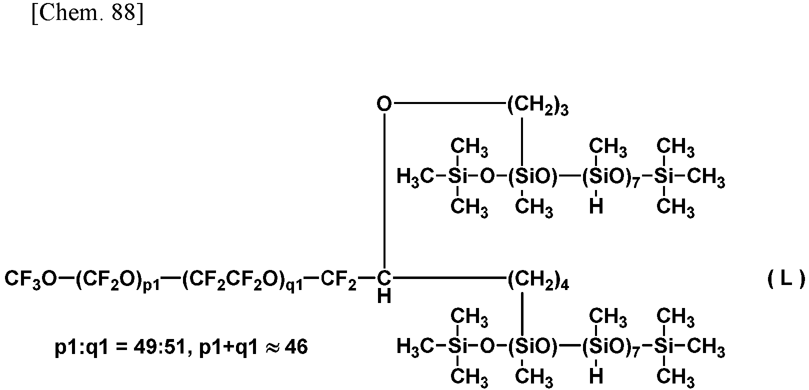

In a reactor, 80 g (1.4×10⁻² mol) of the compound represented by the formula (L) obtained above, 120 g of 1,3-bis(trifluoromethyl)benzene, 59 g (2.5×10⁻¹ mol) of 7-octenyltrimethoxysilane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (M).

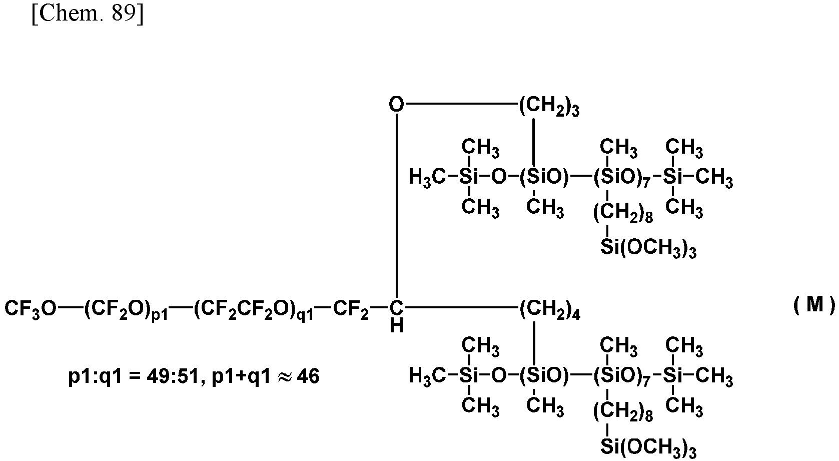

### [Synthesis Example 6]

In a reactor, 80 g (1.6×10⁻² mol) of the compound represented by the following formula (D): 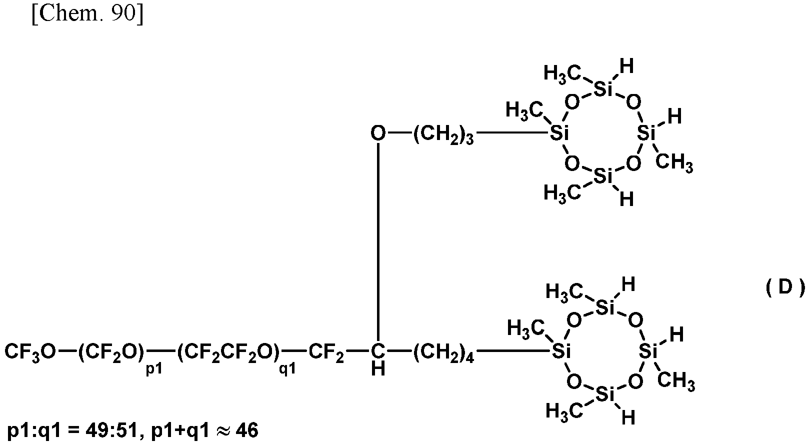 obtained in the same manner as in Synthesis Example 1, 120 g of 1,3-bis(trifluoromethyl)benzene, 26 g (1.3×10⁻¹ mol) of 5-hexenyltrimethoxysilane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (N).

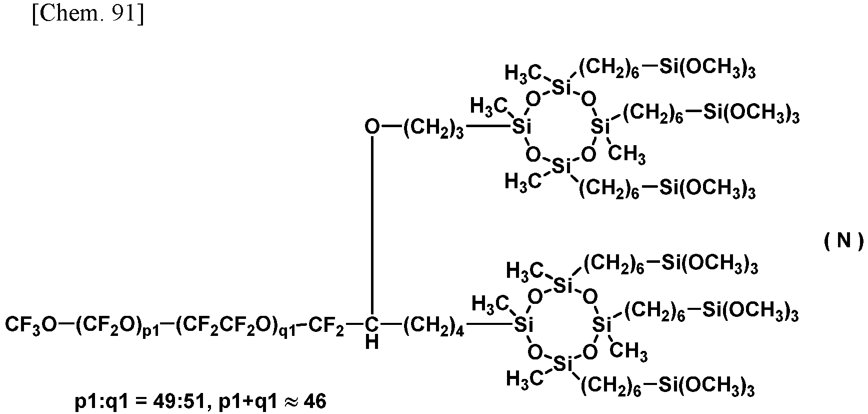

### [Synthesis Example 7]

In a reactor, 80 g (1.6×10⁻² mol) of the compound represented by the following formula (D): 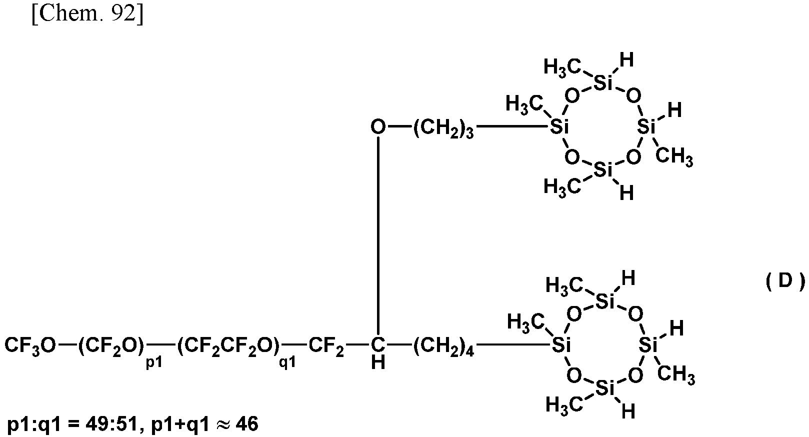 obtained in the same manner as in Synthesis Example 1, 120 g of 1,3-bis(trifluoromethyl)benzene, 16 g (1.6×10⁻¹ mol) of ethylene glycol monoallyl ether, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 2 hours. Thereafter, the solvent and unreacted reactants were distilled off in vacuum, obtaining 84 g of a fluoropolyether-containing polymer represented by the following formula (O).

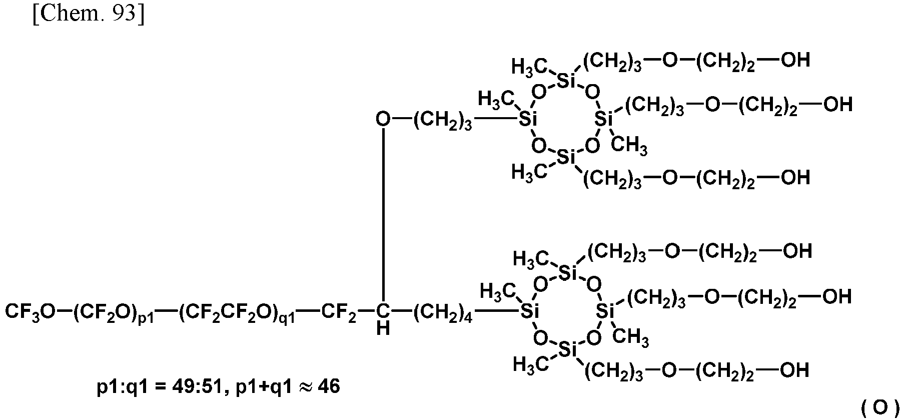

In a reactor, 80 g (1.4×10⁻² mol) of the compound having the following formula (O), 80 g of 1,3-bis(trifluoromethyl)benzene, 26 g (1.3×10⁻¹ mol) of 3-(isocyanatopropyl)trimethoxysilane, and 4.8×10⁻² g (8.5×10⁻⁵ mol) of tetrakis(2-ethylhexyloxy)titanium were mixed. The solution was aged at 50°C for 3 hours. Thereafter, the solvent and unreacted reactants were distilled off in vacuum, obtaining 84 g of a fluoropolyether-containing polymer represented by the following formula (P).

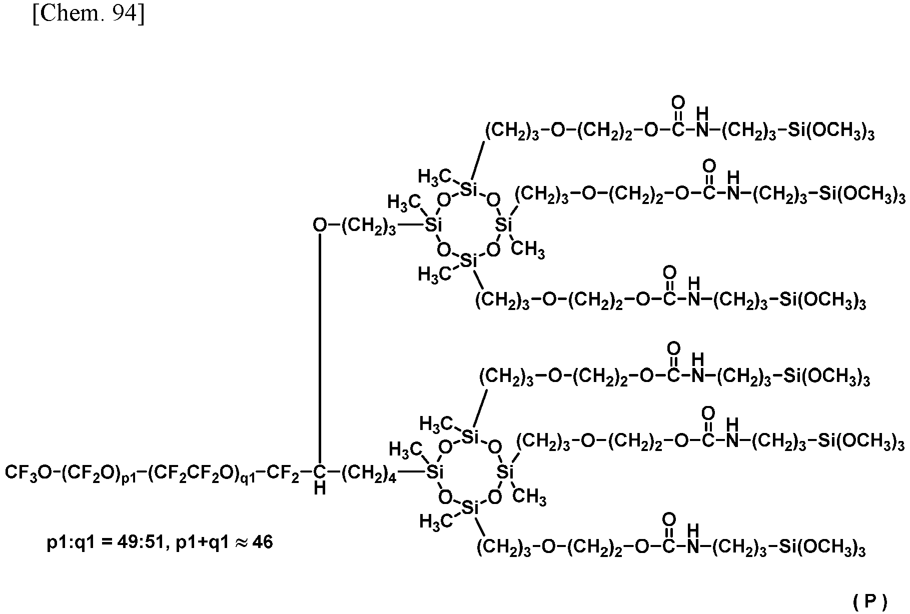

### [Synthesis Example 8]

A reactor was charged with 600 ml of a 0.5 M THF solution of 3-butenylmagnesium bromide (3.0×10⁻¹ mol). With stirring, a mixture of 200 g (1.0×10⁻¹ mol) of a compound represented by the following formula (Q):

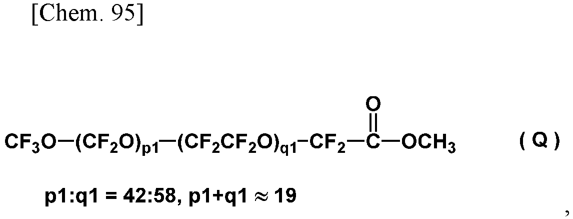

400 g of Asahiklin AC6000, and 200 g of PF5060 was added dropwise to the reactor, which was heated at 50°C for 6 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 193 g of a fluoropolyether-containing polymer represented by the following formula (R).

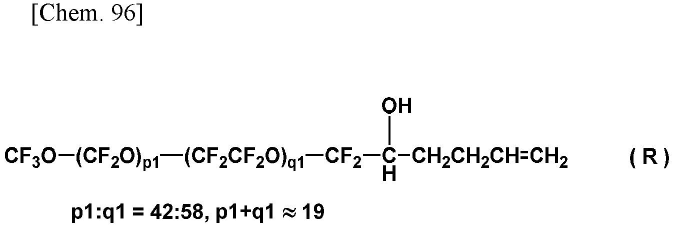

In a reactor, 100 g (4.9×10⁻² mol) of the compound represented by the formula (R) obtained above, 24 g (2.0×10⁻¹ mol) of allyl bromide and 0.36 g (9.8×10⁻⁴ mol) of tetrabutylammonium iodide were mixed. Subsequently, 39 g (2.9×10⁻¹ mol) of 30 wt% sodium hydroxide aqueous solution was added. The solution was then heated at 50°C for 24 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 97 g of a fluoropolyether-containing polymer represented by the following formula (S).

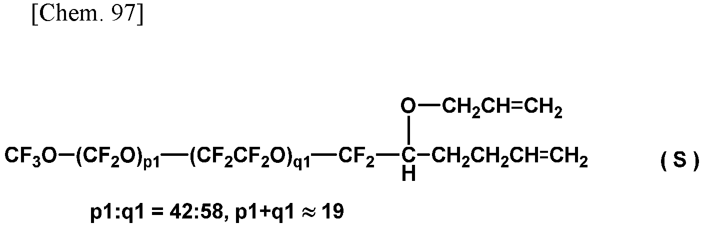

In a reactor, 80 g (3.9×10⁻² mol) of the compound represented by the formula (S) obtained above, 120 g of 1,3-bis(trifluoromethyl)benzene, 94 g (3.9×10⁻¹ mol) of 2,4,6,8-tetramethylcyclotetrasiloxane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (T).

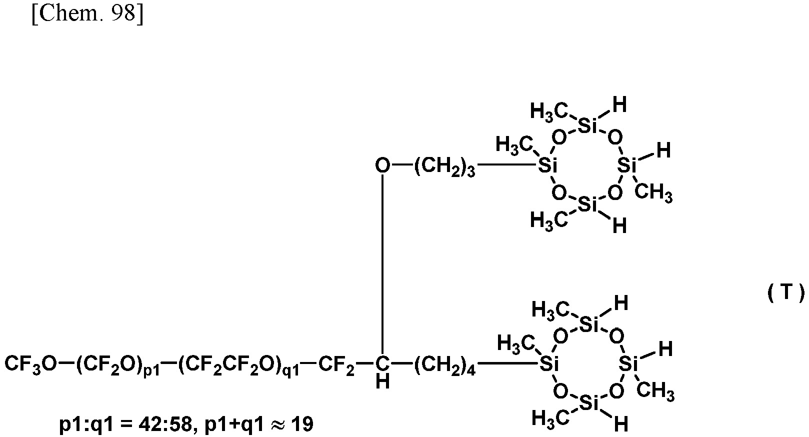

In a reactor, 80 g (3.1×10⁻² mol) of the compound represented by the formula (T) obtained above, 120 g of 1,3-bis(trifluoromethyl)benzene, 56 g (2.4×10⁻¹ mol) of 7-octenyltrimethoxysilane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (U).

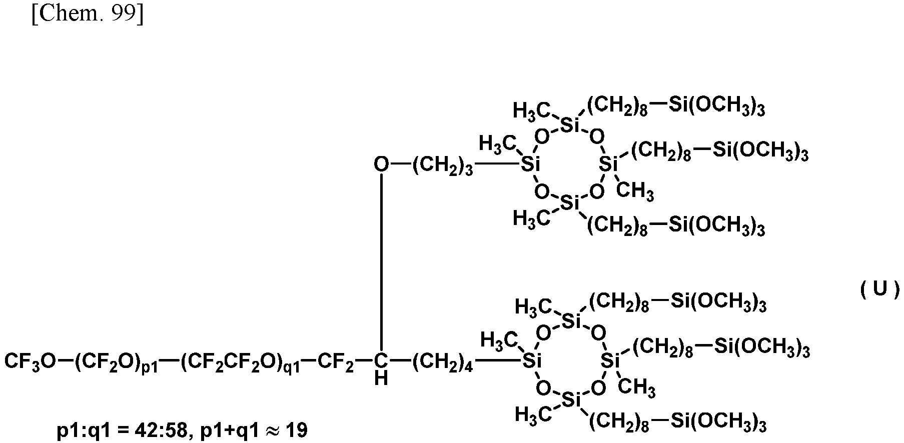

### [Synthesis Example 9]

A reactor was charged with 182 ml of a 0.5 M THF solution of 3-butenylmagnesium bromide (9.1×10⁻² mol). With stirring, a mixture of 200 g (3.2×10⁻² mol) of a compound represented by the following formula (V):

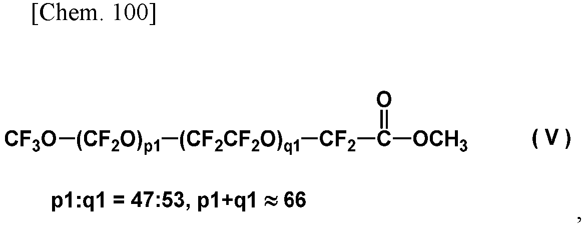

400 g of Asahiklin AC6000, and 200 g of PF5060 was added dropwise to the reactor, which was heated at 50°C for 6 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 193 g of a fluoropolyether-containing polymer represented by the following formula (W).

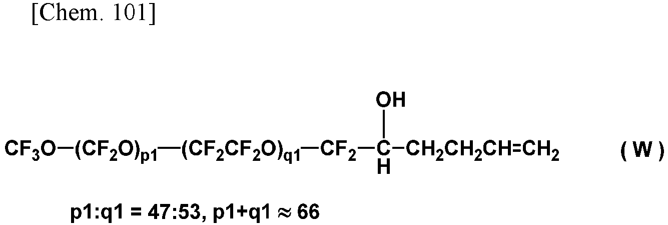

In a reactor, 100 g (1.6×10⁻² mol) of the compound represented by the formula (W) obtained above, 8 g (6.6×10⁻² mol) of allyl bromide and 0.12 g (3.2×10⁻⁴ mol) of tetrabutylammonium iodide were mixed. Subsequently, 13 g (9.8×10⁻² mol) of 30 wt% sodium hydroxide aqueous solution was added. The solution was then heated at 50°C for 24 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing is recovered again. The residual solvent was distilled off in vacuum, obtaining 97 g of a fluoropolyether-containing polymer represented by the following formula (X).

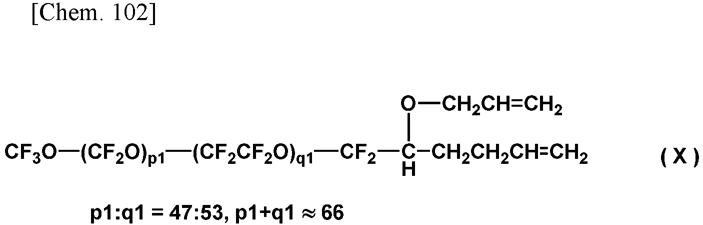

In a reactor, 80 g (1.3×10⁻² mol) of the compound represented by the formula (X) obtained above, 120 g of 1,3-bis(trifluoromethyl)benzene, 39 g (1.3×10⁻¹ mol) of 2,4,6,8,10-pentamethylcyclopentasiloxane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (Y).

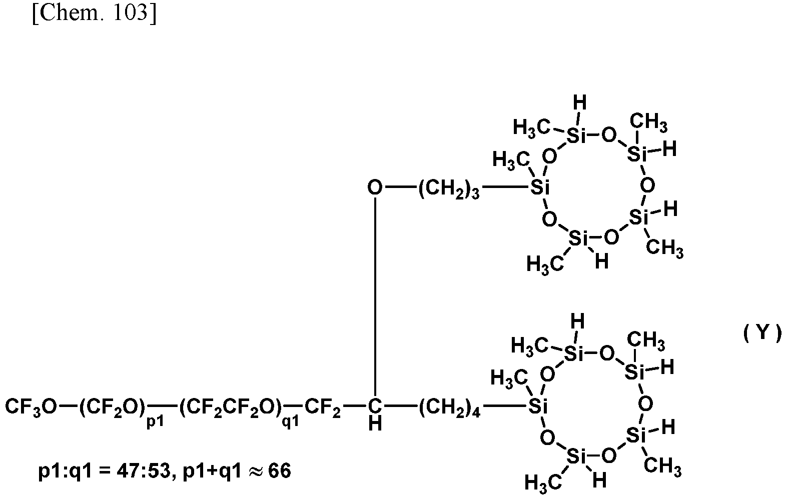

In a reactor, 80 g (1.1×10⁻² mol) of the compound represented by the formula (Y) obtained above, 120 g of 1,3-bis(trifluoromethyl)benzene, 26 g (1.1×10⁻¹ mol) of 7-octenyltrimethoxysilane, and 8.0×10⁻² g of a toluene solution of platinum-1,3-divinyl-tetramethyldisiloxane complex (chloroplatinic acid/vinyl siloxane complex) (containing 2.4×10⁻⁷ mol of Pt) were mixed. The solution was aged at 80°C for 24 hours. Thereafter, the solvent and unreacted reactants were distilled off in vacuum, obtaining 84 g of a fluoropolyether-containing polymer represented by the following formula (Z).

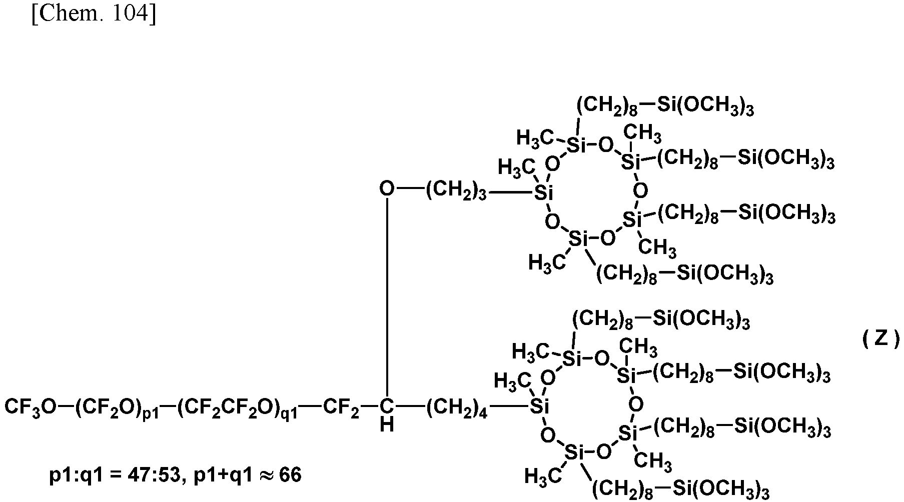

### [Synthesis Example 10]

A reactor was charged with 132 ml of a 0.5 M THF solution of 3-butenylmagnesium bromide (6.6×10⁻² mol). With stirring, a mixture of 100 g (2.2×10⁻² mol) of a compound represented by the following formula (a):

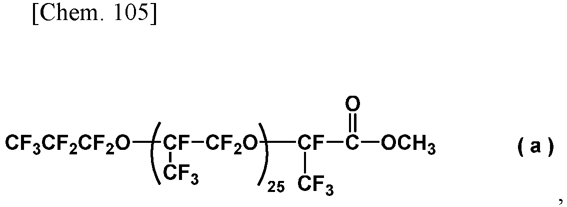

200 g of Asahiklin AC6000, and 100 g of PF5060 was added dropwise to the reactor, which was heated at 50°C for 6 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 96 g of a fluoropolyether-containing polymer represented by the following formula (b).

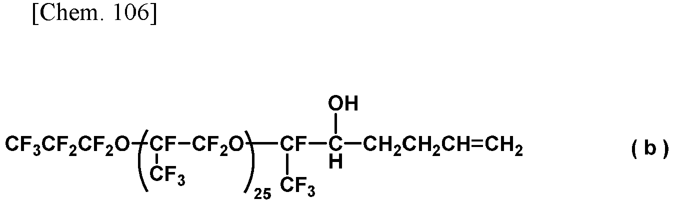

In a reactor, 20 g (4.4×10⁻³ mol) of the compound represented by the formula (b) obtained above, 2.2 g (1.8×10⁻² mol) of allyl bromide and 0.03 g (8.1×10⁻⁵ mol) of tetrabutylammonium iodide were mixed. Subsequently, 3.5 g (2.6×10⁻² mol) of 30 wt% sodium hydroxide aqueous solution was added. The solution was then heated at 50°C for 24 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 19 g of a fluoropolyether-containing polymer represented by the following formula (c).

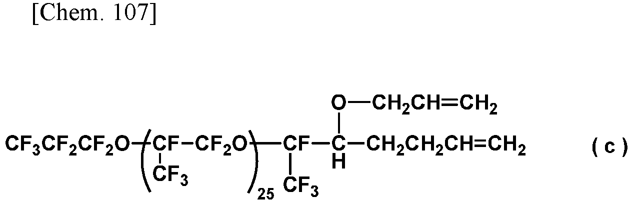

In a reactor, 10 g (2.2×10⁻³ mol) of the compound represented by the formula (c) obtained above, 15 g of 1,3-bis(trifluoromethyl)benzene, 6.6 g (2.2×10⁻² mol) of 2,4,6,8,10-pentamethylcyclopentasiloxane, and 1.0×10⁻² g of a toluene solution of platinum-1,3-divinyl-tetramethyldisiloxane complex (chloroplatinic acid/vinyl siloxane complex) (containing 3.0×10⁻⁸ mol of Pt) were mixed. The solution was aged at 80°C for 24 hours. Thereafter, the solvent and unreacted reactants were distilled off in vacuum, obtaining 11 g of a fluoropolyether-containing polymer represented by the following formula (d).

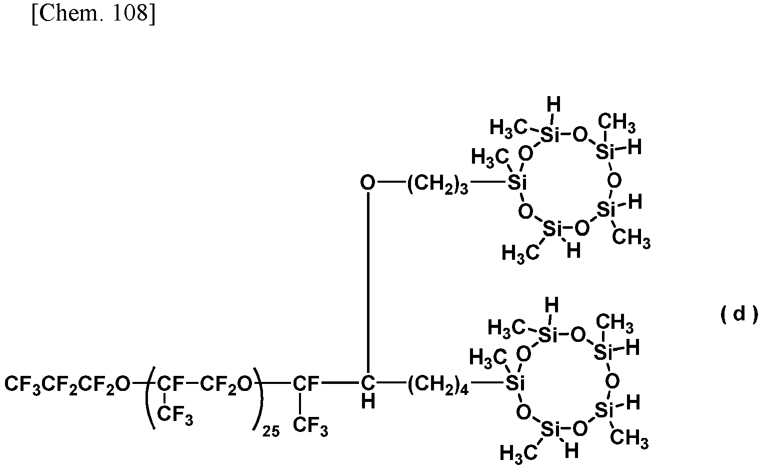

In a reactor, 10 g (1.9×10⁻³ mol) of the compound represented by the formula (d) obtained above, 15 g of 1,3-bis(trifluoromethyl)benzene, 4.6 g (2.0×10⁻² mol) of 7-octenyltrimethoxysilane, and 1.0×10⁻² g of a toluene solution of platinum-1,3-divinyl-tetramethyldisiloxane complex (chloroplatinic acid/vinyl siloxane complex) (containing 3.0×10⁻⁸ mol of Pt) were mixed. The solution was aged at 80°C for 24 hours. Thereafter, the solvent and unreacted reactants were distilled off in vacuum, obtaining 12 g of a fluoropolyether-containing polymer represented by the following formula (e).

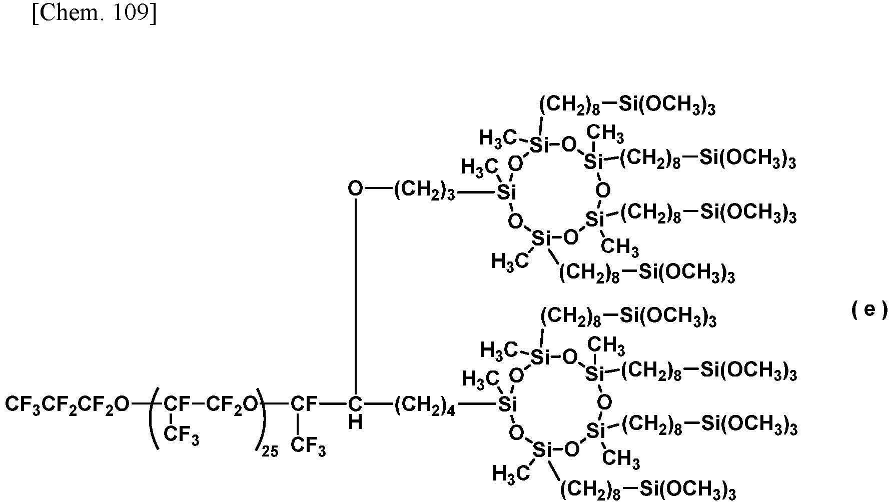

### [Synthesis Example 11]

A reactor was charged with 132 ml of a 0.5 M THF solution of 3-butenylmagnesium bromide (6.6×10⁻² mol). With stirring, a mixture of 100 g (2.2×10⁻² mol) of a compound represented by the following formula (f):

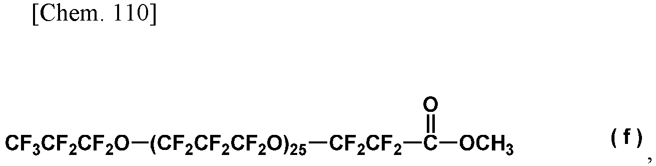

200 g of Asahiklin AC6000, and 100 g of PF5060 was added dropwise to the reactor, which was heated at 50°C for 6 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 96 g of a fluoropolyether-containing polymer represented by the following formula (g).

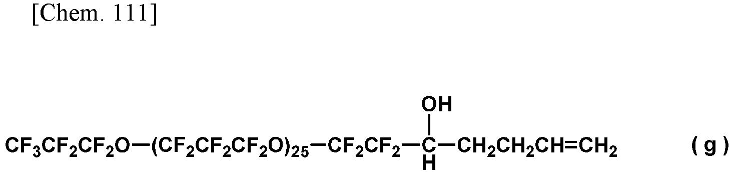

In a reactor, 20 g (4.4×10⁻³ mol) of the compound represented by the formula (g) obtained above, 2.2 g (1.8×10⁻² mol) of allyl bromide and 0.03 g (8.1×10⁻⁵ mol) of tetrabutylammonium iodide were mixed. Subsequently, 3.5 g (2.6×10⁻² mol) of 30 wt% sodium hydroxide aqueous solution was added. The solution was then heated at 50°C for 24 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 19 g of a fluoropolyether-containing polymer represented by the following formula (h).

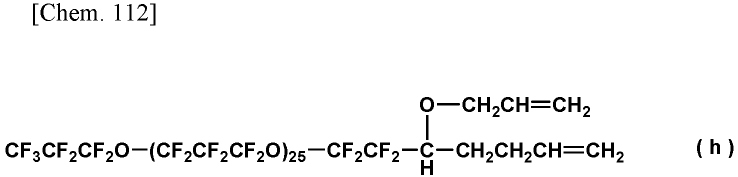

In a reactor, 10 g (2.2×10⁻³ mol) of the compound represented by the formula (h) obtained above, 15 g of 1,3-bis(trifluoromethyl)benzene, 6.6 g (2.2×10⁻² mol) of 2,4,6,8,10-pentamethylcyclopentasiloxane, and 1.0×10⁻² g of a toluene solution of platinum-1,3-divinyl-tetramethyldisiloxane complex (chloroplatinic acid/vinyl siloxane complex) (containing 3.0×10⁻⁸ mol of Pt) were mixed. The solution was aged at 80°C for 24 hours. Thereafter, the solvent and unreacted reactants were distilled off in vacuum, obtaining 12 g of a fluoropolyether-containing polymer represented by the following formula (i).

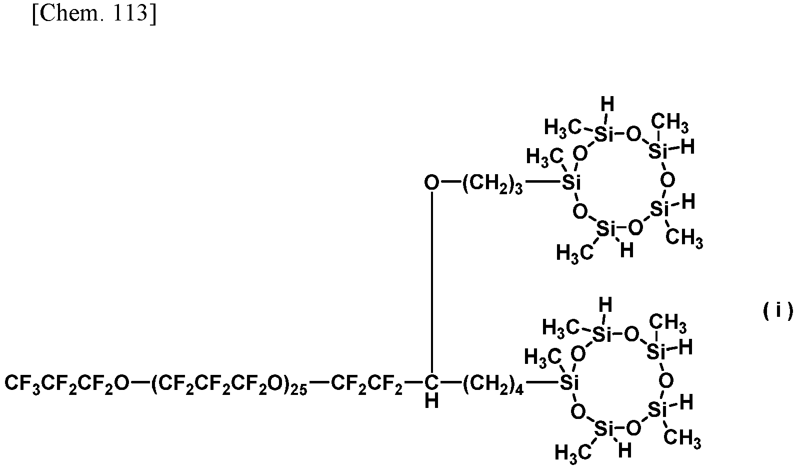

In a reactor, 10 g (1.9×10⁻³ mol) of the compound represented by the formula (i) obtained above, 15 g of 1,3-bis(trifluoromethyl)benzene, 4.6 g (2.0×10⁻² mol) of 7-octenyltrimethoxysilane, and 1.0×10⁻² g of a toluene solution of platinum-1,3-divinyl-tetramethyldisiloxane complex (chloroplatinic acid/vinyl siloxane complex) (containing 3.0×10⁻⁸ mol of Pt) were mixed. The solution was aged at 80°C for 24 hours. Thereafter, the solvent and unreacted reactants were distilled off in vacuum, obtaining 12 g of a fluoropolyether-containing polymer represented by the following formula (j).

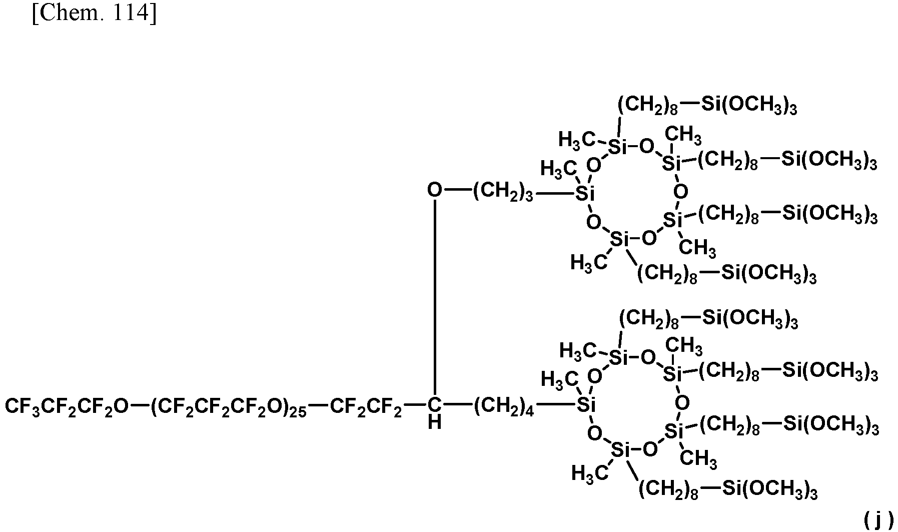

### [Synthesis Example 12]

A reactor was charged with 282 ml of a 0.5 M THF solution of 3-butenylmagnesium bromide (1.4×10⁻¹ mol). With stirring, a mixture of 100 g (2.4×10⁻² mol) of a compound represented by the following formula (k):

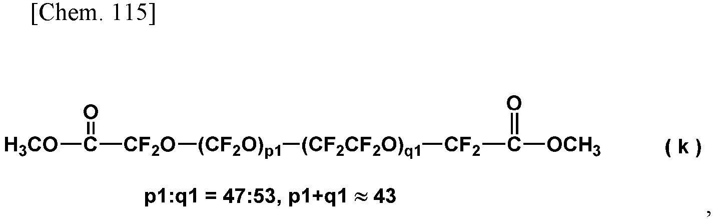

200 g of Asahiklin AC6000, and 100 g of PF5060 was added dropwise to the reactor, which was heated at 50°C for 6 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 94 g of a fluoropolyether-containing polymer represented by the following formula (l).

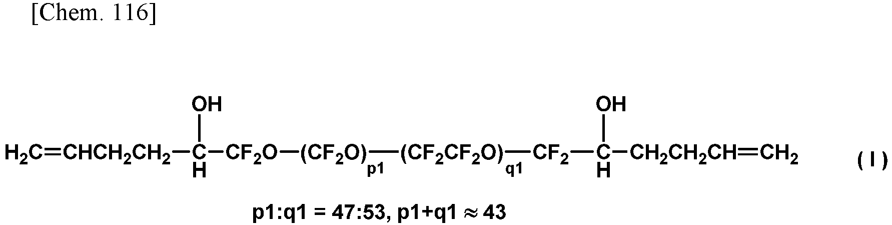

In a reactor, 20 g (4.7×10⁻³ mol) of the compound represented by the formula (l) obtained above, 4.6 g (3.8×10⁻² mol) of allyl bromide and 0.06 g (1.6×10⁻⁴ mol) of tetrabutylammonium iodide were mixed. Subsequently, 7.5 g (5.6×10⁻² mol) of 30 wt% sodium hydroxide aqueous solution was added. The solution was then heated at 50°C for 24 hours. At the end of heating, the solution was cooled to room temperature, and aqueous hydrochloric acid was added dropwise. The lower layer or fluoro compound layer was recovered by separatory operation and then washed with acetone. The lower layer or fluoro compound layer after washing was recovered again. The residual solvent was distilled off in vacuum, obtaining 21 g of a fluoropolyether-containing polymer represented by the following formula (m).

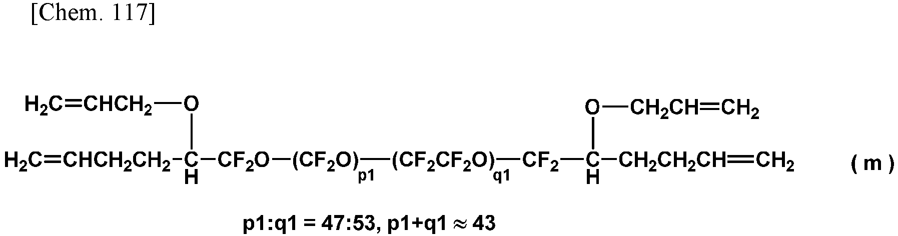

In a reactor, 20 g (4.6×10⁻³ mol) of the compound represented by the formula (m) obtained above, 30 g of 1,3-bis(trifluoromethyl)benzene, 22 g (9.1×10⁻² mol) of 2,4,6,8-tetramethylcyclotetrasiloxane, and 4.8×10⁻² g of a toluene solution of platinum-1,3-divinyl-tetramethyldisiloxane complex (chloroplatinic acid/vinyl siloxane complex) (containing 1.4×10⁻⁷ mol of Pt) were mixed. The solution was aged at 80°C for 24 hours. Thereafter, the solvent and unreacted reactants were distilled off in vacuum, obtaining 22 g of a fluoropolyether-containing polymer represented by the following formula (n).

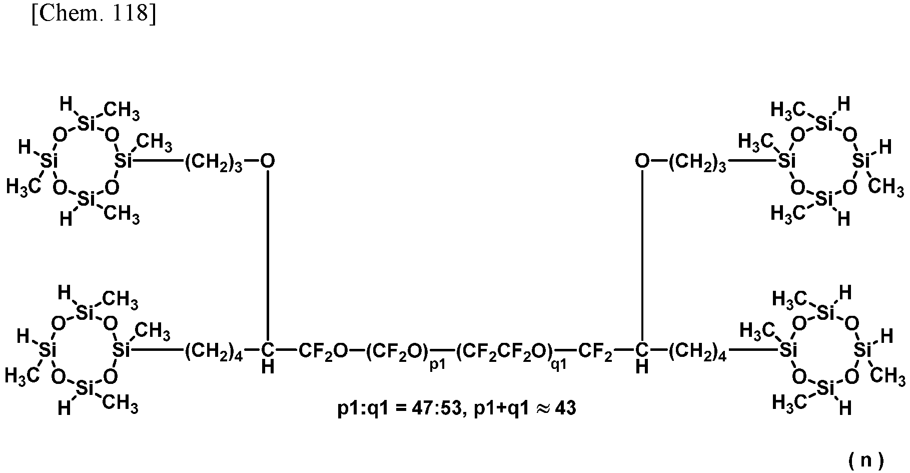

In a reactor, 20 g (3.8×10⁻³ mol) of the compound represented by the formula (n) obtained above, 30 g of 1,3-bis(trifluoromethyl)benzene, 14 g (6.0×10⁻² mol) of 7-octenyltrimethoxysilane, and 2.0×10⁻² g of a toluene solution of platinum-1,3-divinyl-tetramethyldisiloxane complex (chloroplatinic acid/vinyl siloxane complex) (containing 6.0×10⁻⁸ mol of Pt) were mixed. The solution was aged at 80°C for 24 hours. Thereafter, the solvent and unreacted reactants were distilled off in vacuum, obtaining 22 g of a fluoropolyether-containing polymer represented by the following formula (o).

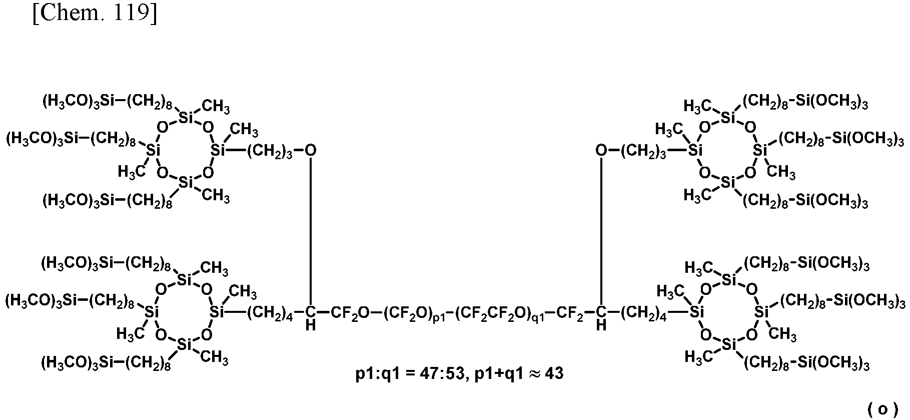

### [Synthesis Example 13]

In a reactor, 20 g (4.6×10⁻³ mol) of the compound represented by the following formula (m): 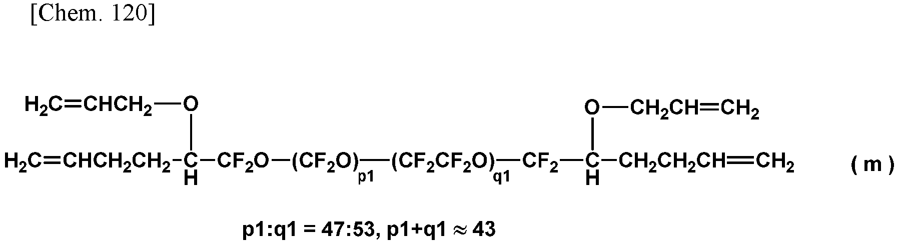 obtained in the same manner as in Synthesis Example 12, 30 g of 1,3-bis(trifluoromethyl)benzene, 28 g (9.3×10⁻² mol) of 2,4,6,8,10-pentamethylcyclopentasiloxane, and 4.8×10⁻² g of a toluene solution of platinum-1,3-divinyl-tetramethyldisiloxane complex (chloroplatinic acid/vinyl siloxane complex) (containing 1.4×10⁻⁷ mol of Pt) were mixed. The solution was aged at 80°C for 24 hours. Thereafter, the solvent and unreacted reactants were distilled off in vacuum, obtaining 22 g of a fluoropolyether-containing polymer represented by the following formula (p).

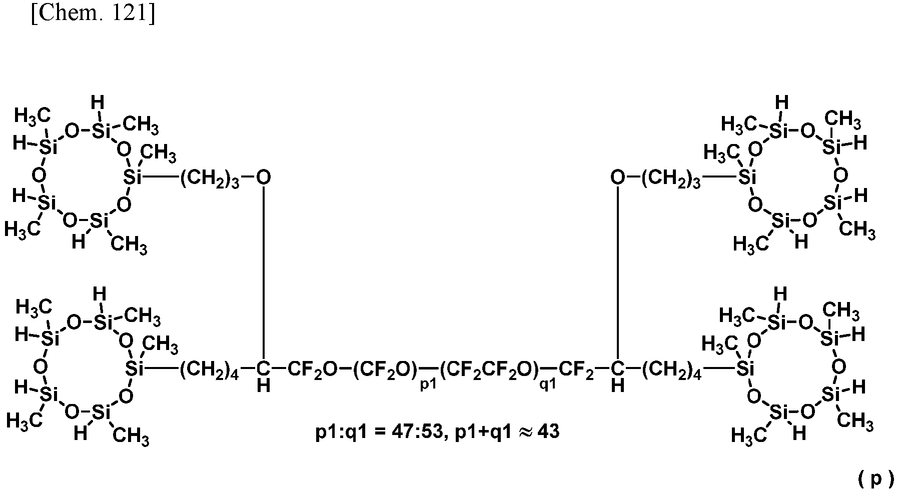

In a reactor, 20 g (3.6×10⁻³ mol) of the compound represented by the formula (p) obtained above, 30 g of 1,3-bis(trifluoromethyl)benzene, 18 g (7.7×10⁻² mol) of 7-octenyltrimethoxysilane, and 2.0×10⁻² g of a toluene solution of platinum-1,3-divinyl-tetramethyldisiloxane complex (chloroplatinic acid/vinyl siloxane complex) (containing 6.0×10⁻⁸ mol of Pt) were mixed. The solution was aged at 80°C for 24 hours. Thereafter, the solvent and unreacted reactants were distilled off in vacuum, obtaining 22 g of a fluoropolyether-containing polymer represented by the following formula (q).

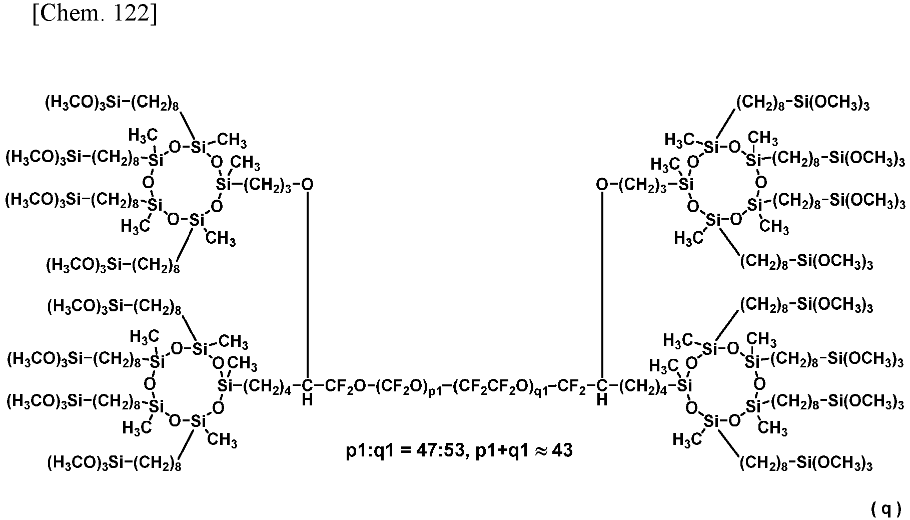

### Solubility in diluent solvent

### [Example 1]

The compounds prepared in Synthesis Examples 1 to 13 were diluted with isopropyl alcohol (IPA) so as to have a solid content concentration of 20 wt% to prepare surface treating agents, and the solubility was evaluated according to the following evaluation criteria. The evaluation results are shown in Tables 1 to 3.
○: As a result of visual observation of the appearance, it is transparent.
×: As a result of visual observation of the appearance, there is turbidity.

### [Example 2]

Evaluation was performed in the same manner as in Example 1, except that the diluent solvent was changed to propylene glycol monomethyl ether (PGM). The evaluation results are shown in Tables 4 to 6.

### [Example 3]

Evaluation was performed in the same manner as in Example 1, except that the diluent solvent was changed to propylene glycol monomethyl ether acetate (PGMEA). The evaluation results are shown in Tables 7 to 9.

### [Comparative Example 1]

Evaluation was performed in the same manner as in Example 1, except that the compounds to be diluted were changed to compounds represented by the following formulae (r) and (s). The evaluation results are shown in Table 10.
[Chem. 123]

**CF₃O-(CF₂O)ₚ₁-(CF₂CF₂O)_{q1}-CF₂CH₂-O-CH₂CH₂CH₂-Si(OCH₃)₃** **(r)**

**p1:q1 = 47:53, p1+q1 ≈ 43**

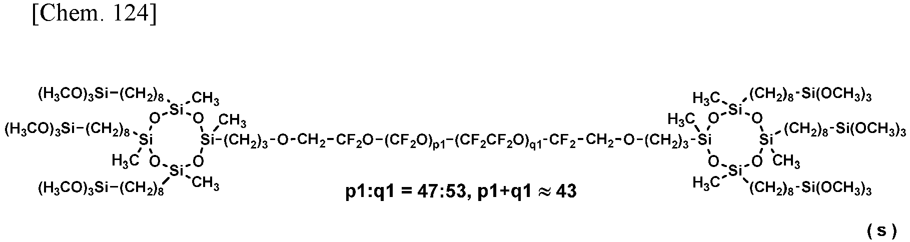

### [Comparative Example 2]

Evaluation was performed in the same manner as in Example 2, except that the compounds to be diluted were changed to the compounds represented by formulae (r) and (s). The evaluation results are shown in Table 11.

### [Comparative Example 3]

Evaluation was performed in the same manner as in Example 3, except that the compounds to be diluted were changed to the compounds represented by formulae (r) and (s). The evaluation results are shown in Table 12.

**[Table 1]**

| | Example 1-1 | Example 1-2 | Example 1-3 | Example 1-4 | Example 1-5 |
|---|---|---|---|---|---|
| Compound | (E) | (G) | (I) | (K) | (M) |
| Diluent solvent | IPA | IPA | IPA | IPA | IPA |
| Appearance | ○ | ○ | ○ | ○ | ○ |

**[Table 2]**

| | Example 1-6 | Example 1-7 | Example 1-8 | Example 1-9 | Example 1-10 |
|---|---|---|---|---|---|
| Compound | (N) | (P) | (U) | (Z) | (e) |
| Diluent solvent | IPA | IPA | IPA | IPA | IPA |
| Appearance | ○ | ○ | ○ | ○ | ○ |

**[Table 3]**

| | Example 1-11 | Example 1-12 | Example 1-13 |
|---|---|---|---|
| Compound | (j) | (o) | (q) |
| Diluent solvent | IPA | IPA | IPA |
| Appearance | ○ | ○ | ○ |

**[Table 4]**

| | Example 2-1 | Example 2-2 | Example 2-3 | Example 2-4 | Example 2-5 |
|---|---|---|---|---|---|
| Compound | (E) | (G) | (I) | (K) | (M) |
| Diluent solvent | PGM | PGM | PGM | PGM | PGM |
| Appearance | ○ | ○ | ○ | ○ | ○ |

**[Table 5]**

| | Example 2-6 | Example 2-7 | Example 2-8 | Example 2-9 | Example 2-10 |
|---|---|---|---|---|---|
| Compound | (N) | (P) | (U) | (Z) | (e) |
| Diluent solvent | PGM | PGM | PGM | PGM | PGM |
| Appearance | ○ | ○ | O | ○ | ○ |

**[Table 6]**

| | Example 2-11 | Example 2-12 | Example 2-13 |
|---|---|---|---|
| Compound | (j) | (o) | (q) |
| Diluent solvent | PGM | PGM | PGM |
| Appearance | ○ | ○ | ○ |

**[Table 7]**

| | Example 3-1 | Example 3-2 | Example 3-3 | Example 3-4 | Example 3-5 |
|---|---|---|---|---|---|
| Compound | (E) | (G) | (I) | (K) | (M) |
| Diluent solvent | PGMEA | PGMEA | PGMEA | PGMEA | PGMEA |
| Appearance | ○ | ○ | ○ | ○ | ○ |

**[Table 8]**

| | Example 3-6 | Example 3-7 | Example 3-8 | Example 3-9 | Example 3-10 |
|---|---|---|---|---|---|
| Compound | (N) | (P) | (U) | (Z) | (e) |
| Diluent solvent | PGMEA | PGMEA | PGMEA | PGMEA | PGMEA |
| Appearance | O | ○ | O | ○ | O |

**[Table 9]**

| | Example 3-11 | Example 3-12 | Example 3-13 |
|---|---|---|---|
| Compound | (j) | (o) | (q) |
| Diluent solvent | PGMEA | PGMEA | PGMEA |
| Appearance | ○ | ○ | ○ |

**[Table 10]**

| | Comparative Example 1-1 | Comparative Example 1-2 |
|---|---|---|
| Compound | (r) | (s) |
| Diluent solvent | IPA | IPA |
| Appearance | × | O |

**[Table 11]**

| | Comparative Example 2-1 | Comparative Example 2-2 |
|---|---|---|
| Compound | (r) | (s) |
| Diluent solvent | PGM | PGM |
| Appearance | × | ○ |

**[Table 12]**

| | Comparative Example 3-1 | Comparative Example 3-2 |
|---|---|---|
| Compound | (r) | (s) |
| Diluent solvent | PGMEA | PGMEA |
| Appearance | × | ○ |

The compounds of Examples 1-1 to 1-13, 2-1 to 2-13, and 3-1 to 3-13, and Comparative Examples 1-2, 2-2, and 3-2 were all dissolved in the organic solvent used. This is considered to be due to the fact that the carbon content in the molecule was increased because more hydrocarbon groups can be introduced in the molecule by having a polyvalent polysiloxane structure in the molecule.

On the other hand, all of the compounds of Comparative Examples 1-1, 2-1, and 3-1 having no polyvalent polysiloxane structure were not dissolved in the organic solvent used.

### Formation of cured film by spray coating

### [Example 4]

The compounds prepared in Synthesis Examples 1 to 13 were diluted with propylene glycol monomethyl ether (PGM) so as to have a solid content concentration of 0.1 wt% to prepare surface treating agents, and the surface of chemically strengthened glass (manufactured by Corning, Gorilla III) cleaned by plasma treatment was spray-coated using a spray coater (manufactured by T&K Co., Ltd., NST-51). Thereafter, the coating was cured for 12 hours in an atmosphere of 25°C and a relative humidity of 50% to form cured films having a film thickness of 10 nm, thereby obtaining test bodies.

### [Comparative Example 4]

A cured film (film thickness: about 10 nm) was formed in the same manner as in Example 4, except that the compound represented by formula (s) was diluted with propylene glycol monomethyl ether (PGM) so as to have a solid content concentration of 0.1 wt% to prepare a surface treating agent, thereby obtaining a test body.

### Evaluation of water/oil repellency

### [Evaluation of initial water/oil repellency]

Using a contact angle meter Drop Master (Kyowa Interface Science Co., Ltd.), the glass on which the cured film was formed prepared above was measured for a contact angle with water as an index of water repellency (droplet 2 µL, temperature 25°C, relative humidity 40%). The results (initial water contact angle) are shown in Table 13.

At the initial, all the films of Examples and Comparative Examples showed excellent water repellency.

**[Table 13]**

| | Compound | Initial water contact angle (°) |
|---|---|---|
| Example 4-1 | (E) | 117 |
| Example 4-2 | (G) | 115 |
| Example 4-3 | (I) | 117 |
| Example 4-4 | (K) | 117 |
| Example 4-5 | (M) | 114 |
| Example 4-6 | (N) | 117 |
| Example 4-7 | (P) | 116 |
| Example 4-8 | (U) | 113 |
| Example 4-9 | (Z) | 117 |
| Example 4-10 | (e) | 115 |
| Example 4-11 | (j) | 115 |
| Example 4-12 | (o) | 110 |
| Example 4-13 | (q) | 110 |
| Comparative Example 4 | (s) | 110 |

### [Evaluation of abrasion resistance]

Using a friction tester (Shinto Scientific Co., Ltd.), the test bodies of Examples 4-1 and 4-2 and Comparative Example 4 were rubbed 10,000 cycles under the conditions shown below. Thereafter, the cured films were similarly measured for a contact angle with water (water repellency) as evaluation of abrasion resistance. The test environmental conditions are temperature 25°C and relative humidity 40%. The results (contact angle with water after abrasion) are shown in Table 14.

### Steel wool abrasion resistance

| | |
|---|---|
| Steel wool: | BONSTER #0000 |
| Contact area: | 1 cm² |
| Moving distance (one way): | 40 mm |
| Moving speed: | 4,800 mm/min |
| Load: | 1 kgf/1 cm² |

**[Table 14]**

| | Compound | Initial water contact angle (°) | Contact angle with water after abrasion (°) |
|---|---|---|---|
| Example 4-1 | (E) | 117 | 111 |
| Example 4-2 | (G) | 115 | 110 |
| Comparative Example 4 | (s) | 110 | 85 |

The test bodies of Examples 4-1 and 4-2 maintained a water contact angle of 110° or more even after 10,000 cycles of steel wool abrasion. This is considered to be due to the fact that the number of hydroxyl groups and/or hydrolyzable silyl groups bonded to a silicon atom present at one end or both ends in the molecule is increased by interposing the polyvalent polysiloxane structure in the used compound, and thus adhesion to the substrate is improved, and molecular mobility is improved by introducing the polyvalent polysiloxane structure through a secondary carbon.

On the other hand, the test body of Comparative Example 4 did not exhibit durability with a water contact angle of less than 100° after 10,000 cycles of steel wool abrasion.

In addition, the present invention is expressed from different viewpoints as follows <1> to <6>.
<1> A surface treating agent comprising a fluoropolyether-containing polymer and/or a partial (hydrolytic) condensate thereof and an organic solvent wherein the fluoropolyether group has at least two monovalent groups having a hydroxyl group and/or a hydrolyzable silyl group bonded to a silicon atom via a polyvalent polysiloxane structure at one end or both ends, and the organic solvent is one or more organic solvents selected from the group consisting of fluorine-free organic solvents.
<2> The surface treating agent of <1> wherein the content of the fluoropolyether-containing polymer and/or its partial (hydrolytic) condensate is 0.005 to 80 wt%.
<3> The surface treating agent of <1> wherein the content of the fluoropolyether-containing polymer and/or its partial (hydrolytic) condensate is 0.005 to 80 wt%, and the balance is a fluorine-free organic solvent.
<4> The surface treating agent of <1> wherein the organic solvent is an alcohol-based organic solvent.
<5> The surface treating agent of <1> wherein the organic solvent is an ether-based organic solvent.
<6> An article having a surface treated with the surface treating agent of any one of <1> to <5>.

In the present invention, the balance of each characteristic may vary by changing the polymer or organic solvent used and the blending ratio thereof. In such a case, some characteristics become unstable or deteriorate, but the characteristics required vary depending on the applied application, and thus it is possible to put the present technology to practical use according to the application.

## Claims

1. A fluoropolyether-containing polymer having the following general formula (1):
Rf[Q-CH(V)₂]_{α} (1)
wherein Rf is a monovalent or divalent fluoropolyether-containing polymer residue, Q is a single bond or a divalent organic group, V is independently a monovalent group having a polyvalent polysiloxane structure and a hydroxyl group and/or a hydrolyzable silyl group bonded to a silicon atom at an end, and α is 1 or 2.

2. The fluoropolyether-containing polymer of claim 1 having the following general formula (2): 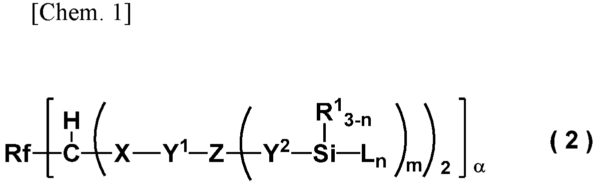 wherein Rf is a monovalent or divalent fluoropolyether-containing polymer residue, X is independently a single bond or a divalent heteroatom, Y¹ is independently a C₁-C₂₀ divalent hydrocarbon group which may contain one or more selected from an oxygen atom, a nitrogen atom, a silicon atom, and a sulfur atom, Z is independently a (m+1)-valent linking group having a polyvalent polysiloxane structure, Y² is independently a C₁-C₂₀ divalent hydrocarbon group which may contain one or more selected from an oxygen atom, a nitrogen atom, a silicon atom, and a sulfur atom, R¹ is independently a C₁-C₄ alkyl group or a phenyl group, L is independently a hydroxyl group or a hydrolyzable group, n is independently an integer of 1 to 3 for each silicon atom bonded, m is independently an integer of 2 to 9, and α is 1 or 2.

3. The fluoropolyether-containing polymer of claim 1 or 2 wherein α in the formula (1) or (2) is 1, and Rf is a monovalent fluoropolyether group having the following general formula (3): 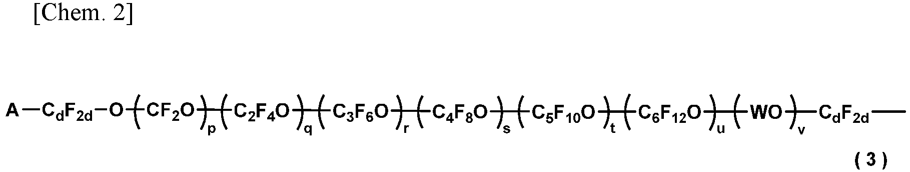 wherein A is a hydrogen atom, a fluorine atom, or an unsubstituted or fluorine-substituted C₁-C₂₀ monovalent hydrocarbon group, W is a C₁-C₆ fluoroalkylene group containing at least one hydrogen atom, d is independently an integer of 1 to 3 for each unit, p, q, r, s, t, u, and v each are an integer of 0 to 200, the sum of p, q, r, s, t, u, and v is 3 to 200, each of these units may be linear or branched, and individual repeat units shown in parentheses with p, q, r, s, t, u, and v may be randomly bonded.

4. The fluoropolyether-containing polymer of claim 1 or 2 wherein α in the formula (1) or (2) is 2, and Rf is a divalent fluoropolyether group having the following general formula (4): 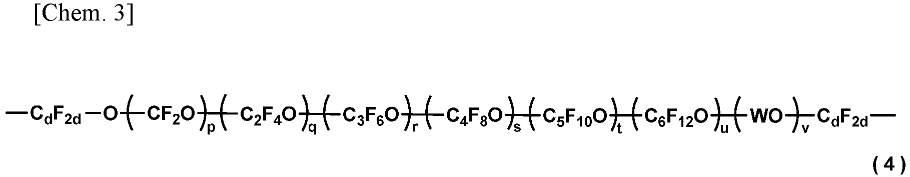 wherein W is a C₁-C₆ fluoroalkylene group containing at least one hydrogen atom, d is independently an integer of 1 to 3 for each unit, p, q, r, s, t, u, and v each are an integer of 0 to 200, the sum of p, q, r, s, t, u, and v is 3 to 200, each of these units may be linear or branched, and individual repeat units shown in parentheses with p, q, r, s, t, u, and v may be randomly bonded.

5. The fluoropolyether-containing polymer of claim 2 wherein in the formula (2), two X's are present at one end of the molecular chain when α = 1, and two X's are present at each of both ends of the molecular chain (four X's in the molecule) when α = 2; one X is an oxygen atom, and the other X is a single bond at each end.

6. The fluoropolyether-containing polymer of claim 2 wherein in the formula (2), Y¹ is independently a C₂-C₁₀ alkylene group, or a C₂-C₁₀ alkylene group containing a C₆-C₈ arylene group.

7. The fluoropolyether-containing polymer of claim 2 wherein in the formula (2), Z is a linear, branched or cyclic tri to deca-valent organopolysiloxane residue of 3 to 10 silicon atoms.

8. The fluoropolyether-containing polymer of claim 2 wherein in the formula (2), Z has any one of the following formulae: 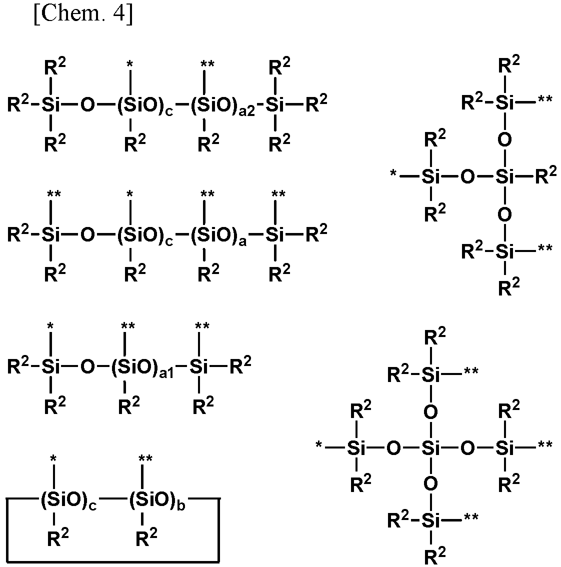 wherein * is a bond bonded to Y¹ in the general formula (2), ** is a bond bonded to Y² in the general formula (2), R² is independently a C₁-C₂₀ monovalent hydrocarbon group, a is an integer of 0 to 6, a1 is an integer of 1 to 6, a2 is an integer of 2 to 7, b is an integer of 2 to 9, c is 1, and individual repeat units shown in parentheses with a, a2, and c may be randomly bonded.

9. The fluoropolyether-containing polymer of claim 2 wherein in the formula (2), Y² is independently a C₂-C₁₀ alkylene group, or a C₂-C₁₀ alkylene group containing a C₆-C₈ arylene group.

10. The fluoropolyether-containing polymer of claim 2 wherein in formula (2), L is independently a group selected from the group consisting of a hydroxyl group, a C₁-C₁₀ alkoxy group, a C₂-C₁₀ alkoxyalkoxy group, a C₁-C₁₀ acyloxy group, a C₂-C₁₀ alkenyloxy group, and a halogen group.

11. The fluoropolyether-containing polymer of claim 2 wherein the polymer having formula (2) is a polymer having the following general formula (5) or (6): 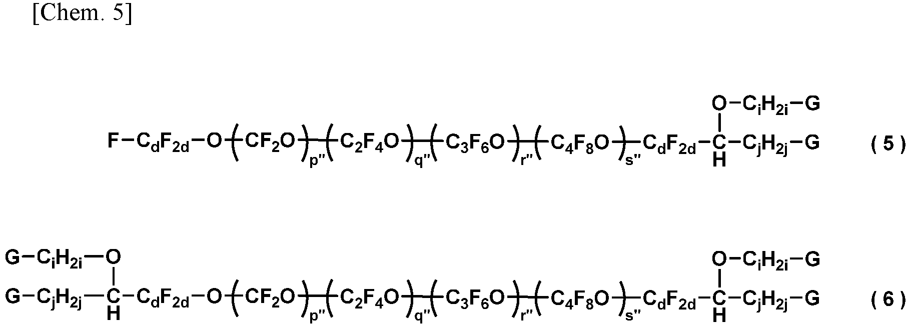 wherein d is independently an integer of 1 to 3 for each unit, p", q", r", and s" are each an integer of 0 to 200, the sum of p", q", r", and s" in each formula is 3 to 200, individual repeat units shown in parentheses with p", q", r", and s" may be randomly bonded, i and j are each independently an integer of 2 to 10 for each unit, each of these units may be linear or branched, and G independently has any one of the following formulae: 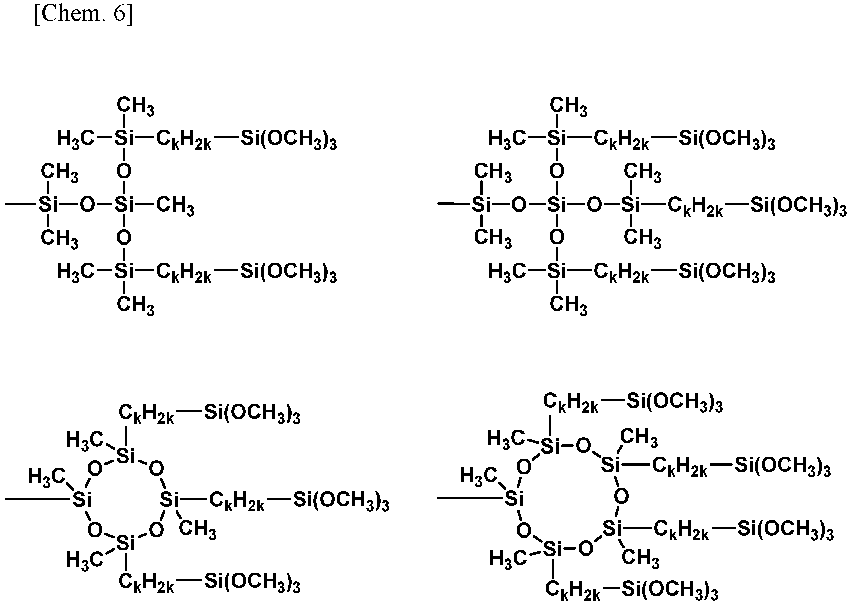 wherein k is independently an integer of 2 to 8 for each unit.

12. A surface treating agent comprising the fluoropolyether-containing polymer of claim 1 or 2 and/or its partial (hydrolytic) condensate.

13. The surface treating agent of claim 12, further comprising a fluorine-free organic solvent.

14. The surface treating agent of claim 12 wherein the content of the fluoropolyether-containing polymer and/or its partial (hydrolytic) condensate is 0.005 to 80 wt%.

15. The surface treating agent of claim 12 wherein the content of the fluoropolyether-containing polymer and/or its partial (hydrolytic) condensate is 0.005 to 80 wt%, and the balance is a fluorine-free organic solvent.

16. An article having a surface treated with the surface treating agent of claim 12.
